(19) Europäisches Patentamt
European Patent Office
Office européen des brevets

(11) EP 3 791 437 B1

(12) **EUROPÄISCHE PATENTSCHRIFT**

(45) Veröffentlichungstag und Bekanntmachung des Hinweises auf die Patenterteilung:
**13.10.2021 Patentblatt 2021/41**

(21) Anmeldenummer: **20746661.6**

(22) Anmeldetag: **30.07.2020**

(51) Int Cl.:
***H01M 10/0563*** (2010.01) ***H01M 10/0568*** (2010.01)
***H01M 10/0525*** (2010.01) ***H01M 4/525*** (2010.01)
*H01M 4/505* (2010.01) *H01M 4/587* (2010.01)
*H01M 4/62* (2006.01) *H01M 4/74* (2006.01)
*H01M 4/80* (2006.01) *H01M 10/054* (2010.01)
*H01M 10/0567* (2010.01)

(86) Internationale Anmeldenummer:
**PCT/EP2020/071565**

(87) Internationale Veröffentlichungsnummer:
**WO 2021/019042 (04.02.2021 Gazette 2021/05)**

(54) **WIEDERAUFLADBARE BATTERIEZELLE**

RECHARGEABLE BATTERY CELL

CELLULE DE BATTERIE RECHARGEABLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **31.07.2019 EP 19189435**

(43) Veröffentlichungstag der Anmeldung:
**17.03.2021 Patentblatt 2021/11**

(73) Patentinhaber: **Innolith Technology AG**
**4052 Basel (CH)**

(72) Erfinder:
- **ZINCK, Laurent**
  **67470 Mothern (FR)**
- **PSZOLLA, Christian**
  **76669 Bad Schönborn (DE)**
- **BORCK, Markus**
  **70567 Stuttgart (DE)**

(74) Vertreter: **Lemcke, Brommer & Partner**
**Patentanwälte Partnerschaft mbB**
**Siegfried-Kühn-Straße 4**
**76135 Karlsruhe (DE)**

(56) Entgegenhaltungen:
**WO-A1-00/79631** **JP-A- 2001 143 750**
**JP-B2- 4 306 858**

- **C. W. PARK OH ET AL: "Performances of Li/LixCoO2 cells in LiAlCl4 . 3SO2 electrolyte", JOURNAL OF POWER SOURCES, Bd. 68, Nr. 2, 1. Oktober 1997 (1997-10-01), Seiten 338-343, XP005496930, ISSN: 0378-7753, DOI: 10.1016/S0378-7753(97)02518-4**
- **J. DREHER ET AL: "Rechargeable LiCoO2 in inorganic electrolyte solution", JOURNAL OF POWER SOURCES, Bd. 44, Nr. 1/03, 15. April 1993 (1993-04-15), Seiten 583-587, XP000412947, ISSN: 0378-7753, DOI: 10.1016/0378-7753(93)80206-5**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft eine wiederaufladbare Batteriezelle mit einem auf $SO_2$-basierenden Elektrolyt.

Wiederaufladbare Batteriezellen sind auf vielen technischen Gebieten von großer Bedeutung. Vielfach werden sie für Anwendungen eingesetzt, bei denen nur kleine wiederaufladbare Batteriezellen mit relativ geringen Stromstärken benötigt werden, wie beispielsweise beim Betrieb von Mobiltelefonen. Daneben gibt es aber auch einen großen Bedarf an größeren wiederaufladbaren Batteriezellen für Hochenergieanwendungen, wobei eine Massenspeicherung von Energie in Form von Batteriezellen für den elektrischen Antrieb von Fahrzeugen von besonderer Bedeutung ist.

Eine wichtige Anforderung bei derartigen wiederaufladbaren Batteriezellen ist eine hohe Energiedichte. Das bedeutet, dass die wiederaufladbare Batteriezelle möglichst viel elektrische Energie je Gewichts- und Volumeneinheit enthalten soll. Hierfür hat sich Lithium als aktives Metall als besonders vorteilhaft erwiesen. Als aktives Metall einer wiederaufladbaren Batteriezelle bezeichnet man das Metall, dessen Ionen innerhalb des Elektrolyten beim Laden oder Entladen der Zelle zur negativen oder positiven Elektrode wandern und dort an elektrochemischen Prozessen teilnehmen. Diese elektrochemischen Prozesse führen direkt oder indirekt zur Abgabe von Elektronen in den externen Stromkreis oder zur Aufnahme von Elektronen aus dem externen Stromkreis. Wiederaufladbare Batteriezellen, welche Lithium als aktives Metall enthalten, werden auch als Lithium-Ionen-Zellen bezeichnet. Die Energiedichte dieser Lithium-Ionen-Zellen kann entweder durch Steigerung der spezifischen Kapazität der Elektroden oder durch Steigerung der Zellspannung erhöht werden.

Sowohl die positive als auch die negative Elektrode von Lithium-Ionen-Zellen sind als Insertionselektroden ausgebildet. Unter dem Begriff "Insertionselektrode" im Sinne der vorliegenden Erfindung werden Elektroden verstanden, welche eine Kristallstruktur besitzen, in die Ionen des aktiven Materials beim Betrieb der Lithium-Ionen-Zelle ein- und ausgelagert werden können. Das bedeutet, dass sich die Elektrodenprozesse nicht nur an der Oberfläche der Elektroden, sondern auch innerhalb der Kristallstruktur abspielen können. Beide Elektroden weisen eine Dicke von in der Regel weniger als 100 $\mu$m auf und sind daher sehr dünn ausgebildet. Beim Laden der Lithium-Ionen-Zelle werden die Ionen des aktiven Metalls aus der positiven Elektrode ausgelagert und in die negative Elektrode eingelagert. Beim Entladen der Lithium-Ionen-Zelle läuft der umgekehrte Prozess ab.

Auch der Elektrolyt ist ein wichtiges Funktionselement jeder wiederaufladbaren Batteriezelle. Er enthält meistens ein Lösungsmittel oder Lösungsmittelgemisch und mindestens ein Leitsalz. Feststoffelektrolyte oder ionische Flüssigkeiten enthalten zum Beispiel kein Lösungsmittel, sondern nur ein Leitsalz. Der Elektrolyt steht mit der positiven und der negativen Elektrode der Batteriezelle in Kontakt. Mindestens ein Ion des Leitsalzes (Anion oder Kation) ist in dem Elektrolyten derartig beweglich, dass durch Ionenleitung ein für die Funktion der wiederaufladbaren Batteriezelle erforderlicher Ladungstransport zwischen den Elektroden stattfinden kann. Der Elektrolyt wird ab einer bestimmten oberen Zellspannung der wiederaufladbaren Batteriezelle oxidativ elektrochemisch zersetzt. Dieser Vorgang führt oft zu einer irreversiblen Zerstörung von Bestandteilen des Elektrolyten und damit zu einem Ausfall der wiederaufladbaren Batteriezelle. Auch reduktive Prozesse können den Elektrolyten ab einer bestimmten unteren Zellspannung zersetzen. Um diese Prozesse zu vermeiden, werden die positive und die negative Elektrode derart gewählt, dass die Zellspannung unter- bzw. oberhalb der Zersetzungsspannung des Elektrolyten liegt. Der Elektrolyt bestimmt somit das Spannungsfenster (in Engl.: voltage window), in dessen Bereich eine wiederaufladbare Batteriezelle reversibel betrieben, das heißt (d.h.) wiederholt aufgeladen und entladen werden kann.

Die aus dem Stand der Technik bekannten Lithium-Ionen-Zellen enthalten einen Elektrolyten, der aus einem in einem organischen Lösungsmittel oder Lösungsmittelgemisch und einem darin gelösten Leitsalz besteht. Bei dem Leitsalz handelt es sich um ein Lithiumsalz wie beispielsweise Lithiumhexafluorophosphat ($LiPF_6$). Das Lösungsmittelgemisch kann beispielsweise Ethylencarbonat enthalten. Der Elektrolyt LP57, der die Zusammensetzung 1 M $LiPF_6$ in EC:EMC 3:7 aufweist, ist ein Beispiel für einen solchen Elektrolyten. Aufgrund des organischen Lösungsmittels oder Lösungsmittelgemischs werden derartige Lithium-Ionen-Zellen auch als organische Lithium-Ionen-Zellen bezeichnet. Neben dem im Stand der Technik häufig verwendeten Lithiumhexafluorophosphat ($LiPF_6$) als Leitsalz werden auch andere Leitsalze für organische Lithium-Ionen-Zellen beschrieben. So beschreibt zum Beispiel das Dokument JP 4 306858 B2 (im Nachfolgenden bezeichnet als [V1]) Leitsalze, die Tetraalkoxy- oder Tetraaryloxyboratsalze sind, die fluoriert oder teilfluoriert sein können. Aus der JP 2001 143750 A (im Nachfolgenden bezeichnet als [V2]) gehen fluorierte oder teilfluorierte Tetraalkoxyboratsalze und Tetraalkoxyaluminatsalze als Leitsalze hervor. In diesen Dokumenten [V1] und [V2] werden die beschriebenen Leitsalze in organischen Lösungsmitteln oder Lösungsmittelgemischen gelöst und in organischen Lithium-Ionen-Zellen eingesetzt. Die negative Elektrode vieler organischer Lithium-Ionen-Zellen besteht aus einer Kohlenstoffbeschichtung, welche auf ein Ableitelement aus Kupfer aufgetragen ist. Das Ableitelement stellt den erforderlichen elektronisch leitenden Anschluss zwischen der Kohlenstoffbeschichtung und dem externen Stromkreis her. Die positive Elektrode besteht aus Lithiumkobaltoxid ($LiCoO_2$), welches auf ein Ableitelement aus Aluminium aufgetragen ist.

Es ist seit langem bekannt, dass das ungewollte Überladen von organischen Lithium-Ionen-Zellen zu einer irreversiblen Zersetzung von Elektrolytkomponenten führt. Dabei findet die oxidative Zersetzung des organischen Lösungsmittels und/oder des Leitsalzes an der Oberfläche der positiven Elektrode statt. Die während dieser Zersetzung gebildete Reaktionswärme und die dabei entstehenden gasförmigen Produkte sind für den darauffolgenden, sogenannten "Thermal Runaway" (englisch für "thermisches Durchgehen") und die dadurch resultierende Zerstörung der organischen Lithium-Ionen-Zelle verantwortlich. Die überwiegende Mehrheit an Ladeprotokollen für diese organischen Lithium-Ionen-Zellen zieht die Zellspannung als Indikator für das Ladeende heran. Hierbei sind Unfälle durch den Thermal Runaway besonders wahrscheinlich bei der Verwendung von Multizellen-Batteriepacks, in denen mehrere organische Lithium-Ionen-Zellen mit nicht übereinstimmenden Kapazitäten in Reihe geschaltet werden.

Deshalb sind organische Lithium-Ionen-Zellen problematisch hinsichtlich ihrer Stabilität sowie langfristigen Betriebssicherheit. Sicherheitsrisiken werden insbesondere auch durch die Brennbarkeit des organischen Lösungsmittels oder Lösungsmittelgemischs verursacht. Wenn eine organische Lithium-Ionen-Zelle Feuer fängt oder sogar explodiert, bildet das organische Lösungsmittel des Elektrolyten ein brennbares Material. Um solche Sicherheitsrisiken zu vermeiden, müssen zusätzliche Maßnahmen getroffen werden. Zu diesen Maßnahmen zählen insbesondere eine sehr exakte Regelung der Lade- und Entladevorgänge der organischen Lithium-Ionen-Zelle sowie eine optimierte Batteriekonstruktion. Weiterhin enthält die organische Lithium-Ionen-Zelle Komponenten, die bei ungewollter Temperaturerhöhung schmelzen und hierbei die organische Lithium-Ionen-Zelle mit geschmolzenem Kunststoff fluten können. Dadurch wird eine weitere unkontrollierte Temperaturerhöhung vermieden. Diese Maßnahmen führen jedoch zu erhöhten Produktionskosten bei der Herstellung der organischen Lithium-Ionen-Zelle sowie zu einem erhöhten Volumen und Gewicht. Weiterhin vermindern diese Maßnahmen die Energiedichte der organischen Lithium-Ionen-Zelle. Ein weiterer Nachteil von organischen Lithium-Ionen-Zellen besteht darin, dass etwaige in Anwesenheit von Restmengen an Wasser entstehende Hydrolyseprodukte gegenüber den Zellkomponenten der wiederaufladbaren Batteriezelle sehr aggressiv sind. So entsteht beispielsweise bei dem häufig in organischen Zellen verwendeten Leitsalz $LiPF_6$ durch Reaktion mit Wasserspuren sehr reaktiver, aggressiver Fluorwasserstoff (HF). Aufgrund dessen muss bei der Herstellung derartiger wiederaufladbarer Batteriezellen mit einem organischen Elektrolyten auf eine Minimierung des im Elektrolyten und den Zellkomponenten enthaltenen Restwassergehalts geachtet werden. Die Produktion findet deshalb oft in kostenintensiven Trockenräumen mit extrem niedriger Luftfeuchtigkeit statt. Die zuvor beschriebenen Probleme im Hinblick auf die Stabilität und die langfristige Betriebssicherheit sind besonders schwerwiegend bei der Entwicklung von organischen Lithium-Ionen-Zellen, die zum einen sehr gute elektrische Energie- und Leistungsdaten und zum anderen eine sehr hohe Betriebssicherheit und Lebensdauer, insbesondere eine hohe Zahl nutzbarer Lade- und Entladezyklen aufweisen.

Um die Energiedichte von organischen Lithium-Ionen-Zellen zu erhöhen, wurden im Stand der Technik neue Kathodenmaterialien, d.h. neue Materialien von positiven Elektroden getestet, die mit einer höheren Ladeschlussspannung, d.h. einem höheren oberen Potential gezykelt werden können. Solche Materialien sind z.B. Lithiumnickelmangancobaltoxide, die abgekürzt auch als NMC bezeichnet werden. Die folgende Veröffentlichung berichtet darüber:

*"Oxygen Release and Its Effect on the Cycling Stability of $LiNi_xMn_yCo_zO_2$ (NMC) Cathode Materials for Li-Ion Batteries"*
Roland Jung; Michael Metzger; Filippo Maglia; Christoph Stinner and Hubert A. Gasteigera. Journal of The Electrochemical Society, 164 (7) A1361-A1377 (2017*)*

Diese Veröffentlichung von Jung et al. ist im nachfolgenden als [V3] bezeichnet. Jung et al. haben in der [V3] verschiedene NMC-Materialien mit der Zusammensetzung NMC(xyz) getestet. Die Kleinbuchstaben (xyz) in der Klammer geben die Indizes x, y und z der Verbindung $LiNi_xMn_yCo_zO_2$ an. In der [V3] wurden drei verschiedene NMC-Kathodenmaterialien in einer organischen Lithium-Ionen-Zelle mit dem zuvor beschriebenen LP57 Elektrolyt (1 M LiPF6 in EC:EMC 3:7) mit verschiedenen Ladeschlussspannungen gezykelt. Bei der Ladeschlussspannung handelt es um die Spannung, bis zu welcher eine einzelne Batteriezelle oder Batterie aus mehreren Batteriezelle mit Hilfe einer Batterieladevorrichtung geladen wird. Oft werden die Batterien mit einer bestimmten Ladestromstärke bis zu einem bestimmten oberen Potential, das heißt bis zu der Ladeschlussspannung geladen. Das entsprechende obere Potential wird so lange gehalten, bis der Ladestrom auf einen bestimmten Wert abgesunken ist. In der [V3] wurden jeweils 300 Lade-/ Entladezyklen durchgeführt. In der unten dargestellten Tabelle 1 ist jeweils die Reduzierung der Entladekapazität vom 5. Zyklus im Vergleich mit dem 300. Zyklus in % angegeben.

Tabelle 1: Entladekapazitäten bei steigenden Ladeschlussspannungen aus der [V3] von Jung et al.

| | 4.0 V | 4.2 V | 4.4 V | 4.6 V |
|---|---|---|---|---|
| Material | Entladekapazität [%] | Entladekapazität [%] | Entladekapazität [%] | Entladekapazität [%] |
| NMC(111) | - | 93% | 94% | 42% |
| NMC(622) | - | 95% | 94% | 39% |

(fortgesetzt)

| | 4.0 V | 4.2 V | 4.4 V | 4.6 V |
|---|---|---|---|---|
| Material | Entladekapazität [%] | Entladekapazität [%] | Entladekapazität [%] | Entladekapazität [%] |
| NMC(811) | 90% | 77% | 66% | - |

Aus dieser Tabelle 1 geht hervor, dass es bei den Materialien NMC(111) und NMC(622) zu einem drastischen Kapazitätsrückgang beim Zyklen mit einer Ladeschlussspannung von 4,6 Volt kommt, denn es werden nur noch 42% bzw. 39% der ursprünglichen Kapazität erreicht. Das Material NMC(811) wurde nur bis 4,4 Volt gezykelt, wobei ebenfalls eine stetige Abnahme der Kapazität bei Erhöhung der Ladeschlussspannung beobachtet wurde. Anhand der [V3] lässt sich daher feststellen, dass organische Lithium-Ionen-Zellen mit den NMC-Kathodenmaterialien zwar bei einem höheren oberen Potenzial gezykelt werden können. Der Nachteil besteht allerdings darin, dass es dabei zu einer unerwünscht hohen Kapazitätsabnahme kommt.

Eine aus dem Stand der Technik bekannte Weiterentwicklung sieht die Verwendung eines Elektrolyten auf Schwefeldioxid ($SO_2$)-Basis anstatt eines organischen Elektrolyten für wiederaufladbare Batteriezellen vor. Wiederaufladbare Batteriezellen, welche einen auf $SO_2$-basierenden Elektrolyten enthalten, weisen unter anderem eine hohe ionische Leitfähigkeit auf. Unter dem Begriff "auf $SO_2$-basierender Elektrolyt" ist im Sinne der vorliegenden Erfindung ein Elektrolyt zu verstehen, der $SO_2$ nicht nur als Zusatz in geringer Konzentration enthält, sondern bei dem die Beweglichkeit der Ionen des Leitsalzes, das in dem Elektrolyten enthalten ist und den Ladungstransport bewirkt, zumindest teilweise, größtenteils oder sogar vollständig durch $SO_2$ gewährleistet ist. Das $SO_2$ dient also als Lösungsmittel für das Leitsalz. Das Leitsalz kann mit dem gasförmigen $SO_2$ einen flüssigen Solvatkomplex bilden, wobei das $SO_2$ gebunden und der Dampfdruck gegenüber dem reinen $SO_2$ merklich gesenkt wird. Es entstehen Elektrolyte mit niederem Dampfdruck. Derartige Elektrolyten auf $SO_2$-Basis haben im Vergleich zu den zuvor beschriebenen organischen Elektrolyten den Vorteil der Nichtbrennbarkeit. Sicherheitsrisiken, welche durch die Brennbarkeit des Elektrolyten bestehen, können dadurch ausgeschlossen werden. Beispielsweise beschreiben Dreher et al. inJOURNAL OF POWER SOURCES, Bd. 44, Nr. 1/03, 15. April 1993 (1993-04-15), Seiten 583-587, XP000412947
(im Nachfolgenden bezeichnet als [V4]) einen auf $SO_2$-basierenden Elektrolyten mit der Zusammensetzung $LiAlCl_4$ * $SO_2$ in Kombination mit einer positiven Elektrode aus $LiCoO_2$. In [V4] wurden die Interkalation und Deinterkalation von Lithiumionen beim Laden und Entladen der positiven Elektrode aus $UCoO_2$ untersucht. Die Autoren Oh et al. des Artikels aus demJOURNAL OF POWER SOURCES, Bd. 68, Nr. 2, 1. Oktober 1997 (1997-10-01), Seiten 338-343, XP005496930 (im Nachfolgenden bezeichnet als [V5]) berichten über eine wiederaufladbare $Li/Li_xCoO_2$ Zelle mit einem $LiAlCl_4$ • $3SO_2$ Elektrolyt. Die in [V5] beschriebene Degradation der positiven Elektrode mit $UCoO_2$ ist bedingt durch die Chlor-Bildung bei höheren Potentialen. Die Autoren schlagen als Lösung vor, die Zelle bei niederen Temperaturen zu betreiben. Auch aus der EP 1 201 004 B1 geht ein auf $SO_2$-basierender Elektrolyt mit der Zusammensetzung LiAlCl4 * $SO_2$ in Kombination mit einer positiven Elektrode aus $UCoO_2$ hervor (im Nachfolgenden bezeichnet als [V6]). Zur Vermeidung von störenden Zersetzungsreaktionen bei der Überladung der wiederaufladbaren Batteriezelle ab einem oberen Potential von 4,1 bis 4,2 Volt, wie beispielsweise die unerwünschte Bildung von Chlor (Cl2) aus Lithiumtetrachloroaluminat ($LiAlCl_4$), schlägt die [V6] die Verwendung eines zusätzlichen Salzes vor.

Auch die EP 2534719 B1 (im Nachfolgenden bezeichnet als [V7]) offenbart einen auf $SO_2$-basierenden Elektrolyten mit unter anderem $LiAlCl_4$ als Leitsalz. Dieses $LiAlCl_4$ bildet mit dem $SO_2$ beispielsweise Komplexe der Formel LiAlCl4* 1,5 mol $SO_2$ oder $LiAlCl_4$* 6 mol $SO_2$. Als positive Elektrode wird in der [V7] Lithiumeisenphosphat ($LiFePO_4$) verwendet. $LiFePO_4$ hat eine geringere Ladeschlussspannung (3,7 V) im Vergleich zu $LiCoO_2$ (4,2 V). Die Problematik der unerwünschten Überladereaktionen tritt in dieser wiederaufladbaren Batteriezelle nicht auf, da für den Elektrolyten schädliche obere Potentiale von 4,1 Volt nicht erreicht werden. Ein Nachteil, der unter anderem auch bei diesen auf $SO_2$-basierenden Elektrolyten auftritt, besteht darin, dass etwaige in Anwesenheit von Restmengen an Wasser entstehende Hydrolyseprodukte mit den Zellkomponenten der wiederaufladbaren Batteriezelle reagieren und dadurch zur Bildung von unerwünschten Nebenprodukten führen. Aufgrund dessen muss bei der Herstellung derartiger wiederaufladbare Batteriezellen mit einem auf $SO_2$-basierendenElektrolyten auf eine Minimierung des im Elektrolyten und den Zellkomponenten enthaltenen Restwassergehalts geachtet werden.

Ein weiteres Problem bei den auf $SO_2$-basierenden Elektrolyten besteht darin, dass viele, insbesondere auch für organische Lithium-Ionen-Zellen bekannte Leitsalze nicht in $SO_2$ löslich sind. Messungen ergaben, dass $SO_2$ ein schlechtes Lösungsmittel für viele Leitsalze ist, wie z.B. Lithiumfluorid (LiF), Lithiumbromid (LiBr), Lithiumsulfat ($Li_2SO_4$), Lithium-bis(oxalato)borat (LiBOB), Lithiumhexafluoroarsenat ($LiAsF_6$), Lithiumtetrafluorborat ($LiBF_4$), Trilithiumhexafluoroaluminat ($Li_3AlF_6$,), Lithiumhexafluoroantimonat ($LiSbF_6$), Lithium Difluoro(oxalato)borat ($LiBF_2C_2O_4$), Lithium-bis(trifluoromethansulfonyl)imid (LiT-FSI), Lithiummetaborat ($LiBO_2$), Lithiumaluminat ($LiAlO_2$), Lithiumtriflat ($LiCF_3SO_3$) und Lithiumchlorsulfonat ($LiSO_3Cl$). Die Löslichkeiten dieser Leitsalze liegen in $SO_2$ bei ca. $10^{-2}$ - $10^{-4}$ mol/L (siehe

Tabelle 2). Bei diesen geringen Salz-Konzentrationen kann davon ausgegangen werden, dass allenfalls nur geringe Leitfähigkeiten vorliegen, die für den sinnvollen Betrieb einer wiederaufladbaren Batteriezelle nicht ausreichend sind.

Tabelle 2: Löslichkeiten verschiedener Salze in $SO_2$

| Leitsalz | Löslichkeit / mol/L in $SO_2$ | Leitsalz | Löslichkeit / mol/L in $SO_2$ |
|---|---|---|---|
| LiF | $2{,}1\text{-}10^{-3}$ | $LiPF_6$ | $1{,}5\text{-}10^{-2}$ |
| LiBr | $4.9.10^{-3}$ | $LiSbF_6$ | $2.8.10^{-4}$ |
| $Li_2SO_4$ | $2.7.10^{-4}$ | $LiBF_2(C_2O_4)$ | $1{,}4\cdot10^{-4}$ |
| $LiB(C_2O_4)_2$ | $3.2\text{-}10^{-4}$ | $CF_3SO_2NLiSO_2CF_3$ | $1{,}5\cdot10^{-2}$ |
| $Li_3PO_4$ | - | $LiBO_2$ | $2.6\cdot10^{-4}$ |
| $Li_3AlF_6$ | $2{,}3\cdot10^{-3}$ | $LiAlO_2$ | $4.3\cdot10^{-4}$ |
| $LiBF_4$ | $1.7\cdot10^{-3}$ | $LiCF_3SO_3$ | $6.3\cdot10^{-4}$ |
| $LiAsF_6$ | $1{,}4\cdot10^{-3}$ | | |

Um die Einsatzmöglichkeiten sowie Eigenschaften von wiederaufladbaren Batteriezellen, die einen auf $SO_2$-basierenden Elektrolyten enthalten, weiter zu verbessern, liegt der vorliegenden Erfindung die Aufgabe zugrunde, eine wiederaufladbare Batteriezelle mit auf $SO_2$-basierenden Elektrolyten anzugeben, die gegenüber den aus dem Stand der Technik bekannten wiederaufladbaren Batteriezellen

- ein breites elektrochemisches Fenster hat, sodass keine oxidative Elektrolytzersetzung an der positiven Elektrode auftritt;
- eine stabile Deckschicht auf der negativen Elektrode aufweist, wobei die Deckschichtkapazität niedrig sein sollte und im weiteren Betrieb keine weitere reduktive Elektrolytzersetzung an der negativen Elektrode auftritt;
- einen auf $SO_2$-basierenden Elektrolyten enthält, der eine für Leitsalze gute Löslichkeit aufweist und damit ein guter Ionenleiter und elektronischer Isolator ist, damit der Ionentransport erleichtert und die Selbstentladung auf ein Minimum beschränkt werden kann;
- einen auf $SO_2$-basierenden Elektrolyten enthält, der auch gegenüber anderen Komponenten der wiederaufladbaren Batteriezelle, wie Separatoren, Elektrodenmaterialien und Zellverpackungsmaterialien, inert ist,
- gegen verschiedene Missbräuche, wie elektrische, mechanische oder thermische, robust ist;
- einen auf $SO_2$-basierenden Elektrolyten enthält, der eine gesteigerte Stabilität gegenüber Restmengen an Wasser in den Zellkomponenten von wiederaufladbaren Batteriezellen aufweist;
- verbesserte elektrische Leistungsdaten, insbesondere eine hohe Energiedichte aufweist;
- eine verbesserte Überladefähigkeit und Tiefentladefähigkeit und eine geringere Selbstentladung besitzt und
- eine gesteigerte Lebensdauer, insbesondere eine hohe Zahl nutzbarer Lade- und Entladezyklen zeigt.

Derartige wiederaufladbare Batteriezellen sollen insbesondere auch sehr gute elektrische Energie- und Leistungsdaten, eine hohe Betriebssicherheit und Lebensdauer, insbesondere eine hohe Zahl nutzbarer Lade- und Entladezyklen besitzen, ohne dass sich hierbei der Elektrolyt im Betrieb der wiederaufladbaren Batteriezelle zersetzt.
Gelöst wird diese Aufgabe durch eine wiederaufladbare Batteriezelle mit den Merkmalen des Anspruchs 1. Die Ansprüche 2 bis 25 beschreiben vorteilhafte Weiterbildungen der erfindungsgemäßen wiederaufladbaren Batteriezelle.
Eine erfindungsgemäße wiederaufladbare Batteriezelle umfasst ein aktives Metall, zumindest eine positive Elektrode, zumindest eine negative Elektrode, ein Gehäuse und einen Elektrolyten. Die positive Elektrode enthält mindestens eine Verbindung in Form eines Schichtoxids als aktives Material. Der Elektrolyt basiert auf $SO_2$ und enthält zumindest ein erstes Leitsalz. Dieses erste Leitsalz weist die Formel (I)

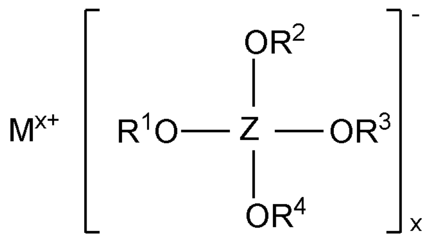

Formel (I)

auf. In Formel (I) ist M ein Metall, das ausgewählt ist aus der Gruppe, die gebildet wird von Alkalimetallen, Erdalkalimetallen, Metallen der Gruppe 12 des Periodensystems der Elemente und Aluminium. x ist eine ganze Zahl von 1 bis 3. Die Substituenten $R^1$, $R^2$, $R^3$ und $R^4$ sind unabhängig voneinander ausgewählt aus der Gruppe, die gebildet wird von $C_1$-$C_{10}$ Alkyl, $C_2$-$C_{10}$) Alkenyl, $C_2$-$C_{10}$) Alkinyl, $C_3$-$C_{10}$ Cycloalkyl, $C_6$-$C_{14}$ Aryl und $C_5$-$C_{14}$ Heteroaryl. Das Zentralatom Z ist entweder Aluminium oder Bor.

Unter dem Begriff "Schichtoxide" sind im Sinne der vorliegenden Erfindung Metalloxide zu verstehen, die vom $\alpha$-$NaFeO_2$-Strukturtyp abgeleitet sind. In diesem Strukturtyp besetzen die Sauerstoffatome die Gitterplätze eines kubisch-flächenzentrierten Gitters (sog. kfz-Gitter), worin die Metallionen die vorhandenen Oktaederlücken besetzen.

Der in der erfindungsgemäßen wiederaufladbaren Batteriezelle verwendete auf $SO_2$-basierende Elektrolyt enthält $SO_2$ nicht nur als Zusatz in geringer Konzentration, sondern in Konzentrationen, bei denen die Beweglichkeit der Ionen des ersten Leitsalzes, das in dem Elektrolyten enthalten ist und den Ladungstransport bewirkt, zumindest teilweise, größtenteils oder sogar vollständig durch das $SO_2$ gewährleistet ist. Das erste Leitsalz ist in dem Elektrolyten gelöst und zeigt darin eine sehr gute Löslichkeit. Es kann mit dem gasförmigen $SO_2$ einen flüssigen Solvatkomplex bilden, in welchem das $SO_2$ gebunden wird. In diesem Fall sinkt der Dampfdruck des flüssigen Solvatkomplexes gegenüber dem reinen $SO_2$ deutlich und es entstehen Elektrolyte mit niederem Dampfdruck. Es liegt jedoch auch im Rahmen der Erfindung, dass es bei der Herstellung des erfindungsgemäßen Elektrolyten, je nachdem welche chemische Struktur das erste Leitsalz nach Formel (I) hat, zu keiner Dampfdruckerniedrigung kommen kann. Im letztgenannten Fall ist es bevorzugt, dass bei der Herstellung des erfindungsgemäßen Elektrolyten bei Tieftemperatur oder unter Druck gearbeitet wird. Der Elektrolyt kann auch mehrere Leitsalze der Formel (I) enthalten, welche in ihrer chemischen Struktur voneinander abweichen.

Der Begriff "$C_1$-$C_{10}$ Alkyl" umfasst im Sinne der vorliegenden Erfindung lineare oder verzweigte gesättigte Kohlenwasserstoffgruppen mit einem bis zehn Kohlenstoffatomen. Hierunter fallen insbesondere Methyl, Ethyl, n-Propyl, Isopropyl, n-butyl, sec-Butyl, iso-Butyl, tert-Butyl, n-Pentyl, iso-Pentyl, 2,2-Dimethylpropyl, n-Hexyl, iso-Hexyl, 2-Ethylhexyl, n-Heptyl, iso-Heptyl, n-Octyl, iso-Octyl, n-Nonyl, n-Decyl und dergleichen.

Der Begriff "$C_2$-$C_{10}$ Alkenyl" umfasst im Sinne der vorliegenden Erfindung ungesättigte lineare oder verzweigte Kohlenwasserstoffgruppen mit zwei bis zehn Kohlenstoffatomen, wobei die Kohlenwasserstoffgruppen zumindest eine C-C-Doppelbindung aufweisen. Hierunter fallen insbesondere Ethenyl, 1-Propenyl, 2- Propenyl, 1-n-Butenyl, 2-n-Butenyl, iso-Butenyl, 1-Pentenyl, 1-Hexenyl, 1-Heptenyl, 1-Octenyl, 1-Nonenyl, 1- Decenyl und dergleichen. Der Begriff "$C_2$-$C_{10}$ Alkinyl" umfasst im Sinne der vorliegenden Erfindung ungesättigte lineare oder verzweigte Kohlenwasserstoffgruppen mit zwei bis zehn Kohlenstoffatomen, wobei die Kohlenwasserstoffgruppen zumindest eine C-C-Dreifachbindung aufweisen. Hierunter fallen insbesondere Ethinyl, 1-Propinyl, 2- Propinyl, 1-n-Butinyl, 2-n-Butinyl, iso-Butinyl, 1-Pentinyl, 1- Hexinyl, 1-Heptinyl, 1-Octinyl, 1-Noninyl, 1- Decinyl und dergleichen.

Der Begriff "$C_3$-$C_{10}$ Cycloalkyl" umfasst im Sinne der vorliegenden Erfindung zyklische, gesättigte Kohlenwasserstoffgruppen mit drei bis zehn Kohlenstoffatomen. Hierunter fallen insbesondere Cyclopropyl, Cyclobutyl, Cyclopentyl, Cyclohexyl, Cycloheptyl, Cyclohexyl, Cyclononyl und Cyclodecanyl.

Der Begriff "$C_6$-$C_{14}$ Aryl" umfasst im Sinne der vorliegenden Erfindung aromatische Kohlenwasserstoffgruppen mit sechs bis vierzehn ringständigen Kohlenstoffatomen. Hierunter fallen insbesondere Phenyl ($C_6H_5$ Gruppe), Naphthyl ($C_{10}H_7$ Gruppe) und Anthracyl ($C_{14}H_9$ Gruppe).

Der Begriff "$C_5$-$C_{14}$ Heteroaryl" umfasst im Sinne der vorliegenden Erfindung aromatische Kohlenwasserstoffgruppen mit fünf bis vierzehn ringständigen Kohlenwasserstoffatomen, bei welchen zumindest ein Kohlenwasserstoff-Atom durch ein Stickstoff-, Sauerstoff- oder Schwefel-Atom ersetzt bzw. ausgetauscht ist. Hierunter fallen insbesondere Pyrrolyl, Furanyl, Thiophenyl, Pyrridinyl, Pyranyl, Thiopyranyl und dergleichen. Alle der vorgenannten Kohlenwasserstoffgruppen sind jeweils über das Sauerstoff-Atom an Zentralatom gemäß Formel (I) gebunden.

Ein wiederaufladbare Batteriezelle mit einem derartigen Elektrolyt hat gegenüber wiederaufladbaren Batteriezellen mit aus dem Stand der Technik bekannten Elektrolyten den Vorteil, dass das darin enthaltene erste Leitsalz eine höhere Oxidationsstabilität aufweist und infolgedessen im Wesentlichen keine Zersetzung bei höheren Zellspannungen zeigt. Dieser Elektrolyt ist oxidationsstabil bevorzugt mindestens bis zu einem oberen Potential von 4,0 Volt, weiter

bevorzugt mindestens bis zu einem oberen Potential von 4,2 Volt, weiter bevorzugt mindestens bis zu einem oberen Potential von 4,4 Volt, weiter bevorzugt mindestens bis zu einem oberen Potential von 4,6 Volt, weiter bevorzugt mindestens bis zu einem oberen Potential von 4,8 Volt und besonders bevorzugt mindestens bis zu einem oberen Potential von 5,0 Volt. Somit kommt es bei der Verwendung eines solchen Elektrolyten in einer wiederaufladbaren Batteriezelle zu einer nur geringen oder sogar gar keine Elektrolytzersetzung innerhalb der Arbeitspotentiale, also im Bereich zwischen der Ladeschlussspannung und der Entladeschlussspannung, beider Elektroden der wiederaufladbaren Batteriezelle. Dadurch können zum Beispiel wiederaufladbare Batteriezellen eine Ladeschlussspannung von mindestens 4,0 Volt, weiter bevorzugt von mindestens 4,4 Volt, weiter bevorzugt von mindestens 4,8 Volt, weiter bevorzugt von mindestens 5,2 Volt, weiter bevorzugt von mindestens 5,6 Volt und besonders bevorzugt von mindestens 6,0 Volt aufweisen.

Die Lebensdauer der wiederaufladbaren Batteriezelle, die diesen Elektrolyten enthält, ist gegenüber wiederaufladbaren Batteriezellen, die aus dem Stand der Technik bekannten Elektrolyten enthalten, deutlich verlängert.

Weiterhin ist eine wiederaufladbaren Batteriezelle mit einem solchem Elektrolyten auch tieftemperaturfest. Bei einer Temperatur von z.B. -40°C können noch 61 % der geladenen Kapazität entladen werden. Die Leitfähigkeit des Elektrolyten bei tiefen Temperaturen ist ausreichend zum Betrieb einer Batteriezelle.

Weiterhin weist eine wiederaufladbaren Batteriezelle mit einem solchem Elektrolyten eine gesteigerte Stabilität gegenüber Restmengen an Wasser auf. Sofern sich in dem Elektrolyten noch geringe Restmengen an Wasser (im ppm-Bereich) befinden, so bildet der Elektrolyt bzw. das erste Leitsalz mit dem Wasser im Vergleich zu den aus dem Stand der Technik bekannten, auf $SO_2$-basierenden Elektrolyten Hydrolyseprodukte, welche deutlich weniger aggressiv gegenüber den Zellkomponenten sind. Aufgrund dessen spielt eine Wasserfreiheit des Elektrolyts im Vergleich zu den aus dem Stand der Technik bekannten, auf $SO_2$-basierenden Elektrolyten eine weniger bedeutende Rolle. Diese Vorteile des erfindungsgemäßen Elektrolyten überwiegen den Nachteil, der dadurch entsteht, dass das erste Leitsalz nach Formel (I) eine im Vergleich zu den aus dem Stand der Technik bekannten Leitsalze deutlich höhere Anionengröße aufweist. Diese höhere Anionengröße führt zu einer im Vergleich zur Leitfähigkeit von $LiAlCl_4$ geringeren Leitfähigkeit des ersten Leitsalzes gemäß Formel (I).

## Positive Elektrode

Nachfolgend sind vorteilhafte Weiterbildungen der erfindungsgemäßen wiederaufladbaren Batteriezelle im Hinblick auf die positive Elektrode beschrieben:

Die positive Elektrode enthält mindestens eine Verbindung in Form eines Schichtoxids als aktives Material. Dieses aktive Material kann Ionen des aktiven Metalls speichern und während des Betriebs der Batteriezelle die Ionen des aktiven Metalls abgeben und wiederaufnehmen.

In einer ersten vorteilhaften Weiterbildung der erfindungsgemäßen wiederaufladbaren Batteriezelle weist die Verbindung die Zusammensetzung $A_xM'_yM''_zO_a$ auf. In dieser Zusammensetzung $A_xM'_yM''_zO_a$ ist/sind

- A mindestens ein Metall, das ausgewählt ist aus der Gruppe, die gebildet wird von den Alkalimetallen, den Erdalkalimetallen, den Metallen der Gruppe 12 des Periodensystems oder Aluminium,
- M' mindestens ein Metall, das ausgewählt ist aus der Gruppe, die gebildet wird von den Elementen Ti, V, Cr, Mn, Fe, Co, Ni, Cu und Zn;
- M" mindestens ein Element, das ausgewählt ist aus der Gruppe, die gebildet wird von den Elementen der Gruppen 2, 3, 4, 5, 6, 7, 8, 9, 10, 11, 12, 13, 14, 15 und 16 des Periodensystems der Elemente;
- x und y unabhängig voneinander Zahlen größer 0;
- z eine Zahl größer oder gleich 0; und
- a eine Zahl größer 0.

A ist vorzugsweise das Metall Lithium, d.h. die Verbindung kann die Zusammensetzung $Li_xM'_yM''_zO_a$ aufweisen.

Diese Schichtoxide sind vom $\alpha$-$NaFeO_2$-Strukturtyp abgeleitete Oxide. Dabei besetzen die Sauerstoffatome die Gitterplätze eines kubisch-flächenzentrierten Gitters (sog. kfz-Gitter); die Metallionen A und die Metallkationen M' und M" besetzen die vorhandenen Oktaederlücken. In der auf diese Weise aufgebauten Struktur kommt es zu einer Ordnung/Separation von Lithium und den Übergangsmetallen auf alternierenden Schichten entlang der kubischen [111]-Richtung. Wird ein Überschuss an Metallionen A eingesetzt, so können diese in die Schicht der Metallkationen M' und M" integriert werden.

Die Indizes y und z in der Zusammensetzung $A_xM'_yM''_zO_a$ beziehen sich dabei auf die Gesamtheit der Metalle und Elemente, die durch M' bzw. M" repräsentiert werden. Umfasst zum Beispiel M' zwei Metalle $M'^1$ und $M'^2$, so gilt für den Index y: y=y1+y2, wobei y1und y2 die Indizes der Metalle $M'^1$ und $M'^2$ darstellen. Die Zahlen bzw. Indizes x, y, z und a müssen so gewählt werden, dass eine Ladungsneutralität innerhalb der Zusammensetzung herrscht.

Beispiele für Verbindungen, bei denen M' zwei Metalle umfasst, sind Lithiumnickelmangancobaltoxide der Zusammensetzung $Li_xNi_{y1}Mn_{y2}Co_zO_2$ mit $M'^1$=Ni, $M'^2$=Mn und M"=Co. Beispiele für Verbindungen, in denen z=0 ist,

die also kein weiteres Metall oder Element M" enthalten, sind Lithiumkobaltoxide $Li_xCo_yO_a$.

Eine vorteilhafte Weiterbildung der erfindungsgemäßen wiederaufladbaren Batteriezelle sieht vor, dass A Lithium und M' Cobalt sind, wobei x und y vorzugsweise gleich 1, z gleich 0 und a vorzugsweise gleich 2 ist. Es handelt sich dabei vorzugsweise um Zusammensetzungen der Formel $Li_xCo_yO_a$, d.h. um Lithiumkobaltoxide. Beispiel für ein Lithiumkobaltoxid ist die Verbindung $LiCoO_2$.

Eine vorteilhafte Weiterbildung der erfindungsgemäßen wiederaufladbaren Batteriezelle sieht vor, dass M' aus den Metallen Nickel und Mangan besteht und M" Cobalt ist. In dieser Zusammensetzung der Formel $Li_xNi_{y1}Mn_{y2}Co_zO_a$ sind x, y1 und y2 unabhängig voneinander Zahlen größer 0, z eine Zahl größer oder gleich 0 und a eine Zahl größer 0. Es handelt sich dabei vorzugsweise um Zusammensetzungen der Formel $Li_xNi_{y1}Mn_{y2}Co_zO_2$ (NMC), d.h. um Lithiumnickelmangancobaltoxide. Beispiele für diese aktiven Materialien aus Lithiumnickelmangancobaltoxid sind $LiNi_{1/3}Mn_{1/3}Co_{1/3}O2$ (NMC111), $LiNi_{0.6}Mn_{0\cdot2}Co_2O2$ (NMC622) und $LiNi_{0\cdot8}Mn_{0.1}CO_{0.1}O_2$ (NMC811). Weitere Verbindungen aus Lithiumnickelmangancobaltoxid können die Zusammensetzung $LiNi_{0,5}Mn_{0,3}Co_{0,2}O2$, $LiNi_{0,5}Mn_{0,25}Co_{0,25}O_2$, $LiNi_{0,52}Mn_{0,32}Co_{0,16}O_2$, $LiNi_{0,55}Mn_{0,30}Co_{0,15}O_2$, $LiNi_{0,58}Mn_{0,14}Co_{0,28}O_2$, $LiNi_{0,64}Mn_{0,18}Co_{0,18}O_2$, $LiNi_{0,65}Mn_{0,27}Co_{0,08}O_2$, $LiNi_{0,7}Mn_{0,2}Co_{0,1}O_2$, $LiNi_{0,7}Mn_{0,15}Co_{0,15}O_2$, $LiNi_{0,72}Mn_{0,10}Co_{0,18}O_2$, $LiNi_{0,76}Mn_{0,14}Co_{0,10}O_2$, $LiNi_{0,86}Mn_{0,04}Co_{0,10}O_2$, $LiNi_{0,90}Mn_{0,05}Co_{0,05}O_2$, $LiNi_{0,95}Mn_{0,025}Co_{0,025}O_2$ oder eine Kombination davon aufweisen. Mit diesen Verbindungen lassen sich Elektroden für wiederaufladbare Batteriezellen mit einer Zellspannung von z.B. über 4,6 Volt herstellen.

Eine weitere vorteilhafte Weiterbildung der erfindungsgemäßen wiederaufladbaren Batteriezelle sieht vor, dass es sich bei dem aktiven Material um ein Metalloxid handelt, welches reich an Lithium und Mangan ist (Lithium- and Manganese-Rich Oxide Material). Diese Materialien können mit folgenden Formeln beschrieben werden: $Li_xMn_yM"_zO_a$. M' der oben beschriebenen Formel $Li_xM'_yM"_zO_a$ stellt also das Metall Mangan (Mn) dar. M" ist, wie oben definiert, mindestens ein Element, das ausgewählt ist aus der Gruppe, die gebildet wird von den Elementen der Gruppen 2, 3, 4, 5, 6, 7, 8, 9, 10, 11, 12, 13, 14, 15 und 16 des Periodensystems der Elemente. Der Index x ist hier größer oder gleich 1, der Index y ist größer als der Index z bzw. größer als die Summe der Indizes z1+z2+z3 etc.. Umfasst z.B. M" zwei Metalle $M"^1$ und $M"^2$ mit den Indizes z1 und z2 (z.B. $Li_{1.2}Mn_{0.525}Ni_{0.175}Co_{0.1}O_2$ mit $M"^1$=Ni z1=0,175 und $M"^2$=Co z2=0,1) so gilt für den Index y: y>z1+z2, Der Index z ist größer oder gleich 0 ist und der Index a ist größer 0. Die Indizes x, y, z und a müssen so gewählt werden, dass eine Ladungsneutralität innerhalb der Zusammensetzung herrscht. Metalloxide, welche reich an Lithium und Mangan sind, können auch durch die Formel $mLi_2MnO_{3\cdot}(1-m)LiM'O_2$ mit $0 < m < 1$ beschrieben werden. Beispiele für derartige Verbindungen sind $Li_{1.2}Mn_{0.525}Ni_{0.175}Co_{0\cdot1}O_2$, $Li_{1.2}Mn_{0.6}Ni_{0.2}O_2$, $Li_{1.2}Ni_{0.13}Co_{0.13}Mn_{0.54}O_2$ oder $Li_{1.16}Mn_{0.61}Ni_{0.15}Co_{0.16}O_2$.

Es liegt im Rahmen der Erfindung, dass die positive Elektrode als aktives Material mindestens eine der beschriebenen Schichtoxid-Verbindungen oder eine Kombination der Schichtoxid-Verbindungen enthält. Unter einer Kombination der Schichtoxid-Verbindungen versteht man eine positive Elektrode, die mindestens zwei der beschriebenen Materialien enthält.

Es liegt weiterhin im Rahmen der Erfindung, dass die positive Elektrode als aktives Material auch eine Kombination aus zumindest einer der zuvor beschriebenen Schichtoxid-Verbindungen und zumindest einer weiteren Verbindung enthält, welche keine Schichtoxid-Verbindung ist. Die Kombination kann auch mehrere der zuvor beschriebenen Schichto-xid-Verbindungen und/oder mehrere weitere Verbindungen umfassen, die keine Schichtoxid-Verbindungen sind. Diese weitere Verbindung kann z.B. eine polyanionische Verbindung, wie z.B. Lithiummanganeisenphosphat, sein.

Eine weitere vorteilhafte Weiterbildung der erfindungsgemäßen Batteriezelle sieht vor, dass die positive Elektrode ein Ableitelement aufweist. Das bedeutet, dass die positive Elektrode neben dem aktiven Material auch ein Ableitelement umfasst. Dieses Ableitelement dient dazu, den erforderlichen elektronisch leitenden Anschluss des aktiven Materials der positiven Elektrode zu ermöglichen. Hierfür steht das Ableitelement in Kontakt mit dem an der Elektrodenreaktion der positiven Elektrode beteiligten aktiven Material. Dieses Ableitelement kann planar in Form eines dünnen Metallblechs oder einer dünnen Metallfolie ausgebildet sein. Die dünne Metallfolie weist vorzugsweise eine durchbrochene bzw. netzartige Struktur auf. Das planare Ableitelement kann auch aus einer mit Metall beschichtetet Kunststofffolie bestehen. Diese Metallbeschichtungen weisen eine Dicke im Bereich von 0,1 $\mu$m bis 20$\mu$m auf. Das aktive Material der positiven Elektrode ist vorzugsweise auf die Oberfläche des dünnen Metallblechs, der dünnen Metallfolie oder der mit Metall beschichteten Kunststofffolie aufgebracht. Das aktive Material kann auf der Vorder- und/oder der Rückseite des planaren Ableitelements aufgebracht sein. Derartige planare Ableitelemente weisen eine Dicke im Bereich von 5 $\mu$m bis 50 $\mu$m auf. Eine Dicke des planaren Ableitelements im Bereich von 10 $\mu$m bis 30 $\mu$m ist bevorzugt. Bei der Verwendung von planaren Ableitelementen kann die positive Elektrode eine Gesamtdicke von mindestens 20 $\mu$m , bevorzugt mindestens 40 $\mu$m und besonders bevorzugt mindestens 60 $\mu$m aufweise. Die maximalen Dicke beträgt höchstens 200 $\mu$m, bevorzugt höchstens 150 $\mu$m und besonders bevorzugt höchstens 100 $\mu$m. Die flächenspezifische Kapazität der positiven Elektrode bezogen auf die Beschichtung einer Seite weist bei der Verwendung eines planaren Ableitelements vorzugsweise mindestens 0,5 $mAh/cm^2$ auf, wobei folgende Werte in dieser Reihenfolge weiter bevorzugt sind: 1 $mAh/cm^2$, 3 $mAh/cm^2$, 5 $mAh/cm^2$, 10 $mAh/cm^2$, 15 $mAh/cm^2$, 20 $mAh/cm^2$.

Weiterhin besteht auch die Möglichkeit, dass das Ableitelement der positiven Elektrode dreidimensional in

Form einer porösen Metallstruktur, insbesondere in Form eines Metallschaums ausgebildet ist. Die dreidimensionale poröse Metallstruktur ist derartig porös, dass das aktive Material der positiven Elektrode in die Poren der Metallstruktur eingearbeitet werden kann. Bei der Menge an eingearbeitetem bzw. aufgebrachten aktivem Material handelt es sich um die Beladung der positiven Elektrode. Wenn das Ableitelement dreidimensional in Form einer porösen Metallstruktur, insbesondere in Form eines Metallschaums ausgebildet ist, dann weist die positive Elektrode vorzugsweise eine Dicke von mindestens 0,2 mm, bevorzugt mindestens 0,3 mm, weiter bevorzugt mindestens 0,4 mm, weiter bevorzugt mindestens 0,5 mm und besonders bevorzugt mindestens 0,6 mm auf. Eine weitere vorteilhafte Ausgestaltung sieht vor, dass die flächenspezifische Kapazität der positiven Elektrode bei der Verwendung eines dreidimensionalen Ableitelements, insbesondere in Form eines Metallschaums vorzugsweise mindestens 2,5 $mAh/cm^2$ beträgt, wobei folgende Werte in dieser Reihenfolge weiter bevorzugt sind: 5 $mAh/cm^2$, 15 $mAh/cm^2$, 25 $mAh/cm^2$, 35 $mAh/cm^2$, 45 $mAh/cm^2$, 55 $mAh/cm^2$, 65 $mAh/cm^2$, 75 $mAh/cm^2$. Wenn das Ableitelement dreidimensional in Form einer porösen Metallstruktur, insbesondere in Form eines Metallschaums ausgebildet ist, beträgt die Menge des aktiven Materials der positiven Elektrode, d.h. die Beladung der Elektrode, bezogen auf ihre Fläche, mindestens 10 $mg/cm^2$, bevorzugt mindestens 20 $mg/cm^2$, weiter bevorzugt mindestens 40 $mg/cm^2$, weiter bevorzugt mindestens 60 $mg/cm^2$, weiter bevorzugt mindestens 80 $mg/cm^2$ und besonders bevorzugt mindestens 100 $mg/cm^2$. Diese Beladung der positiven Elektrode wirkt sich positiv auf den Ladevorgang sowie den Entladevorgang der wiederaufladbaren Batteriezelle aus.

Die positive Elektrode weist in einer weiteren vorteilhaften Weiterbildung der erfindungsgemäßen Batteriezelle zumindest ein Bindemittel auf. Dieses Bindemittel ist vorzugsweise ein fluoriertes Bindemittel, insbesondere ein Polyvinylidenfluorid und/oder ein Terpolymer, das aus Tetrafluorethylen, Hexafluorpropylen und Vinylidenfluorid ausgebildet ist. Es kann jedoch auch ein Bindemittel sein, welches aus einem Polymer besteht, das aus monomeren Struktureinheiten einer konjugierten Carbonsäure oder aus dem Alkali-, Erdalkali- oder Ammoniumsalz dieser konjugierten Carbonsäure oder aus einer Kombination daraus aufgebaut ist. Weiterhin kann das Bindemittel auch aus einem Polymer bestehen, das auf monomeren Styrol- und Butadien-Struktureinheiten basiert. Außerdem kann das Bindemittel auch ein Bindemittel aus der Gruppe der Carboxymethylcellulosen sein. Das Bindemittel liegt in der positiven Elektrode vorzugsweise in einer Konzentration von höchstens 20 Gew%, weiter bevorzugt höchstens 15 Gew%, weiter bevorzugt höchstens 10 Gew%, weiter bevorzugt höchstens 7 Gew%, weiter bevorzugt höchstens 5 Gew% und besonders bevorzugt höchstens 2 Gew% bezogen auf das Gesamtgewicht der positiven Elektrode vor.

Elektrolyt

Nachfolgend sind vorteilhafte Weiterbildungen der wiederaufladbaren Batteriezelle im Hinblick auf den auf $SO_2$-basierenden Elektrolyten beschrieben.

In einer weiteren vorteilhaften Ausgestaltung der wiederaufladbaren Batteriezellen sind die Substituenten $R^1$, $R^2$, $R^3$ und $R^4$ des ersten Leitsalzes unabhängig voneinander ausgewählt aus der Gruppe, die gebildet wird von

- $C_1$-$C_6$ Alkyl; bevorzugt von $C_2$-$C_4$ Alkyl; besonders bevorzugt von den Alkylgruppen 2-Propyl, Methyl und Ethyl;
- $C_2$-$C_6$ Alkenyl; bevorzugt von $C_2$-$C_4$ Alkenyl; besonders bevorzugt von den Alkenylgruppen Ethenyl und Propenyl;
- $C_2$-$C_6$-Alkinyl; bevorzugt von $C_2$-$C_4$-Alkinyl;
- $C_3$-$C_6$ Cycloalkyl;
- Phenyl; und
- $C_5$-$C_7$ Heteroaryl.

Der Begriff "$C_1$-$C_6$ Alkyl" umfasst im Fall dieser vorteilhaften Ausgestaltung des auf $SO_2$-basierenden Elektrolyten lineare oder verzweigte gesättigte Kohlenwasserstoffgruppen mit einem bis sechs Kohlenwasserstoffgruppen, insbesondere Methyl, Ethyl, n-Propyl, Isopropyl, n-butyl, sec-Butyl, iso-Butyl, tert-Butyl, n-Pentyl, iso-Pentyl, 2,2-Dimethylpropyl, n-Hexyl und iso-Hexyl. Hierunter sind $C_2$-$C_4$ Alkyle bevorzugt. Besonders bevorzugt sind die $C_2$-$C_4$ Alkyle 2-Propyl, Methyl und Ethyl.

Der Begriff "$C_2$-$C_6$ Alkenyl" umfasst im Fall dieser vorteilhaften Ausgestaltung des auf $SO_2$-basierenden Elektrolyten ungesättigte lineare oder verzweigte Kohlenwasserstoffgruppen mit zwei bis sechs Kohlenstoffatomen, wobei die Kohlenwasserstoffgruppen zumindest eine C-C-Doppelbindung aufweisen. Hierunter fallen insbesondere Ethenyl, 1-Propenyl, 2- Propenyl, 1-n-Butenyl, 2-n-Butenyl, iso-Butenyl, 1-Pentenyl und 1-Hexenyl, wobei $C_2$-$C_4$ Alkenyle bevorzugt sind. Besonders bevorzugt sind Ethenyl und 1-Propenyl. Der Begriff "$C_2$-$C_6$-Alkinyl" umfasst im Fall dieser vorteilhaften Ausgestaltung des auf $SO_2$-basierenden Elektrolyten ungesättigte lineare oder verzweigte Kohlenwasserstoffgruppen mit zwei bis sechs Kohlenstoffatomen, wobei die Kohlenwasserstoffgruppen zumindest eine C-C-Dreifachbindung aufweisen. Hierunter fallen insbesondere Ethinyl, 1-Propinyl, 2-Propinyl, 1-n-Butinyl, 2-n-Butinyl, iso-Butinyl, 1-Pentinyl und 1- Hexinyl. Bevorzugt hierunter sind $C_2$-$C_4$-Alkinyle.

Der Begriff "$C_3$-$C_6$ Cycloalkyl" umfasst im Fall dieser vorteilhaften Ausgestaltung des auf $SO_2$-basierenden Elektrolyten zyklische gesättigte Kohlenwasserstoffgruppen mit drei bis sechs Kohlenstoffatomen. Hierunter fallen insbesondere Cyclopropyl, Cyclobutyl, Cyclopentyl und Cyclohexyl.

Der Begriff "$C_5$-$C_7$ Heteroaryl" umfasst im Fall dieser vorteilhaften Ausgestaltung des auf $SO_2$-basierenden Elektrolyten Phenyl und Naphtyl.

Zur Verbesserung der Löslichkeit des ersten Leitsalzes in dem auf $SO_2$-basierenden Elektrolyten sind die Substituenten $R^1$, $R^2$, $R^3$ und $R^4$ in einer weiteren vorteilhaften Ausgestaltung der wiederaufladbaren Batteriezelle durch mindestens ein Fluoratom und/oder durch mindestens eine chemische Gruppe substituiert, wobei die chemische Gruppe ausgewählt ist aus der Gruppe, die gebildet wird von $C_1$-$C_4$-Alkyl, $C_2$-$C_4$-Alkenyl, $C_2$-$C_4$-Alkinyl, Phenyl und Benzyl. Die chemischen Gruppen $C_1$-$C_4$-Alkyl, $C_2$-$C_4$-Alkenyl, $C_2$-$C_4$-Alkinyl, Phenyl und Benzyl weisen dieselben Eigenschaften bzw. chemischen Strukturen auf, wie die zuvor beschriebenen Kohlenwasserstoffgruppen. Substituiert bedeutet in diesem Zusammenhang, dass einzelne Atome oder Atomgruppen der Substituenten $R^1$, $R^2$, $R^3$ und $R^4$ durch das Fluoratom und/oder durch die chemische Gruppe ersetzt sind.

Eine besonders hohe Löslichkeit des ersten Leitsalzes in dem auf $SO_2$-basierendenElekt-rolyten kann dadurch erreicht werden, dass zumindest einer der Substituenten $R^1$, $R^2$, $R^3$ und $R^4$ eine $CF_3$-Gruppe oder eine $OSO_2CF_3$-Gruppe ist.

In einer weiteren vorteilhaften Weiterbildung der wiederaufladbaren Batteriezelle ist das erste Leitsalz ausgewählt aus der Gruppe, die gebildet wird von

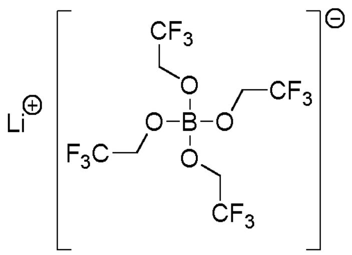

$Li[B(OCH_2CF_3)_4]$

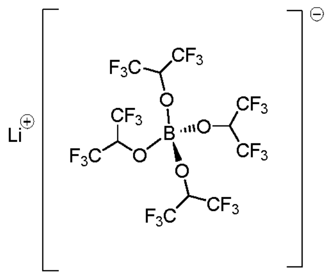

$Li[B(OCH(CF_3)_2)_4]$

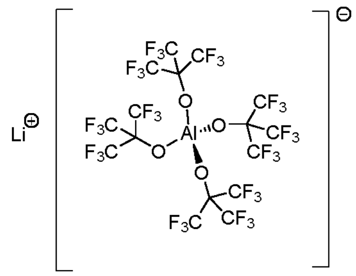

$Li[Al(OC(CF_3)_3)_4]$

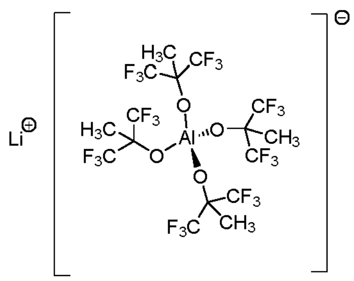

$Li[Al(OC(CH_3)(CF_3)_2)_4]$

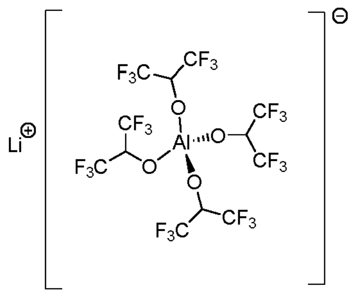

$Li[Al(OCH(CF_3)_2)_4]$.

Um die Leitfähigkeit und/oder weitere Eigenschaften des Elektrolyten an einen gewünschten Wert anzupassen, weist der Elektrolyt in einer weiteren vorteilhaften Ausgestaltung der erfindungsgemäßen wiederaufladbaren Batteriezelle zumindest ein zweites, von dem ersten Leitsalz nach Formel (I) abweichendes Leitsalz auf. Das bedeutet, dass der Elektrolyt neben dem ersten Leitsalz ein oder auch weitere zweite Leitsalze enthalten kann, die sich in ihrer chemischen Zusammensetzung sowie ihrer chemischen Struktur von dem ersten Leitsalz unterscheiden.

In einer weiteren vorteilhaften Ausgestaltung der erfindungsgemäßen wiederaufladbaren Batteriezelle ist das zweite Leitsalz eine Alkalimetallverbindung, insbesondere eine Lithiumverbindung. Die Alkalimetallverbindung oder die Lithiumverbindung sind ausgewählt aus der Gruppe, die gebildet wird von einem Aluminat, einem Halogenid, einem Oxalat, einem Borat, einem Phosphat, einem Arsenat und einem Gallat. Vorzugsweise ist das zweite Leitsalz ein Lithiumtetrahalogenoaluminat, insbesondere $LiAlCl_4$.

Des Weiteren enthält der Elektrolyt in einer weiteren vorteilhaften Ausgestaltung der erfindungsgemäßen wiederaufladbaren Batteriezelle zumindest ein Additiv. Dieses Additiv ist vorzugsweise ausgewählt aus der Gruppe, die gebildet wird von Vinylencarbonat und seinen Derivaten, Vinylethylencarbonat und seinen Derivaten, Methylethylencarbonat und seinen Derivaten, Lithium(bisoxalato)borat, Lithiumdifluor(oxalato)borat, Lithiumtetraf-luor(oxalato)phosphat, Lithiumoxalat, 2-Vinylpyridin, 4-Vinylpyridin, cyclische Exomethylencarbonate, Sultone, cyclische und acyclische Sulfonate, acyclische Sulfite, cyclische und acyclische Sulfinate, organische Ester anorganischer Säuren, acyclische und

cyclische Alkane, welche acyclischen und cyclischen Alkane einen Siedepunkt bei 1 bar von mindestens 36°C aufweisen, aromatische Verbindungen, halogenierte cyclische und acyclische Sulfonylimide, halogenierte cyclische und acyclische Phosphatester, halogenierte cyclische und acyclische Phosphine, halogenierte cyclische und acyclische Phosphite, halogenierte cyclische und acyclische Phosphazene, halogenierte cyclische und acyclische Silylamine, halogenierte cyclische und acyclische halogenierte Ester, halogenierte cyclische und acyclische Amide, halogenierte cyclische und acyclische Anhydride und halogenierte organische Heterocyclen.

Bezogen auf das Gesamtgewicht der Elektrolytzusammensetzung weist der Elektrolyt in einer weiteren vorteilhaften Weiterbildung der wiederaufladbaren Batteriezelle folgende Zusammensetzung auf:

(i) 5 bis 99,4 Gew.-% Schwefeldioxid,
(ii) 0,6 bis 95 Gew.-% des ersten Leitsalzes,
(iii) 0 bis 25 Gew.-% des zweiten Leitsalzes und
(iv) 0 bis 10 Gew.-% des Additivs.

Wie bereits zuvor erwähnt, kann der Elektrolyt nicht nur ein erstes Leitsalz nach Formel (I) und ein zweites Leitsalz enthalten, sondern jeweils auch mehrere erste Leitsalze nach Formel (I) und mehrere zweite Leitsalze. Die zuvor genannten prozentualen Anteile schließen im letztgenannten Fall auch mehrere erste Leitsalze und mehrere zweite Leitsalze ein. Die Stoffmengenkonzentration des ersten Leitsalzes liegt im Bereich von 0,01 mol/l bis 10 mol/l, bevorzugt von 0,05 mol/l bis 10 mol/l, weiter bevorzugt von 0,1 mol/l bis 6 mol/l und besonders bevorzugt von 0,2 mol/l bis 3,5 mol/l bezogen auf das Gesamtvolumen des Elektrolyten.

Eine weitere vorteilhafte Weiterbildung der erfindungsgemäßen wiederaufladbaren Batteriezelle sieht vor, dass der Elektrolyt mindestens 0,1 Mol $SO_2$, bevorzugt mindestens 1 Mol $SO_2$, weiter bevorzugt mindestens 5 Mol $SO_2$, weiter bevorzugt mindestens 10 Mol $SO_2$ und besonders bevorzugt mindestens 20 Mol $SO_2$ je Mol Leitsalz enthält. Der Elektrolyt kann auch sehr hohe molare Anteile an $SO_2$ enthalten, wobei der bevorzugte obere Grenzwert mit 2600 Mol $SO_2$ je Mol Leitsalz angegeben werden kann und Obergrenzen von 1500, 1000, 500 und 100 Mol $SO_2$ je Mol Leitsalz in dieser Reihenfolge weiter bevorzugt sind. Der Begriff "je Mol Leitsalz" bezieht sich dabei auf alle Leitsalze, die im Elektrolyten enthalten sind. Auf $SO_2$-basierende Elektrolyte mit einem derartigen Konzentrationsverhältnis zwischen $SO_2$ und dem Leitsalz haben den Vorteil, dass sie im Vergleich zu den aus dem Stand der Technik bekannten Elektrolyten, welche beispielsweise auf einem organischen Lösungsmittelgemisch basieren, eine größere Menge an Leitsalz lösen können. Im Rahmen der Erfindung wurde festgestellt, dass überraschenderweise ein Elektrolyt mit einer relativ geringen Konzentration an Leitsalz trotz des damit verbundenen höheren Dampfdrucks vorteilhaft ist, insbesondere hinsichtlich dessen Stabilität über viele Lade- und Entladezyklen der wiederaufladbaren Batteriezelle. Die Konzentration an $SO_2$ im Elektrolyten wirkt sich auf dessen Leitfähigkeit aus. Somit kann durch die Wahl der $SO_2$-Konzentration die Leitfähigkeit des Elektrolyten an die geplante Verwendung einer mit diesem Elektrolyten betriebenen wiederaufladbaren Batteriezelle angepasst werden.

Der Gesamtgehalt von $SO_2$ und dem ersten Leitsalz kann größer als 50 Gewichtsprozent (Gew%) des Gewichts des Elektrolyten sein, bevorzugt größer als 60 Gew%, weiter bevorzugt größer als 70 Gew%, weiter bevorzugt größer als 80 Gew%, weiter bevorzugt größer als 85 Gew%, weiter bevorzugt größer als 90 Gew%, weiter bevorzugt größer als 95 Gew% oder weiter bevorzugt größer als 99 Gew%.

Der Elektrolyt kann mindestens 5 Gew% $SO_2$ bezogen auf die Gesamtmenge des in der wiederaufladbaren Batteriezelle enthaltenen Elektrolyten enthalten, wobei Werte von 20 Gew% $SO_2$, 40 Gew% $SO_2$ und 60 Gew% $SO_2$ weiter bevorzugt sind. Der Elektrolyt kann auch bis zu 95 Gew% $SO_2$ enthalten, wobei Maximalwerte von 80 Gew% $SO_2$ und 90 Gew% $SO_2$ in dieser Reihenfolge bevorzugt sind.

Es liegt im Rahmen der Erfindung, dass der Elektrolyt vorzugsweise einen nur geringen oder sogar gar keinen prozentualen Anteil an zumindest einem organischen Lösungsmittel aufweist. Vorzugsweise kann der Anteil an organischen Lösungsmitteln im Elektrolyten, welche beispielsweise in Form eines oder einer Mischung mehrerer Lösungsmittelvorhanden ist, höchstens 50 Gew% des Gewichts des Elektrolyten betragen. Besonders bevorzugt sind geringere Anteile von höchstens 40 Gew%, von höchstens 30 Gew%, von höchstens 20 Gew%, von höchstens 15 Gew%, von höchstens 10 Gew%, von höchstens 5 Gew% oder von höchstens 1 Gew% des Gewichts des Elektrolyten. Weiter bevorzugt ist der Elektrolyt frei von organischen Lösungsmitteln. Durch den nur geringen Anteil an organischen Lösungsmitteln oder sogar deren vollständige Abwesenheit ist der Elektrolyt entweder kaum oder gar nicht brennbar. Dies erhöht die Betriebssicherheit einer mit einem derartigen auf $SO_2$-basierenden Elektrolyten betriebenen wiederaufladbaren Batteriezelle. Besonders bevorzugt ist der auf $SO_2$-basierende Elektrolyt im Wesentlichen frei von organischen Lösungsmitteln.

Bezogen auf das Gesamtgewicht der Elektrolytzusammensetzung weist der Elektrolyt in einer weiteren vorteilhaften Weiterbildung der wiederaufladbaren Batteriezelle folgende Zusammensetzung auf:

(i) 5 bis 99,4 Gew.-% Schwefeldioxid,

(ii) 0,6 bis 95 Gew.-% des ersten Leitsalzes,
(iii) 0 bis 25 Gew.-% des zweiten Leitsalzes,
(iv) 0 bis 10 Gew.-% des Additivs und
(v) 0 bis 50 Gew.-% eines organischen Lösungsmittels.

Aktives Metall

Nachfolgend sind vorteilhafte Weiterbildungen der erfindungsgemäßen wiederaufladbaren Batteriezelle im Hinblick auf das aktive Metall beschrieben:
In einer ersten vorteilhaften Weiterbildung der wiederaufladbare Batteriezelle ist das aktive Metall

- ein Alkalimetall, insbesondere Lithium oder Natrium;
- ein Erdalkalimetall, insbesondere Calcium;
- ein Metall der Gruppe 12 des Periodensystems, insbesondere Zink; oder
- Aluminium.

Negative Elektrode

Nachfolgend sind vorteilhafte Weiterbildungen der erfindungsgemäßen wiederaufladbaren Batteriezelle im Hinblick auf die negative Elektrode beschrieben:
Eine weitere vorteilhafte Weiterbildung der wiederaufladbaren Batteriezelle sieht vor, dass die negative Elektrode eine Insertionselektrode ist. Diese Insertionselektrode enthält ein Insertionsmaterial als aktives Material, in welches die Ionen des aktiven Metalls während des Ladens der wiederaufladbare Batteriezelle eingelagert und aus welchem die Ionen des aktiven Metalls während des Entladens der wiederaufladbaren Batteriezelle ausgelagert werden können. Das bedeutet, dass sich die Elektrodenprozesse nicht nur an der Oberfläche der negativen Elektrode, sondern auch im Inneren der negativen Elektrode abspielen können. Wird beispielsweise ein Leitsalz auf Lithium-Basis verwendet, so können Lithiumionen während des Ladens der wiederaufladbaren Batteriezelle in das Insertionsmaterial eingelagert und während des Entladens der wiederaufladbare Batteriezelle aus diesem ausgelagert werden. Vorzugsweise enthält die negative Elektrode als aktives Material bzw. Insertionsmaterial Kohlenstoff, insbesondere in der Modifikation Graphit. Es liegt jedoch auch im Rahmen der Erfindung, dass der Kohlenstoff in Form von Naturgraphit (Flocken-Fördermittel oder gerundet), synthetischem Graphit (Mesophasen Graphit), graphitiertem MesoCarbon MicroBeads (MCMB), mit kohlenstoffbeschichtetem Graphit oder amorphem Kohlenstoff vorliegt.
Die negative Elektrode umfasst in einer weiteren vorteilhaften Weiterbildung der erfindungsgemäßen wiederaufladbaren Batteriezelle Lithium-Interkalations-Anodenaktivmaterialien, die keinen Kohlenstoff enthalten, so zum Beispiel Lithium-Titanate (z.B. $Li_4Ti_5O_{12}$).
Eine weitere vorteilhafte Weiterbildung der erfindungsgemäßen wiederaufladbaren Batteriezelle sieht vor, dass die negative Elektrode mit Lithium Legierungsbildende-Anodenaktivmaterialien umfasst. Das sind zum Beispiel Lithium-speichernde Metalle und Metalllegierungen (z.B. Si, Ge, Sn, $SnCo_xC_y$, $SnSi_x$ und dergleichen) und Oxide der Lithium-speichernden Metalle und Metalllegierungen (z.B. $SnO_x$, $SiO_x$, oxidische Gläser von Sn, Si und dergleichen).
Die negative Elektrode enthält in einer weiteren vorteilhaften Weiterbildung der erfindungsgemäßen wiederaufladbaren Batteriezelle Konversions-Anodenaktivmaterialien. Diese Konversions-Anodenaktivmaterialien können beispielsweise Übergangsmetalloxide in Form von Manganoxiden ($MnO_x$), Eisenoxiden ($FeO_x$), Cobaltoxiden ($CoO_x$), Nickeloxiden ($NiO_x$), Kupferoxiden ($CuO_x$) oder Metallhydride in Form von Magnesiumhydrid ($MgH_2$), Titanhydrid ($TiH_2$), Aluminiumhydrid ($AlH_3$) und Bor-, Aluminium- und Magnesiumbasierte ternäre Hydride und dergleichen sein.
In einer weiteren vorteilhaften Weiterbildung der erfindungsgemäßen wiederaufladbaren Batteriezelle umfasst die negative Elektrode ein Metall, insbesondere metallisches Lithium.
Eine weitere vorteilhafte Weiterbildung der erfindungsgemäßen wiederaufladbaren Batteriezelle sieht vor, dass die negative Elektrode porös ist, wobei die Porosität bevorzugt höchstens 50 %, weiter bevorzugt höchstens 45 %, weiter bevorzugt höchstens 40 %, weiter bevorzugt höchstens 35 %, weiter bevorzugt höchstens 30 %, weiter bevorzugt höchstens 20 % und besonders bevorzugt höchstens 10 % beträgt. Die Porosität stellt das Hohlraumvolumen zu Gesamtvolumen der negativen Elektrode dar, wobei das Hohlraumvolumen von sogenannten Poren bzw. Hohlräumen ausgebildet wird. Diese Porosität führt zu einer Vergrößerung der inneren Oberfläche der negativen Elektrode. Weiterhin verringert die Porosität die Dichte der negativen Elektrode und damit auch ihr Gewicht. Die einzelnen Poren der negativen Elektrode können im Betrieb vorzugsweise vollständig mit dem Elektrolyten gefüllt sein.
Eine weitere vorteilhafte Weiterbildung der erfindungsgemäßen Batteriezelle sieht vor, dass die negative Elektrode ein Ableitelement aufweist. Das bedeutet, dass die negative Elektrode neben dem aktiven Material bzw. Insertionsmaterial auch ein Ableitelement umfasst. Dieses Ableitelement dient dazu, den erforderlichen elektronisch leitenden Anschluss des aktiven Materials der negativen Elektrode zu ermöglichen. Hierfür steht das Ableitelement in Kontakt mit

dem an der Elektrodenreaktion der negativen Elektrode beteiligten aktiven Material. Dieses Ableitelement kann planar in Form eines dünnen Metallblechs oder einer dünnen Metallfolie ausgebildet sein. Die dünne Metallfolie weist vorzugsweise eine durchbrochene bzw. netzartige Struktur auf. Das planare Ableitelement kann auch aus einer mit Metall beschichtetet Kunststofffolie bestehen. Diese Metallbeschichtungen weisen eine Dicke im Bereich von 0,1 μm bis 20μm auf. Das aktive Material der negativen Elektrode ist vorzugsweise auf die Oberfläche des dünnen Metallblechs, der dünnen Metallfolie oder der mit Metall beschichteten Kunststofffolie aufgebracht. Das aktive Material kann auf der Vorder- und/oder der Rückseite des planaren Ableitelements aufgebracht sein. Derartige planare Ableitelemente weisen eine Dicke im Bereich von 5 μm bis 50 μm auf. Eine Dicke des planaren Ableitelements im Bereich von 10 μm bis 30 μm ist bevorzugt. Bei der Verwendung von planaren Ableitelementen kann die negative Elektrode eine Gesamtdicke von mindestens 20 μm, bevorzugt mindestens 40 μm und besonders bevorzugt mindestens 60 μm aufweisen. Die maximalen Dicke beträgt höchstens 200 μm, bevorzugt höchstens 150 μm und besonders bevorzugt höchstens 100 μm. Die flächenspezifische Kapazität der negativen Elektrode weist bei der Verwendung eines planaren Ableitelements bezogen auf die Beschichtung einer Seite vorzugsweise mindestens 0,5 $mAh/cm^2$ auf, wobei folgende Werte in dieser Reihenfolge weiter bevorzugt sind: 1 $mAh/cm^2$, 3 $mAh/cm^2$, 5 $mAh/cm^2$, 10 $mAh/cm^2$, 15 $mAh/cm^2$, 20 $mAh/cm^2$.

Weiterhin besteht auch die Möglichkeit, dass das Ableitelement dreidimensional in Form einer porösen Metallstruktur, insbesondere in Form eines Metallschaums ausgebildet sein kann. Der Begriff "dreidimensionale poröse Metallstruktur" bezeichnet dabei jede aus Metall bestehende Struktur, die sich nicht nur wie das dünne Metallblech bzw. die Metallfolie über Länge und Breite der flächigen Elektrode erstreckt, sondern auch über deren Dickendimension. Die dreidimensionale poröse Metallstruktur ist derartig porös, dass das aktive Material der negativen Elektrode in die Poren der Metallstruktur eingearbeitet werden kann. Bei der Menge an eingearbeitetem bzw. aufgebrachten aktivem Material handelt es sich um die Beladung der negativen Elektrode. Wenn das Ableitelement dreidimensional in Form einer porösen Metallstruktur, insbesondere in Form eines Metallschaums ausgebildet ist, dann weist die negative Elektrode vorzugsweise eine Dicke von mindestens 0,2 mm, bevorzugt mindestens 0,3 mm, weiter bevorzugt mindestens 0,4 mm, weiter bevorzugt mindestens 0,5 mm und besonders bevorzugt mindestens 0,6 mm auf. Die Dicke der Elektroden ist in diesem Fall deutlich größer im Vergleich zu negativen Elektroden, welche bei organischen Lithium-Ionen-Zellen Anwendung finden. Eine weitere vorteilhafte Ausgestaltung sieht vor, dass die flächenspezifische Kapazität der negativen Elektrode bei der Verwendung eines dreidimensionalen Ableitelements, insbesondere in Form eines Metallschaums vorzugsweise mindestens 2,5 $mAh/cm^2$ beträgt, wobei folgende Werte in dieser Reihenfolge weiter bevorzugt sind: 5 $mAh/cm^2$, 15 $mAh/cm^2$, 25 $mAh/cm^2$, 35 $mAh/cm^2$, 45 $mAh/cm^2$, 55 $mAh/cm^2$, 65 $mAh/cm^2$, 75 $mAh/cm^2$. Wenn das Ableitelement dreidimensional in Form einer porösen Metallstruktur, insbesondere in Form eines Metallschaums ausgebildet ist, beträgt die Menge des aktiven Materials der negativen Elektrode, d.h. die Beladung der Elektrode, bezogen auf ihre Fläche, mindestens 10 $mg/cm^2$, bevorzugt mindestens 20 $mg/cm^2$, weiter bevorzugt mindestens 40 $mg/cm^2$, weiter bevorzugt mindestens 60 $mg/cm^2$, weiter bevorzugt mindestens 80 $mg/cm^2$ und besonders bevorzugt mindestens 100 $mg/cm^2$. Diese Beladung der negativen Elektrode wirkt sich positiv auf den Ladevorgang sowie den Entladevorgang der wiederaufladbaren Batteriezelle aus.

Die negative Elektrode weist in einer weiteren vorteilhaften Weiterbildung der erfindungsgemäßen Batteriezelle zumindest ein Bindemittel auf. Dieses Bindemittel ist vorzugsweise ein fluoriertes Bindemittel, insbesondere ein Polyvinylidenfluorid und/oder ein Terpolymer, das aus Tetrafluorethylen, Hexafluorpropylen und Vinylidenfluorid ausgebildet ist. Es kann jedoch auch ein Bindemittel sein, welches aus einem Polymer besteht, das aus monomeren Struktureinheiten einer konjugierten Carbonsäure oder aus dem Alkali-, Erdalkali- oder Ammoniumsalz dieser konjugierten Carbonsäure oder aus einer Kombination daraus aufgebaut ist. Weiterhin kann das Bindemittel auch aus einem Polymer bestehen, das auf monomeren Styrol- und Butadien-Struktureinheiten basiert. Außerdem kann das Bindemittel auch ein Bindemittel aus der Gruppe der Carboxymethylcellulosen sein. Das Bindemittel liegt in der negativen Elektrode vorzugsweise in einer Konzentration von höchstens 20 Gew%, weiter bevorzugt höchstens 15 Gew%, weiter bevorzugt höchstens 10 Gew%, weiter bevorzugt höchstens 7 Gew%, weiter bevorzugt höchstens 5 Gew% und besonders bevorzugt höchstens 2 Gew% bezogen auf das Gesamtgewicht der negativen Elektrode vor.

Die negative Elektrode weist in einer weiteren vorteilhaften Weiterbildung der erfindungsgemäßen Batteriezelle zumindest ein Leitfähigkeitsadditiv auf. Das Leitfähigkeitsadditiv sollte bevorzugt ein geringes Gewicht, eine hohe chemische Beständigkeit und eine hohe spezifische Oberfläche besitzen, Beispiele für Leitfähigkeitsadditive sind partikulärer Kohlenstoff (carbon black, Super P, acetylen black), faserartiger Kohlenstoff (CarbonNanoTubes CNT, Kohlenstoff(nano)fasern), feinverteilte Graphite und Graphen(-Nanosheets).

Aufbau der wiederaufladbaren Batteriezelle

Nachfolgend sind vorteilhafte Weiterbildungen der erfindungsgemäßen wiederaufladbaren Batteriezelle im Hinblick auf deren Aufbau beschrieben:
Um die Funktion der wiederaufladbaren Batteriezelle weiter zu verbessern, sieht eine weitere vorteilhafte Weiterbildung der erfindungsgemäßen wiederaufladbaren Batteriezelle vor, dass die wiederaufladbaren Batteriezelle mehrere negative

Elektroden und mehrere positive Elektroden umfasst, die alternierend gestapelt in dem Gehäuse angeordnet sind. Hierbei sind die positiven Elektroden und die negativen Elektroden vorzugsweise jeweils durch Separatoren voneinander elektrisch getrennt.

Der Separator kann aus einem Vlies, einer Membran, einem Gewebe, einem Gewirke, einem organischen Material, einem anorganischen Material oder aus einer Kombination hiervon ausgebildet sein. Organische Separatoren können aus unsubstituierten Polyolefinen (z.B. Polypropylen oder Polyethylen), partiell bis vollständig halogensubstituierten Polyolefinen (z.B. partiell bis ganz fluorsubstituiert, insbesondere PVDF, ETFE, PTFE), Polyestern, Polyamiden oder Polysulfonen bestehen. Separatoren, die eine Kombination von organischen und anorganischen Materialien enthalten, sind zum Beispiel Glasfaser-Textilmaterialien, bei denen die Glasfasern mit einer geeigneten Polymeren Beschichtung versehen sind. Die Beschichtung enthält vorzugsweise ein fluorhaltiges Polymer wie beispielsweise Polytetrafluorethylen (PTFE), Ethylen-Tetrafluorethylen (ETFE), Perfluorethylenpropylen (FEP), THV (Terpolymer aus Tetrafluorethylen, Hexafluorethylen und Vinylidenfluorid), ein Perfluoralkoxy-Polymer (PFA), Aminosilan, Polypropylen oder Polyethylen (PE). Der Separator kann im Gehäuse der wiederaufladbaren Batteriezelle auch gefaltet vorliegen, beispielsweise in Form eines sogenannten "Z-Foldings". Bei diesem Z-Folding ist ein streifenförmiger Separator durch bzw. um die Elektroden z-artig gefaltet. Weiterhin kann der Separator auch als Separatorpapier ausgebildet sein.

Es liegt auch im Rahmen der Erfindung, dass der Separator als Umhüllung ausgebildet sein kann, wobei jede positive Elektrode oder jede negative Elektrode von der Umhüllung umhüllt ist. Die Umhüllung kann aus einem Vlies, einer Membran, einem Gewebe, einem Gewirke, einem organischen Material, einem anorganischen Material oder aus einer Kombination hiervon ausgebildet sein.

Eine Umhüllung der positiven Elektrode führt zu einer gleichmäßigeren Ionenwanderung und Ionenverteilung in der wiederaufladbaren Batteriezelle. Je gleichmäßiger die Ionenverteilung, insbesondere in der negativen Elektrode ist, desto höher kann die mögliche Beladung der negativen Elektrode mit aktivem Material und infolgedessen die nutzbare Kapazität der wiederaufladbaren Batteriezelle sein. Gleichzeitig werden Risiken vermieden, die mit einer ungleichmäßigen Beladung und einer daraus resultierenden Abscheidung des aktiven Metalls verbunden sein können. Diese Vorteile wirken sich vor allem aus, wenn die positiven Elektroden der wiederaufladbaren Batteriezelle mit der Umhüllung umhüllt sind.

Die Flächenmaße der Elektroden und der Umhüllung können vorzugsweise solcherart aufeinander abgestimmt sein, dass die Außenabmessungen der Umhüllung der Elektroden und die Außenabmessungen der nicht umhüllten Elektroden mindestens in einer Dimension übereinstimmen.

Die Flächenausdehnung der Umhüllung kann vorzugsweise größer als die Flächenausdehnung der Elektrode sein. In diesem Fall erstreckt sich die Umhüllung über eine Begrenzung der Elektrode hinaus. Zwei die Elektrode beidseitig bedeckende Schichten der Umhüllung können daher am Rand der positiven Elektrode durch eine Randverbindung miteinander verbunden werden.

In einer weiteren vorteilhaften Ausgestaltung der erfindungsgemäßen wiederaufladbaren Batteriezelle weisen die negativen Elektroden eine Umhüllung auf, während die positiven Elektroden keine Umhüllung haben.

Weitere vorteilhafte Eigenschaften der Erfindung werden nachfolgend anhand von Figuren, Beispielen und Experimenten näher beschrieben und erläutert.

Figur 1: zeigt ein erstes Ausführungsbeispiel einer erfindungsgemäßen wiederaufladbaren Batteriezelle in einer Querschnittsdarstellung;

Figur 2: zeigt eine elektronenmikroskopische Aufnahme der dreidimensionalen porösen Struktur des Metallschaums des ersten Ausführungsbeispiels aus Figur 1 als Detaildarstellung;

Figur 3: zeigt ein zweites Ausführungsbeispiel einer erfindungsgemäßen wiederaufladbaren Batteriezelle in einer Querschnittsdarstellung;

Figur 4: zeigt ein Detail des zweiten Ausführungsbeispiels aus Figur 3;

Figur 5: zeigt ein drittes Ausführungsbeispiel der erfindungsgemäßen wiederaufladbaren Batteriezelle in einer Explosionsdarstellung;

Figur 6: zeigt die Entladekapazität als Funktion der Zykelzahl von Test-Vollzellen, die Lithiumnickelmangancobaltoxide (NMC) der Zusammensetzung $LiNi_{0.6}Mn_{0.2}Co_{0,2}O_2$ (NMC622) und $LiNi_{0.8}Mn_{0.1}Co_{0,1}O_2$ (NMC811) als aktives Material der positiven Elektrode enthalten;

Figur 7: zeigt die Entladekapazität als Funktion der Zykelzahl von Test-Vollzellen, die Lithiumkobaltoxid $UCoO_2$ (LCO) als aktives Material der positiven Elektrode enthalten, wobei eine Referenz-Test-Vollzelle mit dem

Referenzelektrolyten befüllt ist und eine Test-Vollzelle mit dem Elektrolyten 1 aus Beispiel 2 befüllt ist;

Figur 8: zeigt die Entladekapazität als Funktion der Zykelzahl von Test-Vollzellen, die Lithiumnickelmangancobaltoxid (NMC) der Zusammensetzung $LiNi_{0.6}Mn_{0.2}Co_{0,2}O_2$ (NMC622) als aktives Material der positiven Elektrode enthalten, wobei eine Referenz-Test-Vollzelle mit dem Referenzelektrolyten befüllt ist und eine Test-Vollzelle mit dem Elektrolyten 1 aus Beispiel 2 befüllt ist;

Figur 9: zeigt die Entladekapazität als Funktion der Zykelzahl einer Test-Tollzelle mit einem Metalloxid der Zusammensetzung $Li_{1.16}Mn_{0.61}N_{0.15}Co_{0.16}O_2$ als aktives Material der positiven Elektrode, wobei die Ladeschlussspannung 4,8 Volt beträgt;

Figur 10: zeigt den Potentialverlauf in Volt [V] als Funktion der prozentualen Ladung von Zyklus 1 und den Zyklus 2 einer Test-Vollzelle mit einem Metalloxid der Zusammensetzung $Li_{1.16}Mn_{0.61}Ni_{0.15}Co_{0.16}O_2$ als aktives Material der positiven Elektrode;

Figur 11: zeigt das Potential in [V] von drei Test-Vollzellen, die mit den Elektrolyten 1, 3 und 4 aus Beispiel 2 befüllt wurden, beim Laden einer negativen Elektrode als Funktion der Kapazität, die bezogen ist auf die theoretische Kapazität der negativen Elektrode, während einer Deckschichtbildung auf der negativen Elektrode.

Figur 12: zeigt den Potentialverlauf bei der Entladung in Volt als Funktion der prozentualen Ladung von drei Test-Vollzellen, die mit den Elektrolyten 1, 3 und 4 aus Beispiel 2 befüllt wurden und Lithiumnickelmangancobaltoxid (NMC) als aktives Elektrodenmaterial enthielten;

Figur 13: zeigt die Leitfähigkeit in [mS/cm] des Elektrolyten 1 aus Beispiel 2 in Abhängigkeit von der Konzentration der Verbindung 1;

Figur 14: zeigt die Leitfähigkeit in [mS/cm] des Elektrolyten 3 aus Beispiel 2 in Abhängigkeit von der Konzentration der Verbindung 3; und

Figur 15: zeigt die Leitfähigkeit in [mS/cm] des Elektrolyten 4 aus Beispiel 2 in Abhängigkeit von der Konzentration der Verbindung 4;

Figur 1 zeigt ein erstes Ausführungsbeispiel einer erfindungsgemäßen wiederaufladbaren Batteriezelle 2 in Querschnittsdarstellung. Diese wiederaufladbare Batteriezelle 2 ist als prismatische Zelle ausgebildet und weist unter anderem ein Gehäuse 1 auf. Dieses Gehäuse 1 umschließt eine Elektrodenanordnung 3, die drei positive Elektroden 4 und vier negative Elektroden 5 umfasst. Die positiven Elektroden 4 und die negativen Elektroden 5 sind in der Elektrodenanordnung 3 alternierend gestapelt angeordnet. Das Gehäuse 1 kann jedoch auch mehr positive Elektroden 4 und/oder negative Elektroden 5 aufnehmen. Generell ist es bevorzugt, wenn die Anzahl der negativen Elektroden 5 um eins größer als die Anzahl der positiven Elektroden 4 ist. Dies hat zur Folge, dass die äußeren Stirnflächen des Elektrodenstapels von den Elektrodenoberflächen der negativen Elektroden 5 gebildet werden. Die Elektroden 4, 5 sind über Elektrodenanschlüsse 6, 7 mit entsprechenden Anschlusskontakten 9, 10 der wiederaufladbaren Batteriezelle 2 verbunden. Die wiederaufladbare Batteriezelle 2 ist derart mit einem auf $SO_2$-basierenden Elektrolyten gefüllt, dass der Elektrolyt möglichst vollständig in sämtliche Poren bzw. Hohlräume, insbesondere innerhalb der Elektroden 4, 5, eindringt. Der Elektrolyt ist in Figur 1 nicht sichtbar. Im vorliegenden Ausführungsbeispiel enthalten die positiven Elektroden 4 eine Interkalationsverbindung als aktives Material. Bei dieser Interkalationsverbindung handelt es sich um $LiCoO_2$.

Die Elektroden 4, 5 sind im vorliegenden Ausführungsbeispiel flächig ausgebildet, d.h. als Schichten mit einem im Verhältnis zu ihrer Flächenausdehnung geringeren Dicke. Sie sind jeweils durch Separatoren 11 voneinander getrennt. Das Gehäuse 1 der wiederaufladbaren Batteriezelle 2 ist im Wesentlichen quaderförmig ausgebildet, wobei sich die Elektroden 4, 5 und die in Schnittdarstellung gezeigten Wände des Gehäuses 1 senkrecht zu der Zeichenebene erstrecken und im Wesentlichen gerade und eben geformt sind. Die wiederaufladbare Batteriezelle 2 kann jedoch auch als Wickelzelle ausgebildet sein, bei welcher die Elektroden aus dünnen Lagen bestehen, die zusammen mit einem Separatormaterial aufgewickelt sind. Die Separatoren 11 trennen einerseits die positive Elektrode 4 und die negative Elektrode 5 räumlich und elektrisch und sind andererseits unter anderem für die Ionen des aktiven Metalls durchlässig. Auf diese Weise entstehen große elektrochemisch wirksame Oberflächen, die eine entsprechend hohe Stromausbeute ermöglichen.

Die Elektroden 4, 5 weisen weiterhin ein Ableitelement auf, welches dazu dient, den erforderlichen elektronisch leitenden Anschluss des aktiven Materials der jeweiligen Elektrode zu ermöglichen. Dieses Ableitelement steht in Kontakt zu dem an der Elektrodenreaktion der jeweiligen Elektrode 4, 5 beteiligten aktiven Material (in Figur 1 nicht dargestellt).

Das Ableitelement ist in Form eines porösen Metallschaums 18 ausgebildet. Der Metallschaum 18 erstreckt sich über die Dickendimension der Elektroden 4, 5. Das aktive Material der positiven Elektroden 4 und der negativen Elektroden 5 ist jeweils in die Poren dieses Metallschaums 18 eingearbeitet, sodass es dessen Poren über die gesamte Dicke der Metallstruktur gleichmäßig füllt. Zur Verbesserung der mechanischen Festigkeit enthalten die positiven Elektroden 4 ein Bindemittel. Bei diesem Bindemittel handelt es sich um ein Fluorpolymer. Die negativen Elektroden 5 enthalten als aktives Material Kohlenstoff in einer als Insertionsmaterial zur Aufnahme von Lithiumionen geeigneten Form. Die Struktur der negativen Elektrode 5 ist ähnlich wie bei der positiven Elektrode 4.

Figur 2 zeigt eine elektronenmikroskopische Aufnahme der dreidimensionalen porösen Struktur des Metallschaums 18 des ersten Ausführungsbeispiels aus Figur 1. Anhand des angegebenen Maßstabes ist zu erkennen, dass die Poren P im Mittel einen Durchmesser von mehr als 100 μm haben, also verhältnismäßig groß sind. Bei diesem Metallschaum handelt es sich um einen Metallschaum aus Nickel.

Figur 3 zeigt ein zweites Ausführungsbeispiel einer erfindungsgemäßen wiederaufladbaren Batteriezelle 20 in Querschnittsdarstellung. Dieses zweite Ausführungsbeispiel unterscheidet sich von dem in Figur 1 gezeigten, ersten Ausführungsbeispiel dadurch, dass die Elektrodenanordnung eine positive Elektrode 23 und zwei negative Elektroden 22 umfasst. Sie sind jeweils durch Separatoren 21 voneinander getrennt und von einem Gehäuse 28 umgeben. Die positive Elektrode 23 weist ein Ableitelement 26 in Form einer planaren Metallfolie auf, auf welche das aktive Material 24 der positiven Elektrode 23 beidseitig aufgebracht ist. Die negativen Elektroden 22 umfassen ebenfalls ein Ableitelement 27 in Form einer planaren Metallfolie, auf welche das aktive Material 25 der negativen Elektrode 22 beidseitig aufgebracht ist. Alternativ können die planaren Ableitelemente der Randelektroden, also der Elektroden, die den Elektrodenstapel abschließen, nur einseitig mit aktivem Material beschichtetet sein. Die nicht-beschichtete Seite zeigt zur Wand des Gehäuses 28. Die Elektroden 22, 23 sind über Elektrodenanschlüsse 29, 30 mit entsprechenden Anschlusskontakten 31, 32 der wiederaufladbaren Batteriezelle 20 verbunden.

Figur 4 zeigt die planare Metallfolie, welche jeweils als Ableitelement 26, 27 für die positive Elektroden 23 und die negativen Elektroden 22 im zweiten Ausführungsbeispiel aus Figur 3 dient. Diese Metallfolie weist eine durchbrochene bzw. netzartige Struktur mit einer Dicke von 20 μm auf.

Figur 5 zeigt ein drittes Ausführungsbeispiel einer erfindungsgemäßen wiederaufladbaren Batteriezelle 40 in Explosionsdarstellung. Dieses dritte Ausführungsbeispiel unterscheidet sich von den beiden zuvor erläuterten Ausführungsbeispielen dadurch, dass die positive Elektrode 44 von einer Umhüllung 13 umhüllt ist. Dabei ist eine Flächenausdehnung der Umhüllung 13 größer als eine Flächenausdehnung der positiven Elektrode 44, deren Begrenzung 14 in Figur 5 als gestrichelte Linie eingezeichnet ist. Zwei, die positive Elektrode 44 beidseitig bedeckende Schichten 15, 16 der Umhüllung 13 sind am umlaufenden Rand der positiven Elektrode 44 durch eine Randverbindung 17 miteinander verbunden. Die beiden negativen Elektroden 45 sind nicht umhüllt. Die Elektroden 44 und 45 können über die Elektrodenanschlüsse 46 und 47 kontaktiert werden.

Beispiel 1: Herstellung eines Referenzelektrolyten

Ein für die nachfolgend beschriebenen Beispiele verwendeter Referenzelektrolyt wurde nach dem in der Patentschrift EP 2 954 588 B1 beschriebenen Verfahren hergestellt. Zunächst wurde Lithiumchlorid (LiCl) unter Vakuum bei 120 °C für drei Tage getrocknet (im Nachfolgenden bezeichnet als [V8]). Aluminiumpartikel (Al) wurden unter Vakuum für zwei Tage bei 450 °C getrocknet. LiCl, Aluminiumchlorid ($AlCl_3$) und Al wurden in einem Molverhältnis $AlCl_3$:LiCl:Al von 1:1,06:0,35 in einer Glasflasche mit einer Öffnung, die den Austritt von Gas ermöglicht, miteinander vermischt. Daraufhin wurde diese Mischung stufenweise zur Herstellung einer Salzschmelze wärmebehandelt. Nach dem Abkühlen wurde die gebildete Salzschmelze gefiltert, danach auf Raumtemperatur abgekühlt und letztlich $SO_2$ zugeführt bis das gewünschte molare Verhältnis von $SO_2$ zu $LiAlCl_4$ gebildet wurde. Der so gebildete Referenzelektrolyt hatte die Zusammensetzung $LiAlCl_4$ * x $SO_2$, wobei x abhängig von der zugeführten Menge an $SO_2$ ist.

Beispiel 2: Herstellung von vier Ausführungsbeispielen 1, 2, 3 und 4 eines auf $SO_2$-basierenden Elektrolyten für eine Batteriezelle

Für die nachfolgend beschriebenen Experimente wurden vier Ausführungsbeispiele 1, 2, 3 und 4 des auf $SO_2$-basierenden Elektrolyten hergestellt (nachfolgend bezeichnet als Elektrolyte 1, 2, 3 und 4). Hierfür wurden zunächst vier unterschiedliche erste Leitsalze nach Formel (I) gemäß einem in den folgenden Dokumenten [V9], [V10] und [V11] beschriebenen Herstellungsverfahren hergestellt:

[V9] "I. Krossing, Chem. Eur. J. 2001, 7, 490;
[V10] S. M. Ivanova et al., Chem. Eur. J. 2001, 7, 503;
[V11] Tsujioka et al., J. Electrochem. Soc., 2004, 151, A1418"

Diese vier unterschiedlichen, ersten Leitsalze nach Formel (I) werden nachfolgend als Verbindungen 1, 2, 3 und 4 bezeichnet. Sie stammen aus der Familie der Polyfluoroalkoxyaluminate und wurden gemäß folgender Reaktionsgleichung ausgehend von $LiAlH_4$ und dem entsprechenden Alkohol R-OH mit $R^1=R^2=R^3=R^4$ in Hexan hergestellt.

$$LiAlH_4 + 4\ HO\text{-}R \xrightarrow{\text{Hexan}} LiAl(OR)_4 + 4\ H_2$$

Hierdurch wurden die nachfolgend darstellten Verbindungen 1, 2, 3 und 4 mit den Summen- bzw. Strukturformeln gebildet:

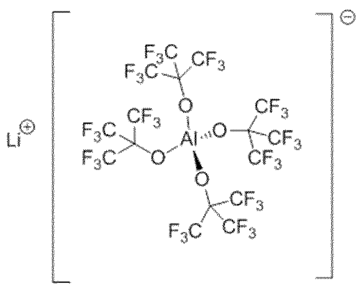

Li [Al(OC(CF₃)₃)₄]

Verbindung 1

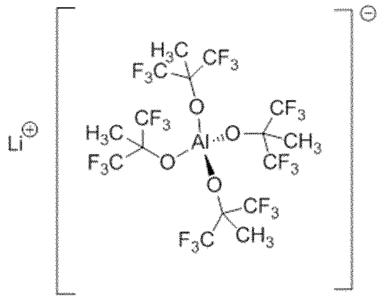

Li [Al(OC(CH₃)(CF₃)₂)₄]

Verbindung 2

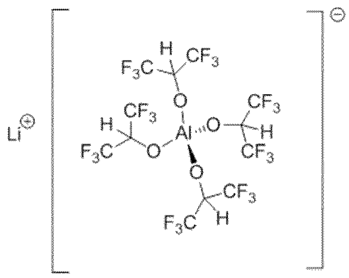

Li [Al(OCH(CF₃)₂)₄]

Verbindung 3

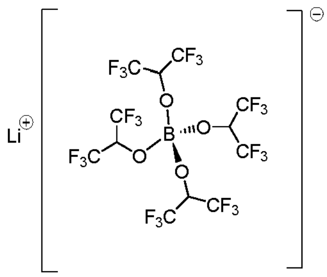

Li[B(OCH(CF₃)₂)₄]

Verbindung 4

Zur Aufreinigung wurden die Verbindungen 1, 2, 3 und 4 zunächst umkristallisiert. Hierdurch wurden Reste des Edukts $LiAlH_4$ aus dem ersten Leitsalz entfernt, da dieses Edukt möglicherweise mit eventuell vorhandenen Wasserspuren in $SO_2$ zur Funkenbildung führen könnte.

Danach erfolgte die Lösung der Verbindungen 1, 2, 3 und 4 in $SO_2$. Hierbei wurde herausgefunden, dass sich die Verbindungen 1, 2, 3 und 4 in $SO_2$ gut lösen.

Die Herstellung der Elektrolyte 1, 2, 3 und 4 wurde bei Tieftemperatur oder unter Druck gemäß den nachfolgend aufgelisteten Verfahrensschritten 1 bis 4 durchgeführt:

1) Vorlage der jeweiligen Verbindung 1, 2, 3 und 4 in jeweils einem Druckkolben mit Steigrohr,
2) Evakuieren der Druckkolben,
3) Einströmen von flüssigem $SO_2$ und
4) Wiederholung der Schritte 2 + 3 bis die Zielmenge an $SO_2$ zugegeben worden ist.

Die jeweilige Konzentration der Verbindungen 1, 2, 3 und 4 in den Elektrolyten 1, 2, 3 und 4 betrug 0,6 mol/l (Stoffmengenkonzentration bezogen auf 1 Liter des Elektrolyten), sofern in der Experimentbeschreibung nichts Anderes beschrieben ist. Mit den Elektrolyten 1, 2, 3 und 4 und dem Referenzelektrolyten wurden die nachfolgend beschriebenen Experimente durchgeführt.

Beispiel 3: Herstellung von Test-Vollzellen

Die in den nachfolgend beschriebenen Experimenten verwendeten Test-Vollzellen sind wiederaufladbare Batteriezellen mit zwei negativen Elektroden und einer positiven Elektrode, welche jeweils durch einen Separator getrennt waren. Die positiven Elektroden wiesen ein aktives Material, einen Leitfähigkeitsvermittler und ein Bindemittel auf. Die negativen Elektroden enthielten Graphit als aktives Material und ebenfalls ein Bindemittel. Wie im Experiment erwähnt können die negativen Elektroden auch ein Leitfähigkeitsadditiv enthalten. Das aktive Material der positiven Elektrode ist im jeweiligen Experiment benannt. Das Ableitelement der positiven und der negativen Elektrode bestand aus Nickel. Unter anderem ist das Ziel der Untersuchungen, die Verwendung von verschiedenen aktiven Materialien für die positive Elektrode in einer erfindungsgemäßen Batteriezelle in Kombination mit dem erfindungsgemäßen Elektrolyten zu bestätigen. Tabelle 3 zeigt, welche aktiven Materialien für die positive Elektrode untersucht wurden und welche oberen Potentiale dabei verwendet wurden.

Tabelle 3: Untersuchte aktive Materialien

| Experiment | Aktives Material | Oberes Potential |
|---|---|---|
| 1 | Lithiumnickelmangancobaltoxid (NMC) der Zusammensetzung $LiNi_{0.6}Mn_{0.2}Co_{0,2}O_2$ (NMC622) und $LiNi_{0.8}Mn_{0.1}Co_{0,1}O_2$ (NMC811) | 4,4 V<br>4,6 V<br>5,0 V |
| 2 | Lithiumkobaltoxid $UCoO_2$ (LCO) | 4,4 V |
| 3 | Lithiumnickelmangancobaltoxid (NMC) der Zusammensetzung $LiNi_{0.6}Mn_{0.2}Co_{0,2}O_2$ (NMC622) | 4,4 V |
| 4 | Lithium-Mangan-reiches Metalloxid der Zusammensetzung $Li_{1.16}Mn_{0.61}Ni_{0.15}C0_{0.16}O_2$ | 4,8 V |

Die Test-Vollzellen wurden jeweils mit dem für die Experimente benötigten Elektrolyten, d. h. entweder mit dem Referenzelektrolyten oder den Elektrolyten 1, 2, 3 oder 4 befüllt.

Für jedes Experiment wurden mehrere, d.h. zwei bis vier identische Test-Vollzellen hergestellt. Die in den Experimenten vorgestellten Ergebnisse sind jeweils Mittelwerte aus den für die identischen Test-Vollzellen erhaltenen Messwerte.

Beispiel 4: Messung in Test-Vollzellen

Bei Messungen in Test-Vollzellen wird z.B. die Entladekapazität über die Zykelzahl bestimmt werden. Dazu werden die Test-Vollzellen mit einer bestimmten Ladestromstärke bis zu einem bestimmten oberen Potential geladen. Das entsprechende obere Potential wird so lange gehalten, bis der Ladestrom auf einen bestimmten Wert abgesunken ist. Danach erfolgt die Entladung mit einer bestimmten Entladestromstärke bis zu einem bestimmten Entladepotential. Bei dieser Lademethode spricht man von einer sogenannten I/U-Ladung. Dieser Vorgang wird je nach gewünschter Zykelzahl wiederholt. Die oberen Potentiale bzw. das Entladepotential und die jeweiligen Lade- bzw. Entladestromstärken sind in den Experimenten benannt. Auch der Wert, auf den der Ladestrom abgesunken sein muss, ist in den Experimenten beschrieben.

Der Begriff "oberes Potential" wird Synonym zu den Begriffen "Ladepotential" "Ladespannung", Ladeschlussspannung" und "obere Potentialgrenze" verwendet. Die Begriffe bezeichnen die Spannung/ das Potential, bis zu welchem eine Zelle oder Batterie mit Hilfe einer Batterieladevorrichtung geladen wird.

Bevorzugt erfolgt die Ladung der Batterie mit einer Stromrate von C/2 und bei einer Temperatur von 22°C. Mit einer Lade- bzw. Entladerate von 1C wird definitionsgemäß die Nennkapazität einer Test-Vollzelle in einer Stunde gebzw. entladen. Eine Laderate von C/2 bedeutet demnach eine Ladezeit von 2 Stunden.

Der Begriff "Entladepotential" wird Synonym zum Begriff "untere Zellspannung" verwendet. Damit wird die Spannung/ das Potential bezeichnet, bis zu welchem eine Zelle oder Batterie mit Hilfe einer Batterieladevorrichtung entladen wird.

Bevorzugt erfolgt die Entladung der Batterie mit einer Stromrate von C/2 und bei einer Temperatur von 22°C.

Die Entladekapazität wird aus dem Entladestrom und der Zeit, bis die Kriterien zur Beendigung der Entladung erfüllt sind, erhalten. Die dazugehörigen

Figuren zeigen Mittelwerte für die Entladekapazitäten als Funktion der Zykelzahl. Diese Mittelwerte der Entladekapazitäten werden jeweils in Prozent der Nennkapazität ausgedrückt, oft normiert auf die maximale Kapazität, die im jeweiligen Versuch erreicht wurde. Die Nennkapazität wird erhalten, indem von der theoretischen Kapazität der

positiven Elektrode diejenige Kapazität subtrahiert wird, die im ersten Zyklus für die Bildung einer Deckschicht auf der negativen Elektrode verbraucht wird. Diese Deckschicht wird beim ersten Laden der Test-Vollzelle auf der negativen Elektrode gebildet. Für diese Deckschichtbildung werden Lithiumionen irreversibel verbraucht, sodass der jeweiligen Test-Vollzelle weniger zykelbare Kapazität für die Folgezyklen zur Verfügung steht.

Experiment 1: Test-Vollzellen mit Lithiumnickelmangancobaltoxid (NMC) der Zusammensetzung $LiNi_{0.6}Mn_{0.2}C0_{0,2}O_2$ (NMC622) und $LiNi_{0.8}Mn_{0.1}Co_{0,1}O_2$ (NMC811) als aktive Elektrodenmaterialien

Mit positiven Elektroden aus Lithiumnickelmangancobaltoxid der Zusammensetzung $LiNi_{0.6}Mn_{0.2}Co_{0,2}O_2$ (NMC622) und $LiNi_{0.8}Mn_{0.1}Co_{0,1}O_2$ (NMC811) als aktive Elektrodenmaterialien wurde ein Experiment in Test-Vollzellen gemäß Beispiel 3 durchgeführt. Verbindungen der Zusammensetzung NMC können in einer Batteriezelle mit einem geeigneten Elektrolyten bis zu hohen oberen Potentialen geladen und wieder entladen werden. Die Test-Vollzellen wurden mit dem in Beispiel 2 beschriebenen Elektrolyten 1 befüllt. Drei Test-Vollzellen enthielten positive Elektroden mit der Verbindung NMC622, in einer Test-Vollzelle wurde NMC811 als aktives Hochvoltkathodenmaterial verwendet.

Zur Ermittlung der Entladekapazitäten (siehe Beispiel 4) wurden die Test-Vollzellen mit einer Stromstärke von 50 mA bis zu unterschiedlichen oberen Potentialen geladen. Das entsprechende obere Potential wurde so lange gehalten, bis der Ladestrom auf 40 mA abgesunken war. Danach erfolgte die Entladung mit einer Stromstärke von 50 mA bis zu einem Entladepotential von 2,5 Volt. Die oberen Potentiale lagen für die drei NMC622-Test-Vollzellen bei 4,4 Volt, bei 4,6 Volt bzw. bei 5,0 Volt. Das obere Potential der NMC811-Test-Vollzelle lag bei 4,6 Volt.

Figur 6 zeigt Mittelwerte für die Entladekapazitäten der vier Test-Vollzellen als Funktion der Zykelzahl. Diese Mittelwerte der Entladekapazitäten werden jeweils in Prozent der Nennkapazität [% Nennkapazität] ausgedrückt. Der Verlauf der Entladekapazitäten der vier Test-Vollzellen zeigt einen gleichmäßigen leicht abnehmenden Verlauf. Die Kapazitätsabnahme ist etwas größer bei denjenigen Test-Vollzellen, die mit einem höheren oberen Potential gezykelt wurden. In der oben benannten Veröffentlichung [V3] aus dem Stand der Technik wurden ähnliche Experimente mit organischen Lithium-Ionen-Zellen mit NMC-Kathoden und dem organischen Elektrolyt LP57durchgeführt, der die Zusammensetzung 1 M LiPF6 in EC:EMC 3:7 aufweist. Tabelle 4 vergleicht die Ergebnisse des Experiments 1 mit denen des Experiments aus der [V3].

Im Vergleich mit dem Stand der Technik werden die herausragenden Eigenschaften der erfindungsgemäßen Batteriezellen deutlich. Das Kathodenmaterial NMC(622) in Batteriezellen aus dem Stand der Technik zeigt bei einem oberen Potential von 4,4 Volt im 300. Zyklus nur eine Entladekapazität von 94% und bei einem oberen Potential von 4,6 Volt nur noch eine Entladekapazität von 39%. Im Vergleich dazu zeigt eine erfindungsgemäße Zelle mit NMC(622)-Kathodenmaterial bei 4,4 Volt eine Entladekapazität von 97% im 300. Zyklus, bei 4,6 Volt eine Entladekapazität von 91% und bei einem sehr hohen oberen Potential von 5,0 Volt sogar noch einen Wert von 84%.

Das Kathodenmaterial NMC(811) zeigt in den Messungen aus dem Stand der Technik bei einem oberen Potential von 4,4 Volt eine Entladekapazität von 66% im 300. Zyklus. Das gleiche Material zeigt in einer erfindungsgemäßen Batteriezelle bei einem oberen Potential von 4,6 Volt noch eine hohe Entladekapazität von 90%.

Tabelle 4: Vergleich der Ergebnisse von Experiment 1 mit dem Stand der Technik aus Dokument [V3]

| Oberes Potential: | 4.4 V | | 4.6 V | | 5.0 V | |
|---|---|---|---|---|---|---|
| | Entladekapazität [%] Zyklus 300 | | Entladekapazität [%] Zyklus 300 | | Entladekapazität [%] Zyklus 300 | |
| KathodenMaterial: | St. d. Technik (organischer Elektrolyt; 1 M LiPF6 in EC:EMC 3:7) | Erfindung Experiment 1 | St. d. Technik (organischer Elektrolyt; 1 M LiPF6 in EC:EMC 3:7) | Erfindung Experiment 1 | St. d. Technik (organischer Elektrolyt; 1 M LiPF6 in EC:EMC 3:7) | Erfindung Experiment 1 |
| **NMC (622)** | 94% | **97%** | 39% | **91%** | - | **84%** |
| **NMC (811)** | 66% | - | - | **90%** | - | - |

Experiment 2: Test-Vollzellen mit Lithiumkobaltoxid $UCoO_2$ (LCO) als aktives Elektrodenmaterial

In einem weiteren Experiment wurden zwei Test-Vollzellen gemäß Beispiel 3 hergestellt. Das aktive Material der positiven Elektroden (Kathoden) bestand aus Lithiumkobaltoxid (LCO).

Eine erste Test-Vollzelle wurde für dieses Experiment 2 mit einem Referenzelektrolyten gemäß Beispiel 1 befüllt. Der Elektrolyt hatte die Zusammensetzung $LiAlCl_4*6\ SO_2$. Die zweite Test-Vollzelle wurde mit dem in Beispiel

2 beschriebenen Elektrolyten 1 befüllt. Zur Ermittlung der Entladekapazitäten (siehe Beispiel 4) wurden die Test-Vollzellen entsprechend der Beschreibung in Experiment 1 gezykelt. Das obere Potential der Batteriezellen mit Referenzelektrolyt lag bei 4,2 Volt, das der erfindungsgemäßen Zellen bei 4,4 Volt. Figur 7 zeigt Mittelwerte für die Entladekapazitäten der zwei Test-Vollzellen als Funktion der Zykelzahl. Diese Mittelwerte der Entladekapazitäten werden jeweils in Prozent der Nennkapazität [% Nennkapazität] ausgedrückt. Der Verlauf der Entladekapazitäten der zwei Test-Vollzellen zeigt ein völlig unterschiedliches Verhalten.

Die Entladekapazität der Test-Vollzelle mit Referenzelektrolyt beginnt ab dem 45. Zyklus zu steigen und fällt dann ab dem 55. Zyklus steil ab, bis bei Zyklus 80 eine Kapazität von nur noch 50% erreicht wird. Diese Test-Vollzelle ist irreversibel geschädigt. Eine Batteriezelle, die eine Kombination aus einer Elektrode mit Lithiumkobaltoxid als aktivem Material und dem Referenzelektrolyt enthält, ist bei einem oberen Potential von 4,2 Volt nicht stabil.

Die erfindungsgemäße Zelle zeigt ein sehr stabiles Verhalten der Entladekapazität. Bei Zyklus 200 ist wird noch eine Kapazität von 97% erhalten. In der Messung musste aufgrund einer Gerätewartung zwischen Zyklus 125 und 126 eine Pause eingelegt werden. Die Kapazität nach der Pause war um 2 % erhöht, weswegen der Verlauf der Entladekapazität an dieser Stelle ein lokales Maximum aufweist.

Experiment 3: Test-Vollzellen mit Lithiumnickelmangancobaltoxid (NMC) der Zusammensetzung $LiNi_{0.6}Mn_{0.2}Co_{0,2}O_2$ (NMC622) als aktives Elektrodenmaterial

Das Experiment 2 wurde mit Lithiumnickelmangancobaltoxid (NMC) der Zusammensetzung $LiNi_{0.6}Mn_{0.2}Co_{0,2}O_2$ (NMC622) als aktivem Material der positiven Elektroden (Kathoden) wiederholt. Es wurden wiederum zwei Test-Vollzellen gemäß Beispiel 3 hergestellt.

Eine erste Test-Vollzelle wurde mit einem Referenzelektrolyten gemäß Beispiel 1 befüllt. Der Elektrolyt hatte die Zusammensetzung $LiAlCl_4$*6 $SO_2$. Die zweite Test-Vollzelle wurde mit dem in Beispiel 2 beschriebenen Elektrolyten 1 befüllt. Zur Ermittlung der Entladekapazitäten (siehe Beispiel 4) wurden die Test-Vollzellen entsprechend der Beschreibung in Experiment 1 gezykelt. Das obere Potential der ersten Test-Vollzelle mit Referenzelektrolyt lag bei 4,2 Volt, das der zweiten ersten Test-Vollzelle bei 4,4 Volt.

Figur 8 zeigt Mittelwerte für die Entladekapazitäten dieser zwei Test-Vollzellen als Funktion der Zykelzahl. Diese Mittelwerte der Entladekapazitäten werden jeweils in Prozent der Nennkapazität [% Nennkapazität] ausgedrückt. Auch hier zeigt der Verlauf der Entladekapazitäten der zwei Test-Vollzellen ein völlig unterschiedliches Verhalten.

Die Entladekapazität der ersten Test-Vollzelle mit Referenzelektrolyt beginnt nach vorherigen Schwankungen ab dem 75. Zyklus stetig zu fallen. Bei Zyklus 130 wird eine Kapazität von nur noch 86% erreicht. Die erste Test-Vollzelle ist irreversibel geschädigt. Eine Batteriezelle, die eine Kombination aus einer Elektrode mit Lithiumnickelmangancobaltoxid (NMC) der Zusammensetzung $LiNi_{0.6}Mn_{0.2}C0_{0,2}O_2$ (NMC622) als aktives Material und den Referenzelektrolyten enthält, ist bei einem oberen Potential von 4,2 Volt nicht stabil.

Die zweite Test-Vollzelle zeigt ein sehr stabiles Verhalten der Entladekapazität. Bei Zyklus 200 ist wird noch eine Kapazität von 97% erhalten.

Experiment 4: Test-Vollzellen mit einem Metalloxid der Zusammensetzung $Li_{1.16}Mn_{0.61}Ni_{0.15}Co_{0.16}O_2$ als aktives Material der positiven Elektrode

Um ein Metalloxid, welches reich an Lithium und Mangan ist, als aktives Elektrodenmaterial zu testen, wurde in einem weiteren Experiment eine Test-Vollzelle gemäß Beispiel 3 hergestellt. Das aktive Material der positiven Elektroden (Kathoden) bestand aus einem Metalloxid der Zusammensetzung $Li_{1.16}Mn_{0.61}Ni_{0.15}Co_{0.16}O_2$, welches reich an Lithium und Mangan ist.

Die Test-Vollzelle wurde mit dem in Beispiel 2 beschriebenen Elektrolyten 1 befüllt. Zur Ermittlung der Entladekapazitäten (siehe Beispiel 4) wurden die Test-Vollzelle mit einer Stromstärke von 100 mA bis zu einem oberen Potential von 4,8 Volt geladen. Das entsprechende obere Potential wurde so lange gehalten, bis der Ladestrom auf 40 mA abgesunken war. Danach erfolgte die Entladung mit einer Stromstärke von 100 mA bis zu einem Entladepotential von 2,0 Volt.

Figur 9 zeigt Mittelwerte für die Entladekapazitäten der Test-Vollzelle als Funktion der Zykelzahl. Diese Mittelwerte der Entladekapazitäten werden jeweils in Prozent der Nennkapazität ausgedrückt [% Nennkapazität]. Die Test-Vollzelle zeigt ein sehr stabiles Verhalten der Entladekapazität. Bei Zyklus 100 ist wird noch eine Kapazität von 90% erhalten.

Figur 10 zeigt den Potentialverlauf in Volt [V] von Zyklus 1 und Zyklus 2 einer Test-Vollzelle mit einem Metalloxid, welches reich an Lithium und Mangan ist. Im ersten Zyklus wird das Metalloxid aktiviert, dadurch werden die für dieses Material typischen hohen spezifischen Kapazitäten ermöglicht.

Der Potentialverlauf wird über der prozentualen Ladung dargestellt, die auf die maximale Ladung der Test-Vollzelle, bezogen ist. Die Test-Vollzelle wurde mit einer Stromstärke von 100 mA bis zu einem oberen Potential von

4,8 V geladen. Das Potential wurde so lange gehalten, bis der Ladestrom auf 40 mA abgesunken war. Danach erfolgte die Entladung mit einer Stromstärke von 100 mA bis zu einem Entladepotential von 2,0 Volt.

Der Potentialverlauf in Zyklus 1 zeigt ein deutlich anderes Verhalten, wie der Potentialverlauf in Zyklus 2. Das beruht auf der in der Literatur bekannten strukturellen Veränderung des Materials. Bei diesem Vorgang finden irreversible Veränderung des Materials statt, so dass es bei der Aktivierung im ersten Zyklus zu einem Verlust an aktiven Lithium-Ionen kommt. Es können nur noch weniger als 90% der Lithium-Ionen wieder in das Gitter eingelagert werden.

In Figur 10 ist deutlich zu sehen, dass es im zweiten Zyklus zu einer Wiedereinlagerung von mehr als 90% kommt und damit die irreversiblen Verluste deutlich geringer sind als in der Literatur beschrieben.

In Zyklus 2 zeigt sich besonders die hohe Potentialstabilität des Elektrolyten insofern, als dass bei einer oberen Ladeschlussspannung von 4,8V auch eine nahezu vollständige Interkalation der Lithium-Ionen im Zyklus 2 stattfindet.

Experiment 5: Test-Vollzellen mit Lithiumnickelmangancobaltoxid (NMC) der Zusammensetzung $LiNi_{0.6}Mn_{0.2}C0_{0,2}O_2$ (NMC622) als aktives Elektrodenmaterial in Kombination mit Elektrolyt 1, Elektrolyt 3 und Elektrolyt 4

Zur Untersuchung der Elektrolyte 1, 3 und 4 in Kombination mit Lithiumnickelmangancobaltoxid (NMC622) als aktives Material der positiven Elektrode wurden verschiedene Experimente durchgeführt. Zum einen wurden die Deckschichtkapazitäten der Elektrolyte 1, 3 und 4 ermittelt und zum anderen die Entladekapazitäten in allen 3 Elektrolyten bestimmt.

Zur Ermittlung der Deckschichtkapazität wurden drei Test-Vollen mit den in Beispiel 2 beschriebenen Elektrolyten 1, 3 und 4 befüllt. Die drei Test-Vollzellen enthielten Lithiumnickelmangancobaltoxid (NMC622) als aktives Material der positiven Elektrode.

Figur 11 zeigt das Potenzial in Volt der Test-Vollzellen beim Laden der negativen Elektrode als Funktion der Kapazität, die bezogen ist auf die theoretische Kapazität der negativen Elektrode. Die zwei dargestellten Kurven zeigen gemittelte Ergebnisse jeweils mehrerer Experimente mit den vorstehend beschriebenen Test-Vollzellen. Zunächst wurden die Test-Vollzellen mit einem Strom von 15 mA geladen, bis eine Kapazität von 125 mAh ($Q_{lad}$) erreicht war. Danach erfolgte die Entladung der Test-Vollzellen mit 15 mA bis zum Erreichen eines Potentials von 2,5 Volt. Dabei erfolgte die Ermittlung der Entladekapazität ($Q_{ent}$).

Die Kapazität in % der Theorie, die zur Bildung der Deckschicht auf der negativen Elektrode verbraucht wurde, berechnet sich gemäß nachfolgend genannter Formel:

$$\text{Deckschichtkapazität} = (Q_{lad}\ (125mAh) - Q_{ent}\ (x\ mAh))\ /\ Q_{NEL}$$

Bei $Q_{NEL}$ handelt es sich um die theoretische Kapazität der verwendeten negativen Elektrode. Die theoretische Kapazität berechnet sich im Fall von Graphit auf einen Wert von 372 mAh/g.

Die ermittelten Deckschichtkapazitäten [in % der Theorie der Kapazität der negativen Elektrode] liegen bei 7,83 % im Elektrolyten 1, bei 17,77 % im Elektrolyten 4 und bei 20,02 % im Elektrolyten 3. Auch mit den etwas höheren Werten der Deckschichtkapazität in den Elektrolyten 3 und 4 ist ein sehr guter Betrieb einer Batteriezelle mit diesen Elektrolyten in Kombination mit der Möglichkeit Hochvoltkathoden bis 5 Volt einzusetzen möglich.

Für die Entladeexperimente wurden drei Test-Vollzellen gemäß Beispiel 3 mit den in Beispiel 2 beschriebenen Elektrolyten 1, 3 und 4 befüllt. Die Test-Vollzellen hatten Lithiumnickelmangancobaltoxid (NMC) als aktives Material der positiven Elektrode. Zur Ermittlung der Entladekapazitäten (siehe Beispiel 4) wurden die Test-Vollzellen mit Stromstärke von 15 mA bis zu einer Kapazität von 125 mAh geladen. Danach erfolgte die Entladung mit einer Stromstärke von 15 mA bis zu einem Entladepotential von 2,5 Volt.

Figur 12 zeigt den Potentialverlauf während der Entladung über der entladenen Ladungsmenge in % [% der maximalen Ladung (Entladung)]. Alle Test-Vollzellen zeigen eine flache Entladekurve, die für einen guten Betrieb einer Batteriezelle notwendig ist.

Experiment 6: Bestimmung von Leitfähigkeiten der Elektrolyte 1, 3 und 4

Zur Bestimmung der Leitfähigkeit wurde der Elektrolyte 1, 3 und 4 mit verschiedenen Konzentrationen der Verbindungen 1, 3 und 4 hergestellt. Für jede Konzentration der verschiedenen Verbindungen wurden die Leitfähigkeiten der Elektrolyten bestimmt, indem ein konduktives Messverfahren verwendet wurde. Dabei wurde nach Temperierung ein Zweielektrodensensor berührend in die Lösung gehalten und in einem Messbereich von 0 - 50 mS/cm gemessen. Bei den Messungen wurde beachtet, dass der Sensor mit der $SO_2$-haltigen Elektrolytlösung reagieren kann.

Figur 13 zeigt die Leitfähigkeit des Elektrolyten 1 in Abhängigkeit der Konzentration der Verbindung 1. Zu sehen ist ein Maximum der Leitfähigkeit bei einer Konzentration der Verbindung 1 von 0,6 mol/L - 0,7 mol/L mit einem Wert von ca. 37,9 mS/cm. Im Vergleich dazu haben die aus dem Stand der Technik bekannten, organischen Elektrolyten,

wie z.B. LP30 (1 M LiPF6 / EC-DMC (1:1 Gew.)) eine Leitfähigkeit von nur ca. 10 mS/cm.

Die Figuren 14 (Elektrolyt 3) und 15 (Elektrolyt 4) zeigen die zu der verschiedenen Konzentration ermittelten Leitfähigkeitswerte. Bei Elektrolyt 4 werden maximal 18 mS/cm bei einer Leitsalzkonzentration von 1 mol/L erreicht. Elektrolyt 3 zeigt seine höchste Leitfähigkeit von 0,5 mS/cm bei einer Leitsalzkonzentration von 0,6 mol/L. Obwohl Elektrolyt 3 eine geringere Leitfähigkeit zeigt, ist, wie in Experiment 4, eine Ladung bzw. Entladung einer Test-Vollzelle gut möglich.

Experiment 7: Tieftemperaturverhalten

Um das Tieftemperaturverhalten des Elektrolyten 1 im Vergleich zum Referenzelektrolyten zu bestimmen, wurden zwei Test-Vollzellen, gemäß Beispiel 3 hergestellt. Eine Test-Vollzelle wurde mit Referenzelektrolyt der Zusammensetzung $LiAlCl_4*6SO_2$ und die andere Test-Vollzelle mit Elektrolyt 1 befüllt. Die Test-Vollzelle mit dem Referenzelektrolyt enthielt Lithiumeisenphosphat (LEP) als aktives Material, die Testzelle mit Elektrolyt 1 enthielt Lithiumnickelmangancobaltoxid (NMC) als aktives Material der positiven Elektrode. Die Test-Vollzellen wurden bei 20°C bis 3,6 Volt (LEP) bzw. 4,4 Volt (NMC) geladen und bei der jeweiligen zu untersuchenden Temperatur bis 2,5 Volt wieder entladen. Die bei 20°C erreichte Entladekapazität wurde mit 100% bewertet. Die Temperatur zur Entladung wurde in Temperaturschritten von 10°K erniedrigt. Die erhaltene Entladekapazität wurde in % der Entladekapazität bei 20°C beschrieben. Da die Tieftemperaturentladungen nahezu unabhängig von den verwendeten aktiven Materialien der positiven und negativen Elektrode sind, können die Ergebnisse auf alle Kombinationen von aktiven Materialien übertragen werden. Tabelle 5 zeigt die Ergebnisse.

Tabelle 5: Entladekapazitäten in Abhängigkeit der Temperatur

| Temperatur | Entladekapazität des Elektrolyts 1 | Entladekapazität des Referenzelektrolyt |
|---|---|---|
| 20°C | 100% | 100% |
| 10°C | 99% | 99% |
| 0°C | 95% | 46% |
| -10°C | 89% | 21% |
| -20°C | 82% | n/a |
| -30°C | 73% | n/a |
| -35°C | 68% | n/a |
| -40°C | 61% | n/a |

Die Test-Vollzelle mit dem Elektrolyt 1 zeigt ein sehr gutes Tieftemperaturverhalten. Bei - 20°C werden noch 82% der Kapazität erreicht, bei - 30°C noch 73%. Selbst bei einer Temperatur von -40 °C können noch 61% der Kapazität entladen werden. Im Gegensatz dazu zeigt die Test-Vollzelle mit dem Referenzelektrolyten nur eine Entladefähigkeit bis - 10°C. Dabei wird eine Kapazität von 21% erreicht. Bei tieferen Temperaturen kann die Zelle mit dem Referenzelektrolyten nicht mehr entladen werden.

## Patentansprüche

1. Wiederaufladbare Batteriezelle (2, 20, 40), enthaltend ein aktives Metall, zumindest eine positive Elektrode (4, 23, 44), zumindest eine negative Elektrode (5, 22, 45), ein Gehäuse (1, 28) und einen Elektrolyten,

   wobei die positive Elektrode (4, 23, 44) mindestens eine Verbindung in Form eines Schichtoxids als aktives Material enthält und
   wobei der Elektrolyt auf $SO_2$ basiert und zumindest ein erstes Leitsalz enthält, welches die Formel (I)

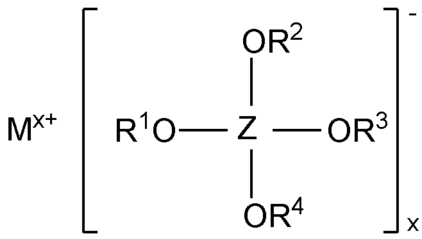

Formel (I)

aufweist, wobei

- M ein Metall ist, das ausgewählt ist aus der Gruppe, die gebildet wird von Alkalimetallen, Erdalkalimetallen, Metallen der Gruppe 12 des Periodensystems der Elemente und Aluminium;
- x eine ganze Zahl von 1 bis 3 ist;
- die Substituenten $R^1$, $R^2$, $R^3$ und $R^4$ unabhängig voneinander ausgewählt sind aus der Gruppe, die gebildet wird von $C_1$-$C_{10}$ Alkyl, $C_2$-$C_{10}$ Alkenyl, $C_2$-$C_{10}$ Alkinyl, $C_3$-$C_{10}$ Cycloalkyl, $C_6$-$C_{14}$ Aryl und $C_5$-$C_{14}$ Heteroaryl; und
- wobei Z Aluminium oder Bor ist.

**2.** Wiederaufladbare Batteriezelle (2, 20, 40) nach Anspruch 1, bei welcher die Verbindung die Zusammensetzung $A_xM'_yM''_zO_a$ aufweist, worin

- A mindestens ein Metall ist, das ausgewählt ist aus der Gruppe, die gebildet wird von den Alkalimetallen, den Erdalkalimetallen, den Metallen der Gruppe 12 des Periodensystems oder Aluminium,
- M' mindestens ein Metall ist, das ausgewählt ist aus der Gruppe, die gebildet wird von den Elementen Ti, V, Cr, Mn, Fe, Co, Ni, Cu und Zn;
- M" mindestens ein Element ist, das ausgewählt ist aus der Gruppe, die gebildet wird von den Elementen der Gruppen 2, 3, 4, 5, 6, 7, 8, 9, 10, 11, 12, 13, 14, 15 und 16 des Periodensystems der Elemente;
- x und y unabhängig voneinander Zahlen größer 0 sind;
- z eine Zahl größer oder gleich 0 ist; und
- a eine Zahl größer 0 ist.

**3.** Wiederaufladbare Batteriezelle (2, 20, 40) nach Anspruch 2, bei welcher die Verbindung die Zusammensetzung $A_xM'_yM''_zO_a$ aufweist, in welcher A Lithium und M' Cobalt sind und wobei x und y vorzugsweise gleich 1, z gleich 0 und a vorzugsweise gleich 2 ist.

**4.** Wiederaufladbare Batteriezelle (2, 20, 40) nach Anspruch 2, bei welcher die Verbindung die Zusammensetzung $A_xM'_yM''_zO_a$ aufweist, in welcher A Lithium ist, M' Nickel und Mangan umfasst und M" Cobalt ist.

**5.** Wiederaufladbare Batteriezelle nach Anspruch 4, bei welcher die Verbindung die Zusammensetzung $Li_xNi_{y1}Mn_{y2}Co_zO_a$ aufweist, worin x, y1 und y2 unabhängig voneinander Zahlen größer 0 sind und z eine Zahl größer oder gleich 0 ist und a eine Zahl größer 0 ist.

**6.** Wiederaufladbare Batteriezelle (2, 20, 40) nach Anspruch 5, bei welcher die Verbindung die Zusammensetzung $LiNi_{0,33}Mn_{0,33}Co_{0,33}O_2$, $LiNi_{0,5}Mn_{0,3}Co_{0,2}O_2$, $LiNi_{0,5}Mn_{0,25}Co_{0,25}O_2$, $LiNi_{0,52}Mn_{0,32}Co_{0,16}O_2$, $LiNi_{0,55}Mn_{0,30}Co_{0,15}O_2$, $LiNi_{0,58}Mn_{0,14}Co_{0,28}O_2$, $LiNi_{0,6}Mn_{0,2}Co_{0,2}O_2$, $LiNi_{0,64}Mn_{0,18}Co_{0,18}O_2$, $LiNi_{0,65}Mn_{0,27}Co_{0,08}O_2$, $LiNi_{0,7}Mn_{0,2}Co_{0,1}O_2$, $LiNi_{0,7}Mn_{0,15}Co_{0,15}O_2$, $LiNi_{0,72}Mn_{0,10}Co_{0,18}O_2$, $LiNi_{0,76}Mn_{0,14}Co_{0,10}O$, $LiNi_{0,8}Mn_{0,1}Co_{0,1}O_2$, $LiNi_{0,86}Mn_{0,04}Co_{0,10}O_2$, $LiNi_{0,90}Mn_{0,05}Co_{0,05}O_2$, $LiNi_{0,95}Mn_{0,025}Co_{0,025}O_2$ oder eine Kombination davon aufweist.

**7.** Wiederaufladbare Batteriezelle nach Anspruch 2,

bei welcher die Verbindung die Zusammensetzungen $Li_xMn_yM''_zO_a$ aufweist, wobei x eine Zahl größer oder gleich 1 und y eine Zahl größer als die Zahl z ist.

**8.** Wiederaufladbare Batteriezelle (2, 20, 40) nach Anspruch 7,
bei welcher die Verbindung die Zusammensetzung $Li_xMn_yM''_zO_a$ aufweist, in welcher M" Nickel und/oder Cobalt ist, wobei die Verbindung vorzugsweise die Zusammensetzung $Li_{1.2}Mn_{0.525}Ni_{0.175}Co_{0.1}O_2$, $Li_{1.2}Mn_{0.6}Ni_{0.2}O_2$, $Li_{1.16}Mn_{0.61}Ni_{0.15}Co_{0.16}O_2$ oder $Li_{1.2}Mn_{0.54}Ni_{0.13}Co_{0.13}O_2$ aufweist.

**9.** Wiederaufladbare Batteriezelle (2, 20, 40) nach einem der vorhergehenden Ansprüche,
bei welchem die Substituenten $R^1$, $R^2$, $R^3$ und $R^4$ des ersten Leitsalzes unabhängig voneinander ausgewählt sind aus der Gruppe, die gebildet wird von

- $C_1$-$C_6$ Alkyl; bevorzugt von $C_2$-$C_4$ Alkyl; besonders bevorzugt von den Alkylgruppen 2-Propyl, Methyl und Ethyl;
- $C_2$-$C_6$ Alkenyl; bevorzugt von $C_2$-$C_4$ Alkenyl; besonders bevorzugt von den Alkenylgruppen Ethenyl und Propenyl;
- $C_2$-$C_6$-Alkinyl; bevorzugt von $C_2$-$C_4$-Alkinyl;
- $C_3$-$C_6$ Cycloalkyl;
- Phenyl; und
- $C_5$-$C_7$ Heteroaryl.

**10.** Wiederaufladbare Batteriezelle (2, 20, 40) nach einem der vorhergehenden Ansprüche,
bei welchem zumindest einer der Substituenten $R^1$, $R^2$, $R^3$ und $R^4$ des ersten Leitsalzes durch mindestens ein Fluoratom und/oder durch mindestens eine chemische Gruppe substituiert ist, wobei die chemische Gruppe ausgewählt ist aus der Gruppe, die gebildet wird von $C_1$-$C_4$-Alkyl, $C_2$-$C_4$-Alkenyl, $C_2$-$C_4$-Alkinyl, Phenyl und Benzyl.

**11.** Wiederaufladbare Batteriezelle (2, 20, 40) nach einem der vorhergehenden Ansprüche,
bei welchem zumindest einer der Substituenten $R^1$, $R^2$, $R^3$ und $R^4$ des ersten Leitsalzes eine $CF_3$-Gruppe oder eine $OSO_2CF_3$-Gruppe ist.

**12.** Wiederaufladbare Batteriezelle (2, 20, 40) nach einem der vorhergehenden Ansprüche,
bei welchem das erste Leitsalz ausgewählt ist aus der Gruppe, die gebildet wird von

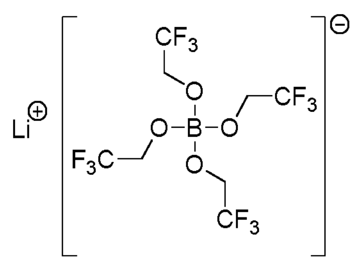

$Li[B(OCH_2CF_3)_4]$

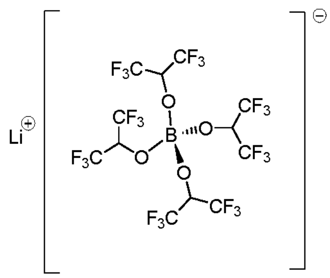

$Li[B(OCH(CF_3)_2)_4]$

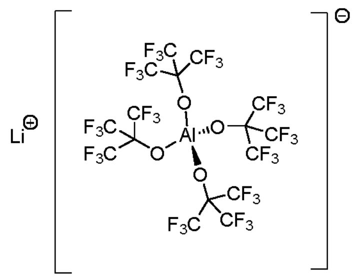

$Li[Al(OC(CF_3)_3)_4]$

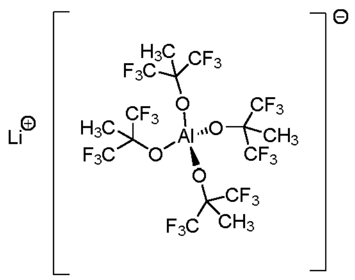

$Li[Al(OC(CH_3)(CF_3)_2)_4]$

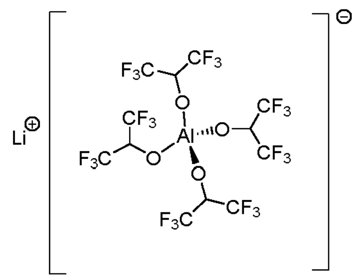

$Li[Al(OCH(CF_3)_2)_4]$.

**13.** Wiederaufladbare Batteriezelle (2, 20, 40) nach einem der vorhergehenden Ansprüche,
wobei der Elektrolyt mindestens ein zweites, von dem ersten Leitsalz nach Formel (I) abweichendes Leitsalz enthält.

**14.** Wiederaufladbare Batteriezelle (2, 20, 40) nach Anspruch 13,
bei welcher das zweite Leitsalz des Elektrolyten eine Alkalimetallverbindung, insbesondere eine Lithiumverbindung

ist, die ausgewählt ist aus der Gruppe, die gebildet wird von einem Aluminat, einem Halogenid, einem Oxalat, einem Borat, einem Phosphat, einem Arsenat und einem Gallat.

**15.** Wiederaufladbare Batteriezelle (2, 20, 40) nach Anspruch 13 oder 14, bei welcher das zweite Leitsalz des Elektrolyten ein Lithiumtetrahalogenoaluminat, insbesondere Lithiumtetrachloroaluminat ist.

**16.** Wiederaufladbare Batteriezelle (2, 20, 40) nach einem der vorhergehenden Ansprüche, bei welcher der Elektrolyt mindestens ein Additiv enthält.

**17.** Wiederaufladbare Batteriezelle (2, 20, 40) nach Anspruch 16, bei welcher das Additiv des Elektrolyten ausgewählt ist aus der Gruppe, die gebildet wird von Vinylencarbonat und seinen Derivaten, Vinylethylencarbonat und seinen Derivaten, Methylethylencarbonat und seinen Derivaten, Lithium(bisoxalato)borat, Lithiumdifluoro(oxalato)borat, Lithiumtetrafluoro(oxalato)phosphat, Lithiumoxalat, 2-Vinylpyridin, 4-Vinylpyridin, cyclische Exomethylencarbonate, Sultone, cyclische und acyclische Sulfonate, acyclische Sulfite, cyclische und acyclische Sulfinate, organische Ester anorganischer Säuren, acyclische und cyclische Alkane, welche acyclischen und cyclischen Alkane einen Siedepunkt bei 1 bar von mindestens 36 ° C aufweisen, aromatische Verbindungen, halogenierte cyclische und acyclische Sulfonylimide, halogenierte cyclische und acyclische Phosphatester, halogenierte cyclische und acyclische Phosphine, halogenierte cyclische und acyclische Phosphite, halogenierte cyclische und acyclische Phosphazene, halogenierte cyclische und acyclische Silylamine, halogenierte cyclische und acyclische halogenierte Ester, halogenierte cyclische und acyclische Amide, halogenierte cyclische und acyclische Anhydride und halogenierte organische Heterocyclen.

**18.** Wiederaufladbare Batteriezelle (2, 20, 40) nach einem der vorhergehenden Ansprüche,

bei welcher der Elektrolyt die Zusammensetzung

(i) 5 bis 99,4 Gew.-% Schwefeldioxid,
(ii) 0,6 bis 95 Gew.-% des ersten Leitsalzes,
(iii) 0 bis 25 Gew.-% des zweiten Leitsalzes und
(iv) 0 bis 10 Gew.-% des Additivs,

bezogen auf das Gesamtgewicht der Elektrolytzusammensetzung aufweist.

**19.** Wiederaufladbare Batteriezelle (2, 20, 40) nach einem der vorhergehenden Ansprüche, bei welcher die Stoffmengenkonzentration des ersten Leitsalzes im Bereich von 0,01 mol/l bis 10 mol/l, bevorzugt von 0,05 mol/l bis 10 mol/l, weiter bevorzugt von 0,1 mol/l bis 6 mol/l und besonders bevorzugt von 0,2 mol/l bis 3,5 mol/l bezogen auf das Gesamtvolumen des Elektrolyten ist.

**20.** Wiederaufladbare Batteriezelle (2, 20, 40) nach einem der vorhergehenden Ansprüche, bei welcher der Elektrolyt mindestens 0,1 Mol $SO_2$, bevorzugt mindestens 1 Mol $SO_2$, weiter bevorzugt mindestens 5 Mol $SO_2$, weiter bevorzugt mindestens 10 Mol $SO_2$ und besonders bevorzugt mindestens 20 Mol $SO_2$ je Mol Leitsalz enthält.

**21.** Wiederaufladbare Batteriezelle (2, 20, 40) nach einem der vorhergehenden Ansprüche,

bei welcher das aktive Metall

- ein Alkalimetall, insbesondere Lithium oder Natrium;
- ein Erdalkalimetall, insbesondere Calcium;
- ein Metall der Gruppe 12 des Periodensystems, insbesondere Zink; oder
- Aluminium

ist.

**22.** Wiederaufladbare Batteriezelle (2, 20, 40) nach einem der vorhergehenden Ansprüche, bei welcher die negative Elektrode (5, 22, 45) eine Insertionselektrode ist, die vorzugsweise Kohlenstoff als aktives Material, insbesondere in der Modifikation Graphit enthält.

**23.** Wiederaufladbare Batteriezelle (2, 20, 40) nach einem der vorhergehenden Ansprüche,

bei welcher die positive Elektrode (4, 23, 44) und/oder die negative Elektrode (5, 22, 45) ein Ableitelement (26, 27) aufweisen, das vorzugsweise

- entweder planar in Form eines Metallblechs oder einer Metallfolie oder
- dreidimensional in Form einer porösen Metallstruktur, insbesondere in Form eines Metallschaums (18)

ausgebildet ist.

**24.** Wiederaufladbare Batteriezelle (2, 20, 40) nach einem der vorhergehenden Ansprüche, bei welcher die positive Elektrode (4, 23, 44) und/oder die negative Elektrode (5, 22, 45) zumindest ein Bindemittel, vorzugsweise ein fluoriertes Bindemittel, insbesondere ein Polyvinylidenfluorid und/oder ein Terpolymer aus Tetrafluorethylen, Hexafluorpropylen und Vinylidenfluorid, oder

ein Bindemittel, welches aus einem Polymer besteht, das aus monomeren Struktureinheiten einer konjugierten Carbonsäure oder aus dem Alkali-, Erdalkali- oder Ammoniumsalz dieser konjugierten Carbonsäure oder aus einer Kombination daraus aufgebaut ist, oder
ein Bindemittel, welches aus einem Polymer besteht, das auf monomeren Styrol- und Butadien-Struktureinheiten basiert, oder ein Bindemittel aus der Gruppe der Carboxymethylcellulosen enthält,
wobei das Bindemittel vorzugsweise in einer Konzentration von höchstens 20 Gew%, weiter bevorzugt höchstens 15 Gew%, weiter bevorzugt höchstens 10 Gew%, weiter bevorzugt höchstens 7 Gew%, weiter bevorzugt höchstens 5 Gew% und besonders bevorzugt höchstens 2 Gew% bezogen auf das Gesamtgewicht der positiven Elektrode (4, 23, 44) vorliegt.

**25.** Wiederaufladbare Batteriezelle (2, 20, 40) nach einem der vorhergehenden Ansprüche, welche mehrere negativen Elektroden (5, 22, 45) und mehrere positive Elektroden (4, 23, 44) umfasst, die alternierend gestapelt in dem Gehäuse (1, 28) angeordnet sind, wobei die positiven Elektroden (4, 23, 44) und die negativen Elektroden (5, 22, 45) vorzugsweise jeweils durch Separatoren (11, 21, 13) voneinander elektrisch getrennt sind.

## Claims

**1.** Rechargeable battery cell (2, 20, 40), containing an active metal, at least one positive electrode (4, 23, 44), at least one negative electrode (5, 22, 45), a housing (1, 28) and an electrolyte,

wherein the positive electrode (4, 23, 44) contains at least one compound in the form of a layer oxide as active material and
wherein the electrolyte is based on $SO_2$ and contains at least one first conducting salt having the formula (I)

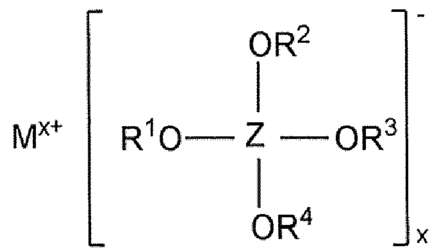

formula (I),

wherein

- M is a metal selected from the group formed by alkali metals, alkaline earth metals, metals of group 12 of the periodic table of the elements and aluminium;
- x is an integer from 1 to 3;
- the substituents $R^1$, $R^2$, $R^3$ and $R^4$ are selected independently of one another from the group formed by

$C_1$-$C_{10}$alkyl, $C_2$-$C_{10}$alkenyl, $C_2$-$C_{10}$alkynyl, $C_3$-$C_{10}$cycloalkyl, $C_6$-$C_{14}$aryl and $C_5$-$C_{14}$heteroaryl; and
- wherein Z is aluminium or boron.

**2.** Rechargeable battery cell (2, 20, 40) according to claim 1, wherein the compound has the composition $A_xM'_yM''_zO_a$ in which

- A is at least one metal selected from the group formed by the alkali metals, the alkaline earth metals, the metals of group 12 of the periodic table or aluminium;
- M' is at least one metal selected from the group formed by the elements Ti, V, Cr, Mn, Fe, Co, Ni, Cu and Zn;
- M" is at least one element selected from the group formed by the elements of groups 2, 3, 4, 5, 6, 7, 8, 9, 10, 11, 12, 13, 14, 15 and 16 of the periodic table of the elements;
- x and y independently of one another are numbers greater than 0;
- z is a number greater than or equal to 0; and
- a is a number greater than 0.

**3.** Rechargeable battery cell (2, 20, 40) according to claim 2, wherein the compound has the composition $A_xM'_yM''_zO_a$, in which A is lithium and M' is cobalt, and wherein x and y are preferably equal to 1, z is equal to 0 and a is preferably equal to 2.

**4.** Rechargeable battery cell (2, 20, 40) according to claim 2, wherein the compound has the composition $A_xM'_yM''_zO_a$, in which A is lithium, M' comprises nickel and manganese and M" is cobalt.

**5.** Rechargeable battery cell according to claim 4, wherein the compound has the composition $Li_xNi_{y1}Mn_{y2}Co_zO_a$, wherein x, y1 and y2 independently of one another are numbers greater than 0 and z is a number greater than or equal to 0 and a is a number greater than 0.

**6.** Rechargeable battery cell (2, 20, 40) according to claim 5, wherein the compound has the composition $LiNi_{0.33}Mn_{0.33}CO_{0.33}O_2$, $LiNi_{0.5}Mn_{0.3}CO_{0.2}O_2$, $LiNi_{0.5}Mn_{0.25}CO_{0.25}O_2$, $LiNi_{0.52}Mn_{0.32}CO_{0.16}O_2$, $LiNi_{0.55}Mn_{0.30}CO_{0.15}O_2$, $LiNi_{0.58}Mn_{0.14}Co_{0.28}O_2$, $LiNi_{0.6}Mn_{0.2}Co_{0.2}O_2$, $LiNi_{0.64}Mn_{0.18}Co_{0.18}O_2$, $LiNi_{0.65}Mn_{0.27}Co_{0.08}O_2$, $LiNi_{0.7}Mn_{0.2}Co_{0.1}O_2$, $LiNi_{0.7}Mn_{0.15}Co_{0.15}O_2$, $LiNi_{0.72}Mn_{0.10}Co_{0.18}O_{27}$ $LiNi_{0.76}Mn_{0.14}Co_{0.10}O$, $LiNi_{0.8}Mn_{0.1}Co_{0.1}O_2$, $LiNi_{0.86}Mn_{0.04}Co_{0.10}O_2$, $LiNi_{0.90}Mn_{0.05}Co_{0.05}O_2$, $LiNi_{0.95}Mn_{0.025}Co_{0.025}O_2$ or a combination thereof.

**7.** Rechargeable battery cell according to claim 2, wherein the compound has the compositions $Li_xMn_yM''_zO_a$, wherein x is a number greater than or equal to 1 and y is a number greater than the number z.

**8.** Rechargeable battery cell (2, 20, 40) according to claim 7, wherein the compound has the composition $Li_xMn_yM''_zO_a$, in which M" is nickel and/or cobalt, the compound preferably having the composition $Li_{1.2}Mn_{0.525}Ni_{0.175}Co_{0.1}O_2$, $Li_{1.2}Mn_{0.6}Ni_{0.2}O_2$, $Li_{1.16}Mn_{0.61}Ni_{0.15}Co_{0.16}O_2$ or $Li_{1.2}Mn_{0.54}Ni_{0.13}Co_{0.13}O_2$.

**9.** Rechargeable battery cell (2, 20, 40) according to any one of the preceding claims, wherein the substituents $R^1$, $R^2$, $R^3$ and $R^4$ of the first conducting salt are selected independently of one another from the group formed by

- $C_1$-$C_6$alkyl; preferably $C_2$-$C_4$alkyl; especially preferably the alkyl groups 2-propyl, methyl and ethyl;
- $C_2$-$C_6$alkenyl; preferably $C_2$-$C_4$alkenyl; especially preferably the alkenyl groups ethenyl and propenyl;
- $C_2$-$C_6$alkynyl; preferably $C_2$-$C_4$alkynyl;
- $C_3$-$C_6$cycloalkyl;
- phenyl; and
- $C_5$-$C_7$heteroaryl.

**10.** Rechargeable battery cell (2, 20, 40) according to any one of the preceding claims, wherein at least one of the substituents $R^1$, $R^2$, $R^3$ and $R^4$ of the first conducting salt is substituted by at least one fluorine atom and/or by at least one chemical group, the chemical group being selected from the group formed by $C_1$-$C_4$alkyl, $C_2$-$C_4$alkenyl, $C_2$-$C_4$alkynyl, phenyl and benzyl.

**11.** Rechargeable battery cell (2, 20, 40) according to any one of the preceding claims, wherein at least one of the substituents $R^1$, $R^2$, $R^3$ and $R^4$ of the first conducting salt is a $CF_3$ group or a $OSO_2CF_3$ group.

**12.** Rechargeable battery cell (2, 20, 40) according to any one of the preceding claims, wherein the first conducting salt is selected from the group formed by

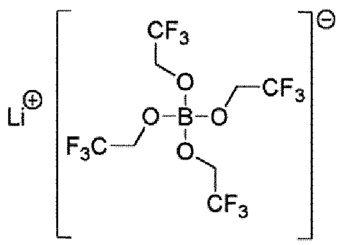

$Li[B(OCH_2CF_3)_4]$

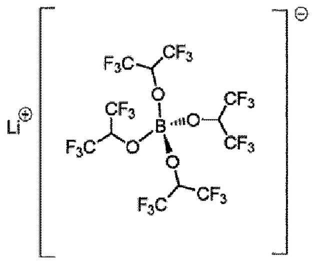

$Li[B(OCH(CF_3)_2)_4]$

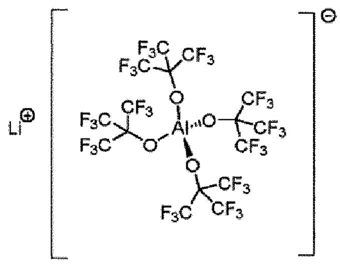

$Li[Al(OC(CF_3)_3)_4]$

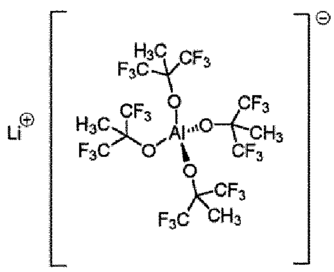

$Li[Al(OC(CH_3)(CF_3)_2)_4]$

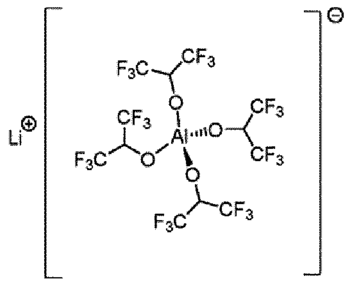

$Li[Al(OCH(CF_3)_2)_4]$.

**13.** Rechargeable battery cell (2, 20, 40) according to any one of the preceding claims, wherein the electrolyte contains at least one second conducting salt different from the first conducting salt according to formula (I).

**14.** Rechargeable battery cell (2, 20, 40) according to claim 13, wherein the second conducting salt of the electrolyte is an alkali metal compound, especially a lithium compound, selected from the group formed by an aluminate, a halide, an oxalate, a borate, a phosphate, an arsenate and a gallate.

**15.** Rechargeable battery cell (2, 20, 40) according to claim 13 or 14, wherein the second conducting salt of the electrolyte is a lithium tetrahaloaluminate, especially lithium tetrachloroaluminate.

**16.** Rechargeable battery cell (2, 20, 40) according to any one of the preceding claims, wherein the electrolyte contains at least one additive.

**17.** Rechargeable battery cell (2, 20, 40) according to claim 16, wherein the additive of the electrolyte is selected from the group formed by vinylene carbonate and its derivatives, vinyl ethylene carbonate and its derivatives, methyl ethylene carbonate and its derivatives, lithium (bisoxalato)borate, lithium difluoro(oxalato)borate, lithium tetrafluoro(oxalato)phosphate, lithium oxalate, 2-vinylpyridine, 4-vinylpyridine, cyclic exomethylene carbonates, sultones, cyclic and acyclic sulfonates, acyclic sulfites, cyclic and acyclic sulfites, organic esters of inorganic acids, acyclic and cyclic alkanes, which acyclic and cyclic alkanes have a boiling point at 1 bar of at least 36°C, aromatic compounds, halogenated cyclic and acyclic sulfonylimides, halogenated cyclic and acyclic phosphate esters, halogenated cyclic and acyclic phosphines, halogenated cyclic and acyclic phosphites, halogenated cyclic and acyclic phosphazenes, halogenated cyclic and acyclic silylamines, halogenated cyclic and acyclic halogenated esters, halogenated cyclic and acyclic amides, halogenated cyclic and acyclic anhydrides and halogenated organic heterocycles.

**18.** Rechargeable battery cell (2, 20, 40) according to any one of the preceding claims,

wherein the electrolyte has the composition

(i) 5 to 99.4 % by weight sulfur dioxide,
(ii) 0.6 to 95 % by weight of the first conducting salt,
(iii) 0 to 25 % by weight of the second conducting salt and
(iv) 0 to 10 % by weight of the additive,

based on the total weight of the electrolyte composition.

**19.** Rechargeable battery cell (2, 20, 40) according to any one of the preceding claims,
wherein the molar concentration of the first conducting salt is in the range of from 0.01 mol/l to 10 mol/l, preferably from 0.05 mol/l to 10 mol/l, more preferably from 0.1 mol/l to 6 mol/l and especially preferably from 0.2 mol/l to 3.5 mol/l, based on the total volume of the electrolyte.

**20.** Rechargeable battery cell (2, 20, 40) according to any one of the preceding claims,
wherein the electrolyte contains at least 0.1 mol $SO_2$, preferably at least 1 mol $SO_2$, more preferably at least 5 mol $SO_2$, more preferably at least 10 mol $SO_2$ and especially preferably at least 20 mol $SO_2$ per mol of conducting salt.

**21.** Rechargeable battery cell (2, 20, 40) according to any one of the preceding claims,
wherein the active metal is

- an alkali metal, especially lithium or sodium;
- an alkaline earth metal, especially calcium;
- a metal of group 12 of the periodic table, especially zinc; or
- aluminium.

**22.** Rechargeable battery cell (2, 20, 40) according to any one of the preceding claims,
wherein the negative electrode (5, 22, 45) is an insertion electrode which preferably contains carbon as active material, especially in the graphite modification.

**23.** Rechargeable battery cell (2, 20, 40) according to any one of the preceding claims,
wherein the positive electrode (4, 23, 44) and/or the negative electrode (5, 22, 45) has a current collector (26, 27) which is preferably

- either planar in the form of a metal sheet or a metal foil or
- three-dimensional in the form of a porous metal structure, especially in the form of a metal foam (18).

**24.** Rechargeable battery cell (2, 20, 40) according to any one of the preceding claims,

wherein the positive electrode (4, 23, 44) and/or the negative electrode (5, 22, 45) contains at least one binder, preferably a fluorinated binder, especially a polyvinylidene fluoride and/or a terpolymer of tetrafluoroethylene, hexafluoropropylene and vinylidene fluoride, or
a binder which consists of a polymer composed of monomeric structural units of a conjugated carboxylic acid or of the alkali metal, alkaline earth metal or ammonium salt of such a conjugated carboxylic acid or of a combination thereof, or
a binder which consists of a polymer based on monomeric styrene and butadiene structural units, or a binder from the group of carboxy-methylcelluloses,
wherein the binder is preferably present in a concentration of at most 20% by weight, more preferably at most 15% by weight, more preferably at most 10 % by weight, more preferably at most 7 % by weight, more preferably at most 5 % by weight and especially preferably at most 2 % by weight, based on the total weight of the positive electrode (4, 23, 44).

**25.** Rechargeable battery cell (2, 20, 40) according to any one of the preceding claims,
which comprises a plurality of negative electrodes (5, 22, 45) and a plurality of positive electrodes (4, 23, 44) which are arranged stacked alternately in the housing (1, 28), the positive electrodes (4, 23, 44) and the negative electrodes (5, 22, 45) preferably being electrically separated from one another by separators (11, 21, 13).

**Revendications**

**1.** Cellule de batterie rechargeable (2, 20, 40), contenant un métal actif, au moins une électrode positive (4, 23, 44), au moins une électrode négative (5, 22, 45), un boîtier (1, 28) et un électrolyte,

l'électrode positive (4, 23, 44) contenant au moins un composé sous la forme d'un oxyde stratifié en tant que matériau actif et
l'électrolyte étant à base de $SO_2$ et contenant au moins un premier sel conducteur, qui présente la formule (I)

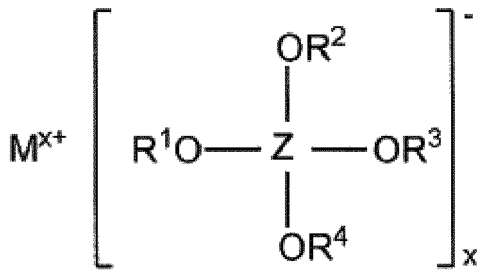

formule (I),

- M étant un métal qui est choisi dans le groupe qui est formé par les métaux alcalins, les métaux alcalino-terreux, les métaux du groupe 12 du système périodique des éléments et l'aluminium ;
- x étant un nombre entier de 1 à 3 ;
- les substituants $R^1$, $R^2$, $R^3$ et $R^4$ étant choisis indépendamment les uns des autres dans le groupe qui est formé par $C_1$-$C_{10}$ alkyle, $C_2$-$C_{10}$ alcényle, $C_2$-$C_{10}$ alcynyle, $C_3$-$C_{10}$ cycloalkyle, $C_6$-$C_{14}$ aryle et $C_5$-$C_{14}$ hétéroaryle ; et
- Z étant l'aluminium ou le bore.

**2.** Cellule de batterie rechargeable (2, 20, 40) selon la revendication 1, dans laquelle le composé présente la composition $A_xM'_yM''_zO_a$, dans laquelle

- A est au moins un métal qui est choisi dans le groupe qui est formé par les métaux alcalins, les métaux alcalino-terreux, les métaux du groupe 12 du système périodique des éléments et l'aluminium,
- M' est au moins un métal qui est choisi dans le groupe qui est formé par les éléments Ti, V, Cr, Mn, Fe, Co, Ni, Cu et Zn ;
- M" est au moins un métal qui est choisi dans le groupe qui est formé par les éléments des groupes 2, 3, 4, 5, 6, 7, 8, 9, 10, 11, 12, 13, 14, 15 et 16 du système périodique des éléments ;
- x et y sont indépendamment l'un de l'autre des nombres supérieurs à 0 ;
- z est un nombre supérieur ou égal à 0 ; et
- a est un nombre supérieur à 0.

**3.** Cellule de batterie rechargeable (2, 20, 40) selon la revendication 2, dans laquelle le composé présente la composition $A_xM'_yM''_zO_a$, dans laquelle A est le lithium et M' est le cobalt et x et y sont de préférence égaux à 1, z est égal à 0 et a est de préférence égal à 2.

**4.** Cellule de batterie rechargeable (2, 20, 40) selon la revendication 2, dans laquelle le composé présente la composition $A_xM'_yM''_zO_a$, dans laquelle A est le lithium, M' comprend du nickel et du manganèse et M" est le cobalt.

**5.** Cellule de batterie rechargeable selon la revendication 4, dans laquelle le composé présente la composition $Li_xNi_{y1}Mn_{y2}Co_zO_a$, dans laquelle x, y1 et y2 sont, indépendamment les uns des autres, des nombres supérieurs à 0 et z est un nombre supérieur ou égal à 0 et a est un nombre supérieur à 0.

**6.** Cellule de batterie rechargeable (2, 20, 40) selon la revendication 5, dans laquelle le composé présente la composition $LiNi_{0,33}Mn_{0,33}Co_{0,33}O_2$, $LiNi_{0,5}Mn_{0,3}Co_{0,2}O_2$, $LiNi_{0,5}Mn_{0,25}Co_{0,25}O_2$, $LiNi_{0,52}Mn_{0,32}Co_{0,16}O_2$, $LiNi_{0,55}Mn_{0,30}Co_{0,15}O_2$, $LiNi_{0,58}Mn_{0,14}Co_{0,28}O_2$, $LiNi_{0,6}Mn_{0,2}Co_{0,2}O_2$, $LiNi_{0.64}Mn_{0,18}Co_{0,18}O_2$, $LiNi_{0,65}Mn_{0,27}Co_{0,08}O_2$, $LiNi_{0,7}Mn_{0,2}Co_{0,1}O_2$, $LiNi_{0,7}Mn_{0,16}Co_{0,15}O_2$, $LiNi_{0,72}Mn_{0,10}Co_{0,18}O_2$, $LiNi_{0,76}Mn_{0,14}Co_{0,10}O$, $LiNi_{0,8}Mn_{0,1}Co_{0,1}O_2$, $LiNi_{0,86}Mn_{0,04}Co_{0,10}O_2$,

$LiNi_{0,90}Mn_{0,05}Co_{0,05}O_2$,$LiNi_{0,95}Mn_{0,025}Co_{0,025}O_2$ ou une combinaison correspondante.

**7.** Cellule de batterie rechargeable selon la revendication 2, dans laquelle le composé présente les compositions $Li_xMn_yM''_zO_a$, x étant un nombre supérieur ou égal à 1 et y étant un nombre supérieur au nombre z.

**8.** Cellule de batterie rechargeable (2, 20, 40) selon la revendication 7, dans laquelle le composé présente la composition $Li_xMn_yM''_zO_a$, dans laquelle M" est le nickel et/ou le cobalt, le composé présentant de préférence la composition $Li_{1.2}Mn_{0.525}Ni_{0.175}Co_{0.1}O_2$, $Li_{1.2}Mn_{0.6}Ni_{0,2}O_2$, $Li_{1.16}Mn_{0.61}Ni_{0.15}Co_{0.16}O_2$ ou $Li_{1.2}Mn_{0.54}Ni_{0.13}Co_{0.13}O_2$.

**9.** Cellule de batterie rechargeable (2, 20, 40) selon l'une quelconque des revendications précédentes, dans laquelle les substituants $R^1$, $R^2$, $R^3$ et $R^4$ du premier sel conducteur sont choisis indépendamment les uns des autres dans le groupe qui est formé par

- $C_1$-$C_6$ alkyle ; préférablement par $C_2$-$C_4$ alkyle ; particulièrement préférablement par les groupes alkyle 2-propyle, méthyle et éthyle ;
- $C_2$-$C_6$ alcényle ; préférablement par $C_2$-$C_4$ alcényle ; particulièrement préférablement par les groupes alcényle éthényle et propényle ;
- $C_2$-$C_6$-alcynyle ; préférablement par $C_2$-$C_4$-alcynyle ;
- $C_3$-$C_6$ cycloalkyle ;
- phényle ; et
- $C_5$-$C_7$ hétéroaryle.

**10.** Cellule de batterie rechargeable (2, 20, 40) selon l'une quelconque des revendications précédentes, dans laquelle au moins l'un des substituants $R^1$, $R^2$, $R^3$ et $R^4$ du premier sel conducteur est substitué par un atome de fluor et/ou par au moins un groupe chimique, le groupe chimique étant choisi dans le groupe qui est formé par $C_1$-$C_4$-alkyle, $C_2$-$C_4$-alcényle, $C_2$-$C_4$-alcynyle, phényle et benzyle.

**11.** Cellule de batterie rechargeable (2, 20, 40) selon l'une quelconque des revendications précédentes, dans laquelle au moins l'un des substituants $R^1$, $R^2$, $R^3$ et $R^4$ du premier sel conducteur est un groupe $CF_3$ ou un groupe $OSO_2CF_3$.

**12.** Cellule de batterie rechargeable (2, 20, 40) selon l'une quelconque des revendications précédentes, dans laquelle le premier sel conducteur est choisi dans le groupe qui est formé par

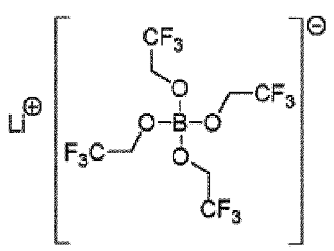

$Li[B(OCH_2CF_3)_4]$

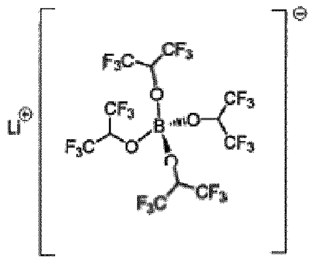

$Li[B(OCH(CF_3)_2)_4]$

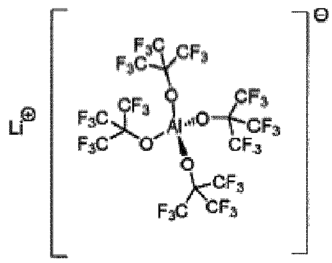

$Li[Al(OC(CF_3)_3)_4]$

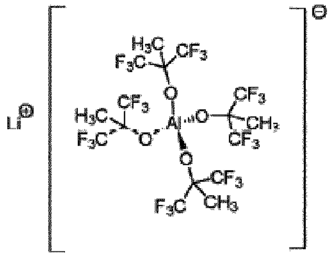

$Li[Al(OC(CH_3)(CF_3)_2)_4]$

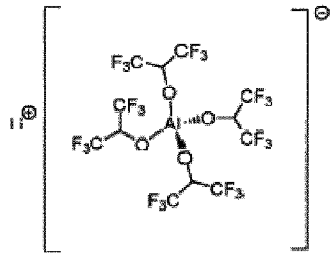

$Li[Al(OCH(CF_3)_2)_4]$.

**13.** Cellule de batterie rechargeable (2, 20, 40) selon l'une quelconque des revendications précédentes, l'électrolyte contenant au moins un deuxième sel conducteur différent du premier sel conducteur de formule (I).

**14.** Cellule de batterie rechargeable (2, 20, 40) selon la revendication 13, dans laquelle le deuxième sel conducteur de l'électrolyte est un composé de métal alcalin, en particulier un composé du lithium, qui est choisi dans le groupe qui est formé par un aluminate, un halogénure, un oxalate, un borate, un phosphonate, un arséniate et un gallate.

**15.** Cellule de batterie rechargeable (2, 20, 40) selon la revendication 13 ou 14, dans laquelle le deuxième sel conducteur de l'électrolyte est un tétrahalogénoaluminate de lithium, en particulier le tétrachloroaluminate de lithium.

**16.** Cellule de batterie rechargeable (2, 20, 40) selon l'une quelconque des revendications précédentes, dans laquelle l'électrolyte contient au moins un additif.

**17.** Cellule de batterie rechargeable (2, 20, 40) selon la revendication 16, dans laquelle l'additif de l'électrolyte est choisi dans le groupe qui est formé par le carbonate de vinylène et ses dérivés, le carbonate de vinyléthylène et ses dérivés, le carbonate de méthyléthylène et ses dérivés, le (bisoxalato)borate de lithium, le difluoro(oxalato)borate de lithium, le tétrafluoro(oxalato)phosphate de lithium, l'oxalate de lithium, la 2-vinylpyridine, la 4- vinylpyridine, des carbonates d'exométhylène cycliques, des sultones, des sulfonates cycliques et acycliques, des sulfites acycliques, des sulfinates cycliques et acycliques, des esters organiques d'acides inorganiques, des alcanes acycliques et cycliques, lesquels alcanes acycliques et cycliques présentent un point d'ébullition à 1 bar d'au moins 36 °C, des composés aromatiques, des sulfonylimides halogénés cycliques et acycliques, des esters de phosphate halogénés cycliques et acycliques, des phosphines halogénées cycliques et acycliques, des phosphites halogénés cycliques et acycliques, des phosphazènes halogénés cycliques et acycliques, des silylamines halogénées cycliques et acycliques, des esters halogénés cycliques et acycliques, des amides halogénés cycliques et acycliques, des anhydrides halogénés cycliques et acycliques et des hétérocycles organiques halogénés.

**18.** Cellule de batterie rechargeable (2, 20, 40) selon l'une quelconque des revendications précédentes, dans laquelle l'électrolyte présente la composition

(i) 5 à 99,4 % en poids de dioxyde de soufre,
(ii) 0,6 à 95 % en poids du premier sel conducteur,
(iii) 0 à 25 % en poids du deuxième sel conducteur et
(iv) 0 à 10 % poids de l'additif,

par rapport au poids total de la composition d'électrolyte.

**19.** Cellule de batterie rechargeable (2, 20, 40) selon l'une quelconque des revendications précédentes, dans laquelle la concentration de quantité de matière du premier sel conducteur est dans la plage de 0,01 mole/l à 10 mole/l, préférablement de 0,05 mole/l à 10 mole/l, plus préférablement de 0,1 mole/l à 6 mole/l et particulièrement préférablement de 0,2 mole/l à 3,5 mole/l par rapport au volume total de l'électrolyte.

**20.** Cellule de batterie rechargeable (2, 20, 40) selon l'une quelconque des revendications précédentes, dans laquelle l'électrolyte contient au moins 0,1 mole de $SO_2$, préférablement au moins 1 mole de $SO_2$, plus préférablement au moins 5 moles de $SO_2$, plus préférablement au moins 10 moles de $SO_2$ et particulièrement préférablement au moins 20 moles de $SO_2$ par mole de sel conducteur.

**21.** Cellule de batterie rechargeable (2, 20, 40) selon l'une quelconque des revendications précédentes, dans laquelle le métal actif est

- un métal alcalin, en particulier le lithium ou le sodium ;
- un métal alcalino-terreux, en particulier le calcium ;
- un métal du groupe 12 du système périodique, en particulier le zinc ; ou
- l'aluminium.

**22.** Cellule de batterie rechargeable (2, 20, 40) selon l'une quelconque des revendications précédentes, dans laquelle l'électrode négative (5, 22, 45) est une électrode d'insertion qui contient de préférence du carbone en tant que matériau actif, en particulier dans la modification graphite.

**23.** Cellule de batterie rechargeable (2, 20, 40) selon l'une quelconque des revendications précédentes, dans laquelle l'électrode positive (4, 23, 44) et/ou l'électrode négative (5, 22, 45) présentent un élément de dérivation (26, 27), qui est de préférence conçu

- soit plan, sous forme d'une tôle métallique ou d'une feuille métallique,
- soit tridimensionnel, sous forme d'une structure métallique poreuse, en particulier sous forme d'une mousse métallique (18).

**24.** Cellule de batterie rechargeable (2, 20, 40) selon l'une quelconque des revendications précédentes, dans laquelle l'électrode positive (4, 23, 44) et/ou l'électrode négative (5, 22, 45) contient au moins un liant, de préférence un liant fluoré, en particulier un poly(fluorure de vinylidène) et/ou un terpolymère de tétrafluoroéthylène, d'hexafluoropropylène et de fluorure de vinylidène, ou
un liant qui est constitué d'un polymère qui est construit à partir de motifs structuraux monomériques d'un acide carboxylique conjugué ou à partir du sel de métal alcalin, de métal alcalino-terreux ou d'ammonium de ces acides carboxyliques conjugués ou à partir d'une combinaison de ceux-ci, ou
un liant qui est constitué d'un polymère qui est à base de motifs structuraux monomériques de styrène et de butadiène, ou un liant du groupe des carboxyméthylcelluloses,
le liant étant de préférence présent en une concentration d'au plus 20 % en poids, plus préférablement d'au plus 15 % en poids, plus préférablement d'au plus 10 % en poids, plus préférablement d'au plus 7 % en poids, plus préférablement d'au plus 5 % en poids et particulièrement préférablement d'au plus 2 % en poids par rapport au poids total de l'électrode positive (4, 23, 44).

**25.** Cellule de batterie rechargeable (2, 20, 40) selon l'une quelconque des revendications précédentes, laquelle comprend plusieurs électrodes négatives (5, 22, 45) et plusieurs électrodes positives (4, 23, 44), qui sont disposées empilées en alternance dans le boîtier (1, 28), les électrodes positives (4, 23, 44) et les électrodes négatives (5, 22, 45) étant de préférence à chaque fois séparées électriquement les unes des autres par des séparateurs (11, 21, 13).

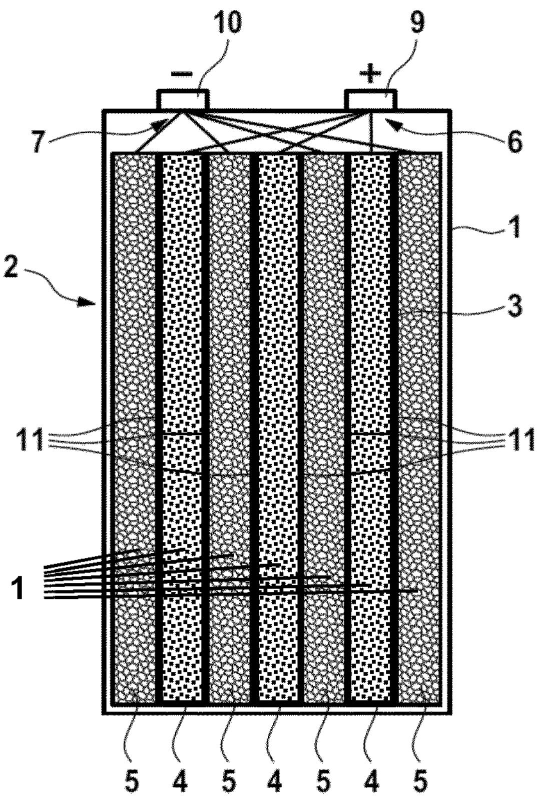


Fig. 1

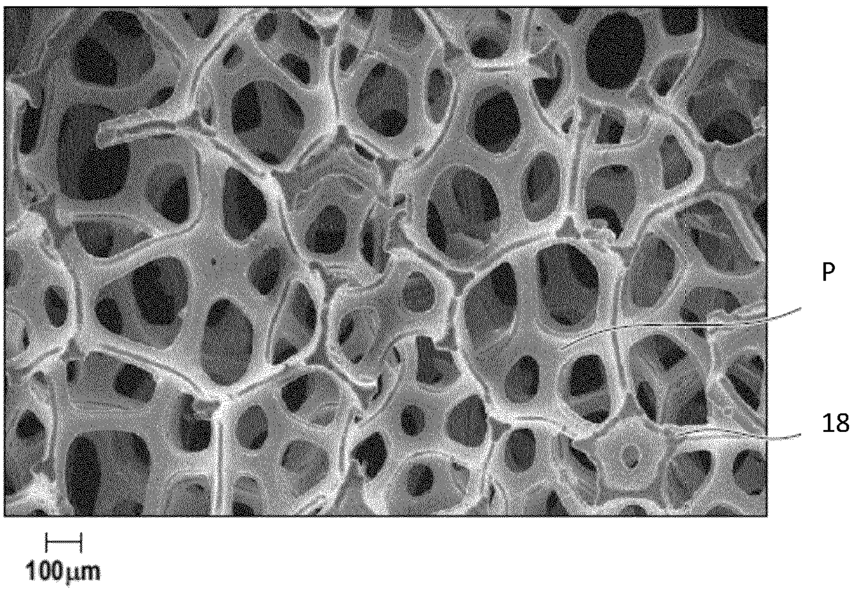


Fig. 2

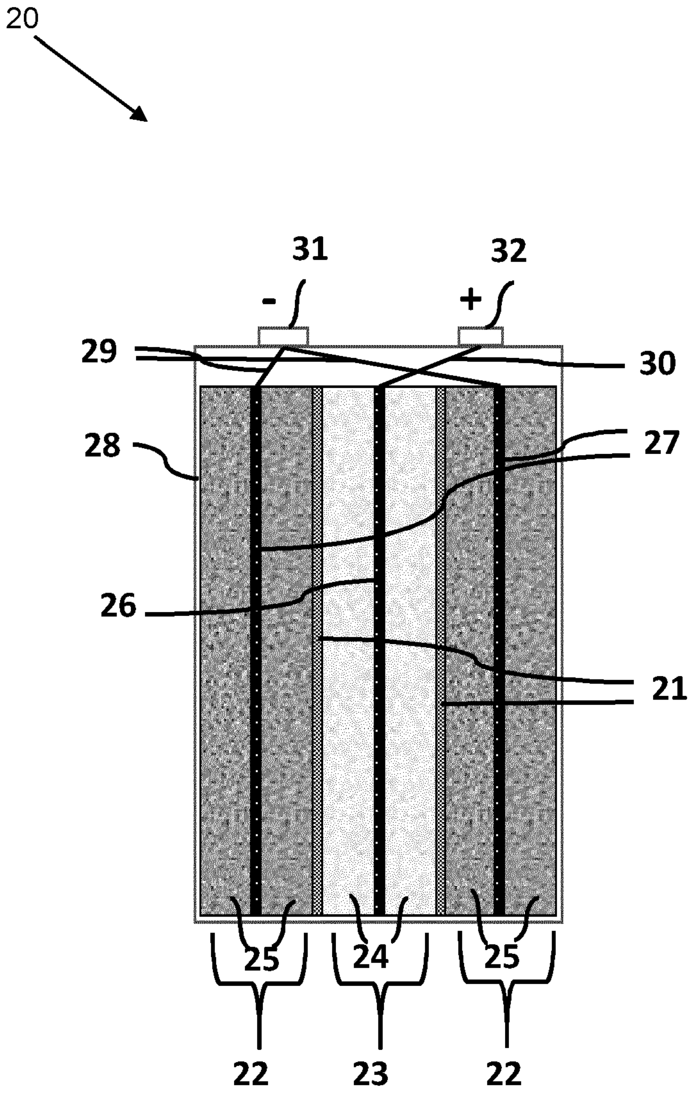


Fig. 3

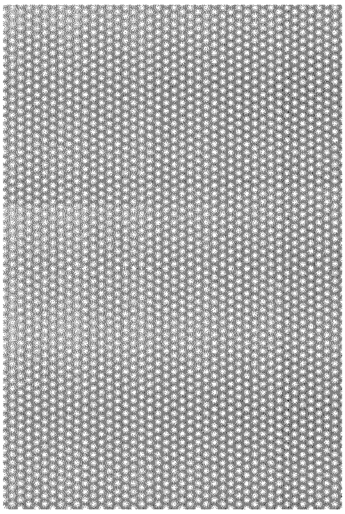

Fig. 4

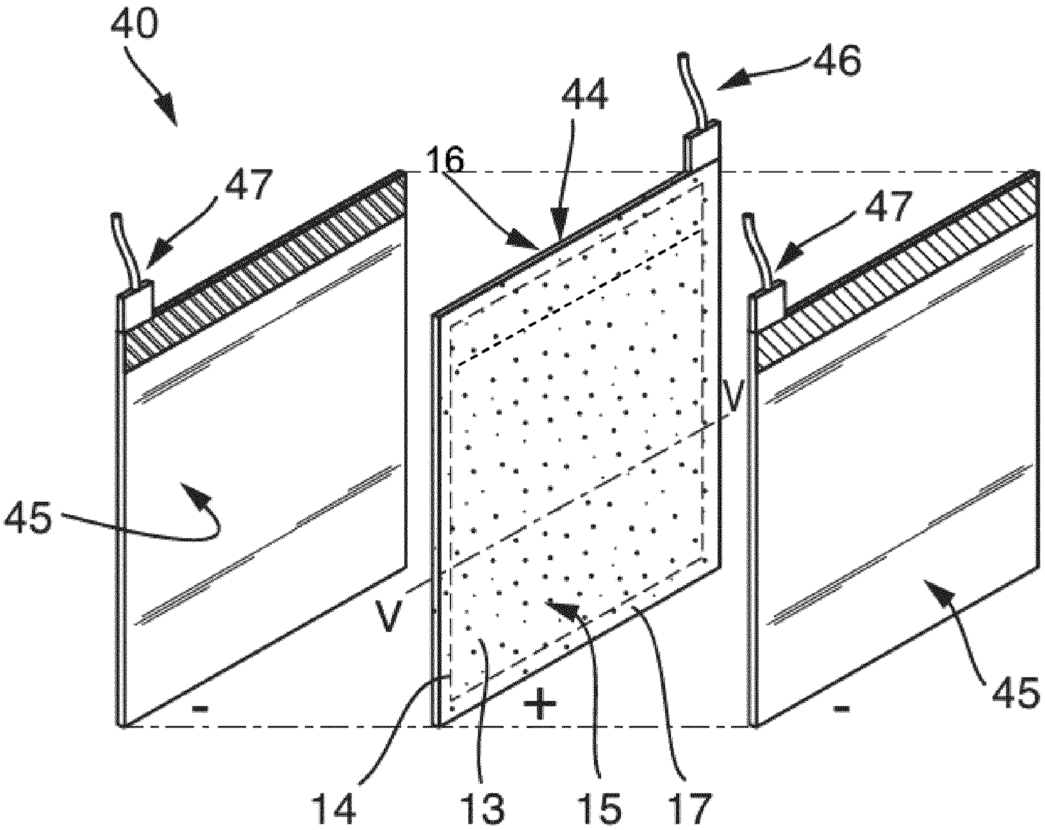


Fig. 5

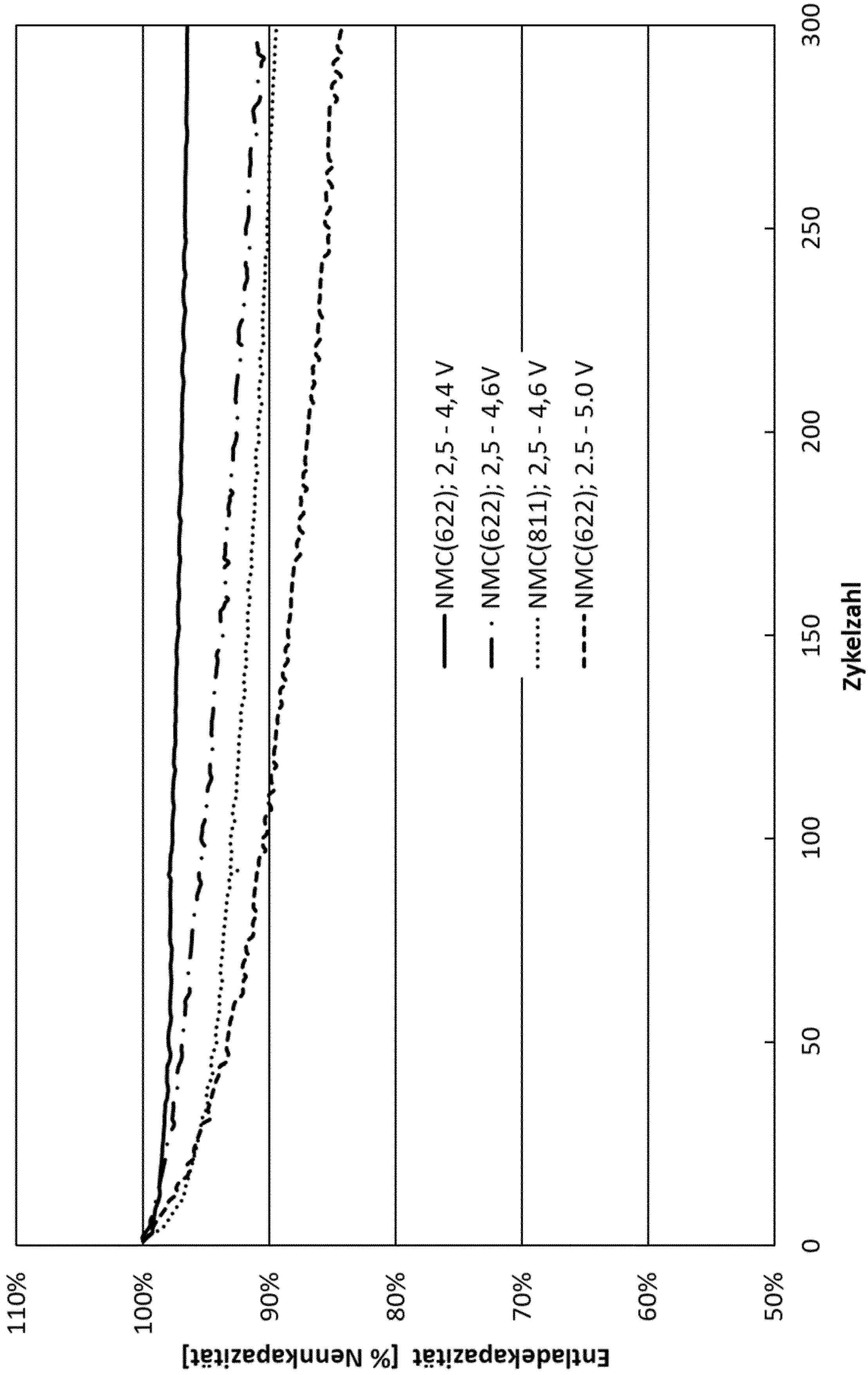
Entladekapazität [% Nennkapazität]
110%
100%
90%
80%
70%
60%
50%
0
50
100
150
200
250
300
Zykelzahl
NMC(622); 2,5 - 4,4 V
NMC(622); 2,5 - 4,6V
NMC(811); 2,5 - 4,6 V
NMC(622); 2.5 - 5.0 V

Fig. 6

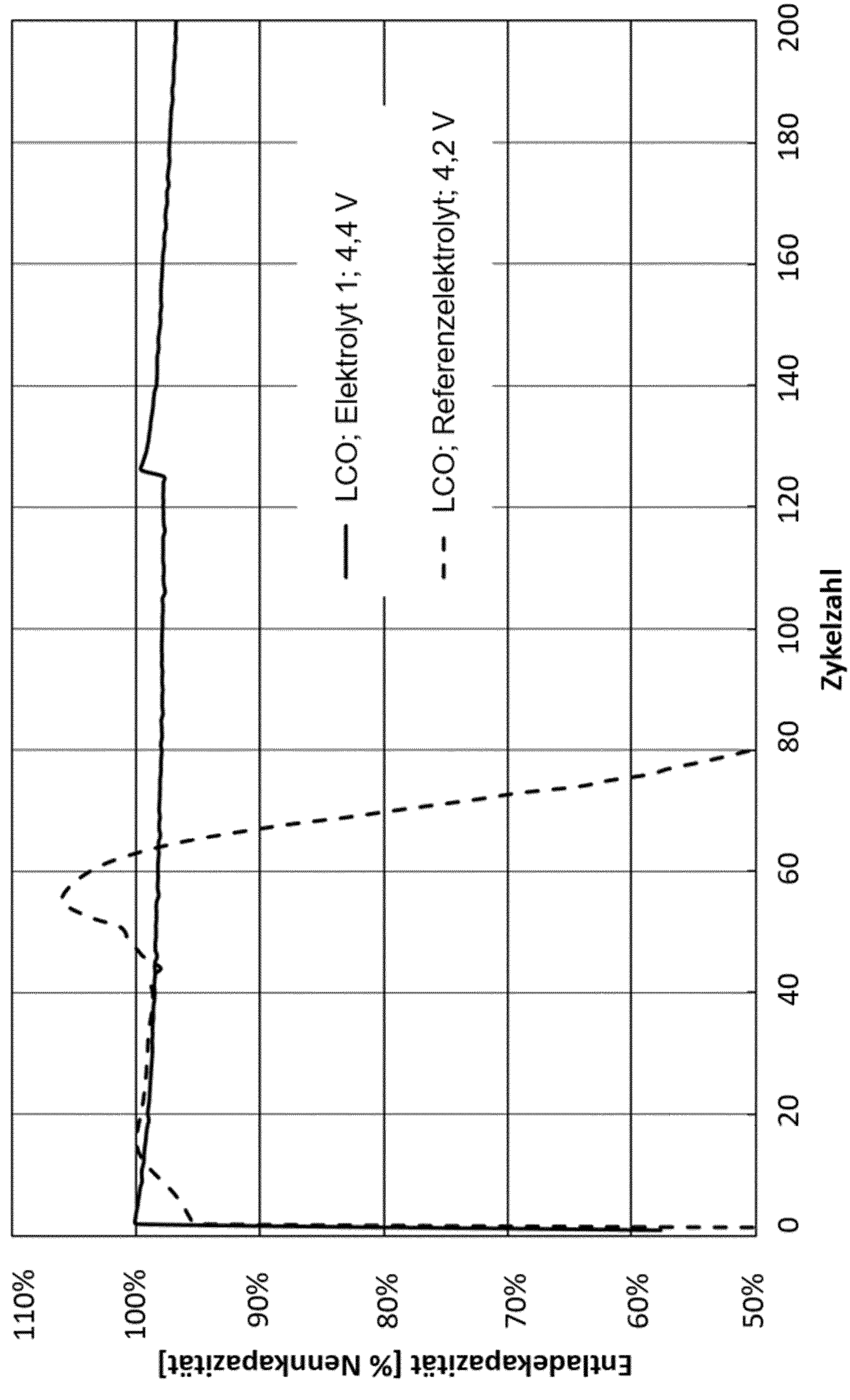

LCO; Elektrolyt 1; 4,4 V
LCO; Referenzelektrolyt; 4,2 V
Entladekapazität [% Nennkapazität]
110%
100%
90%
80%
70%
60%
50%
Zykelzahl
0
20
40
60
80
100
120
140
160
180
200


Fig. 7

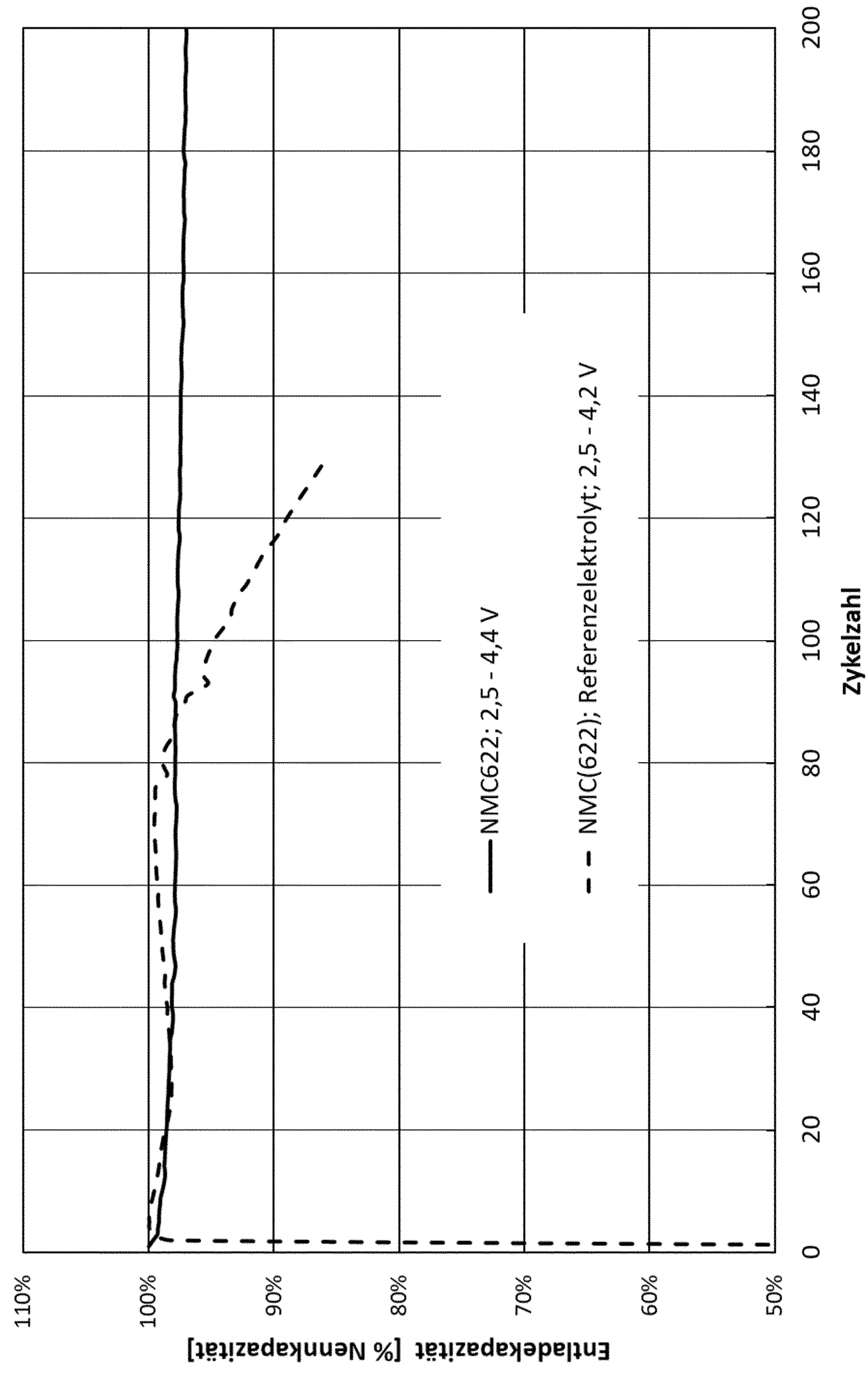
110%
100%
90%
80%
70%
60%
50%
Entladekapazität [% Nennkapazität]
0
20
40
60
80
100
120
140
160
180
200
Zykelzahl
NMC622; 2,5 - 4,4 V
NMC(622); Referenzelektrolyt; 2,5 - 4,2 V

Fig. 8

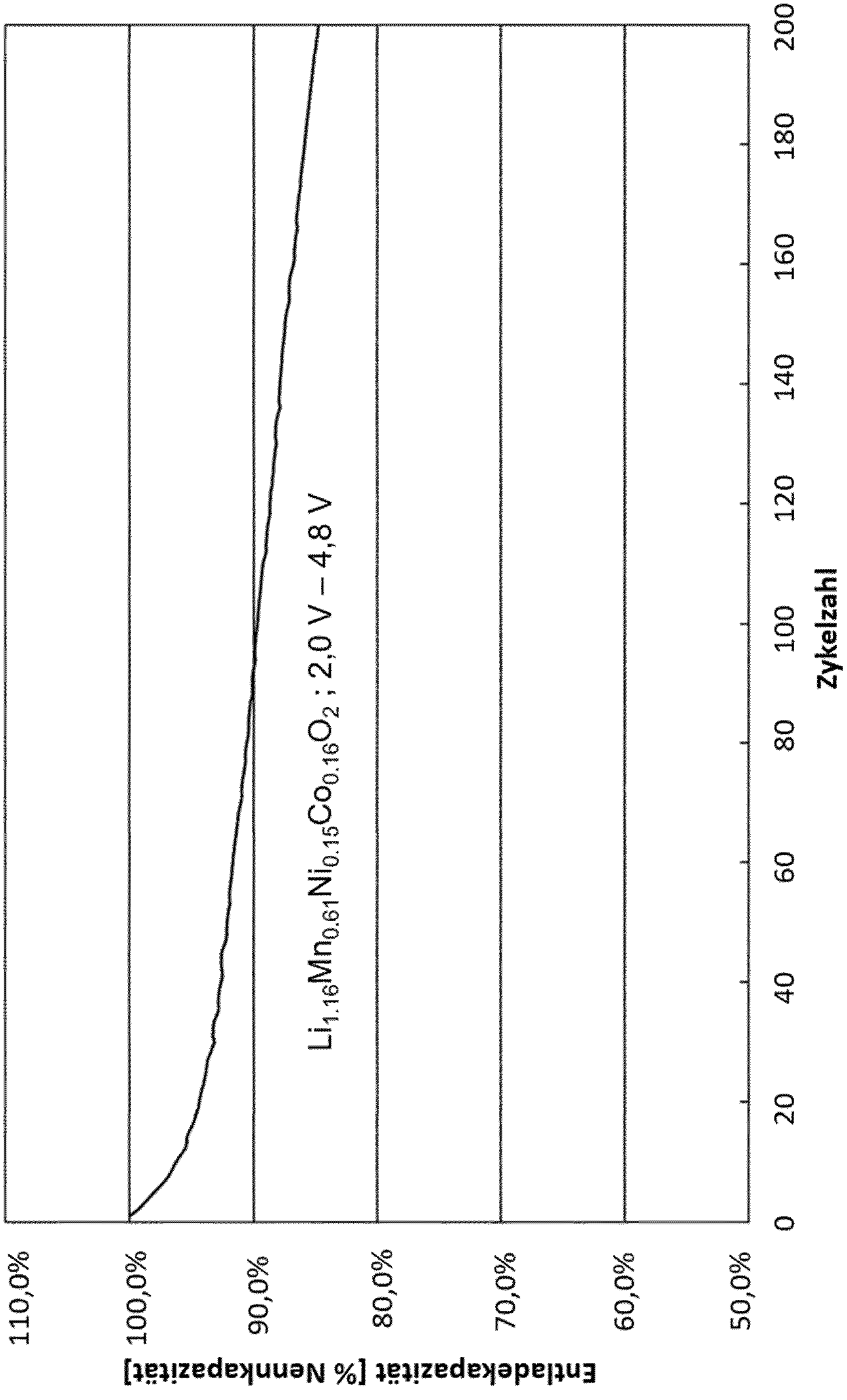

Entladekapazität [% Nennkapazität]
110,0%
100,0%
90,0%
80,0%
70,0%
60,0%
50,0%
0
20
40
60
80
100
120
140
160
180
200
Zykelzahl
$Li_{1.16}Mn_{0.61}Ni_{0.15}Co_{0.16}O_2$ ; 2,0 V – 4,8 V


Fig. 9

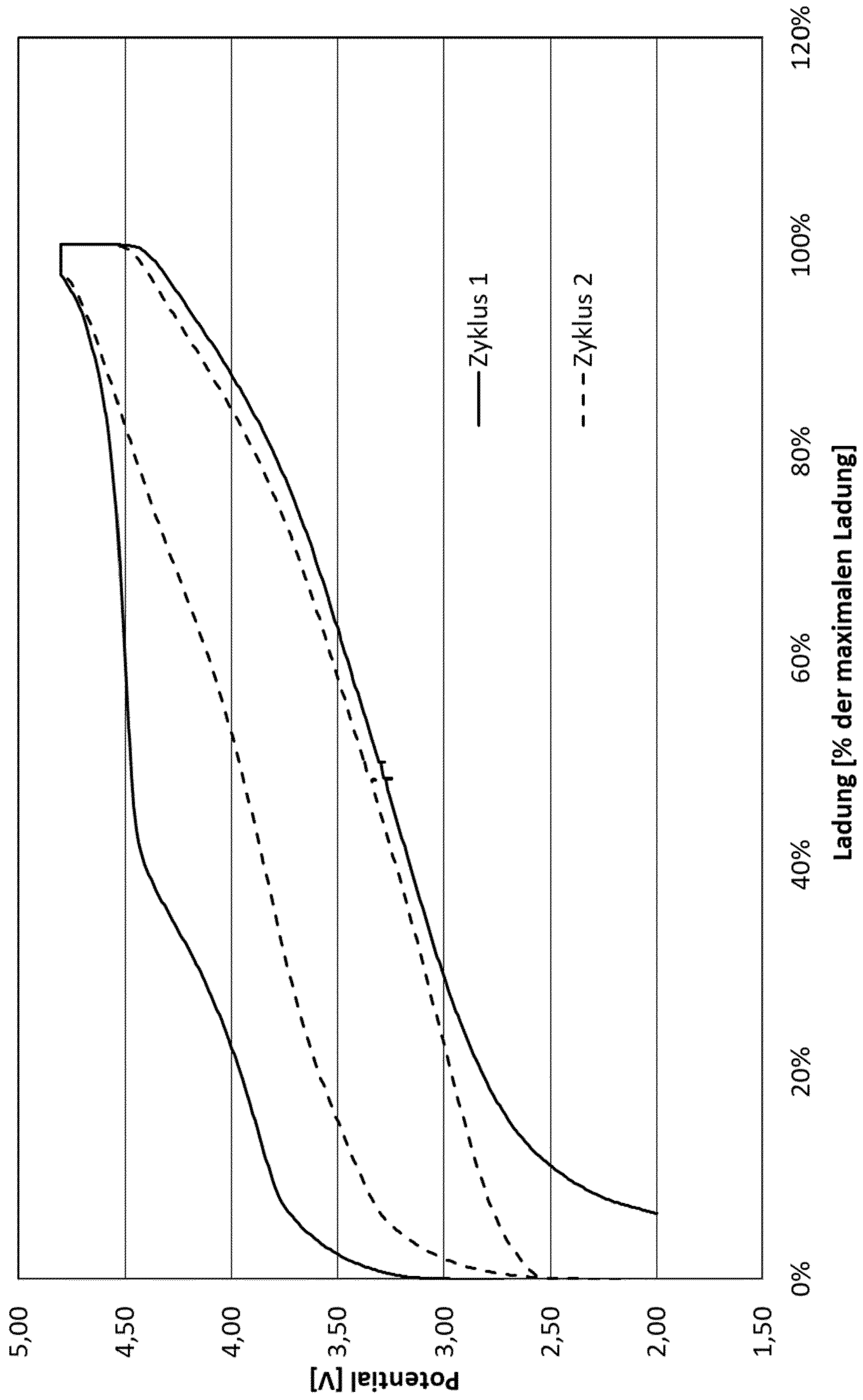
Potential [V]
5,00
4,50
4,00
3,50
3,00
2,50
2,00
1,50
0%
20%
40%
60%
80%
100%
120%
Ladung [% der maximalen Ladung]
Zyklus 1
Zyklus 2

Fig. 10

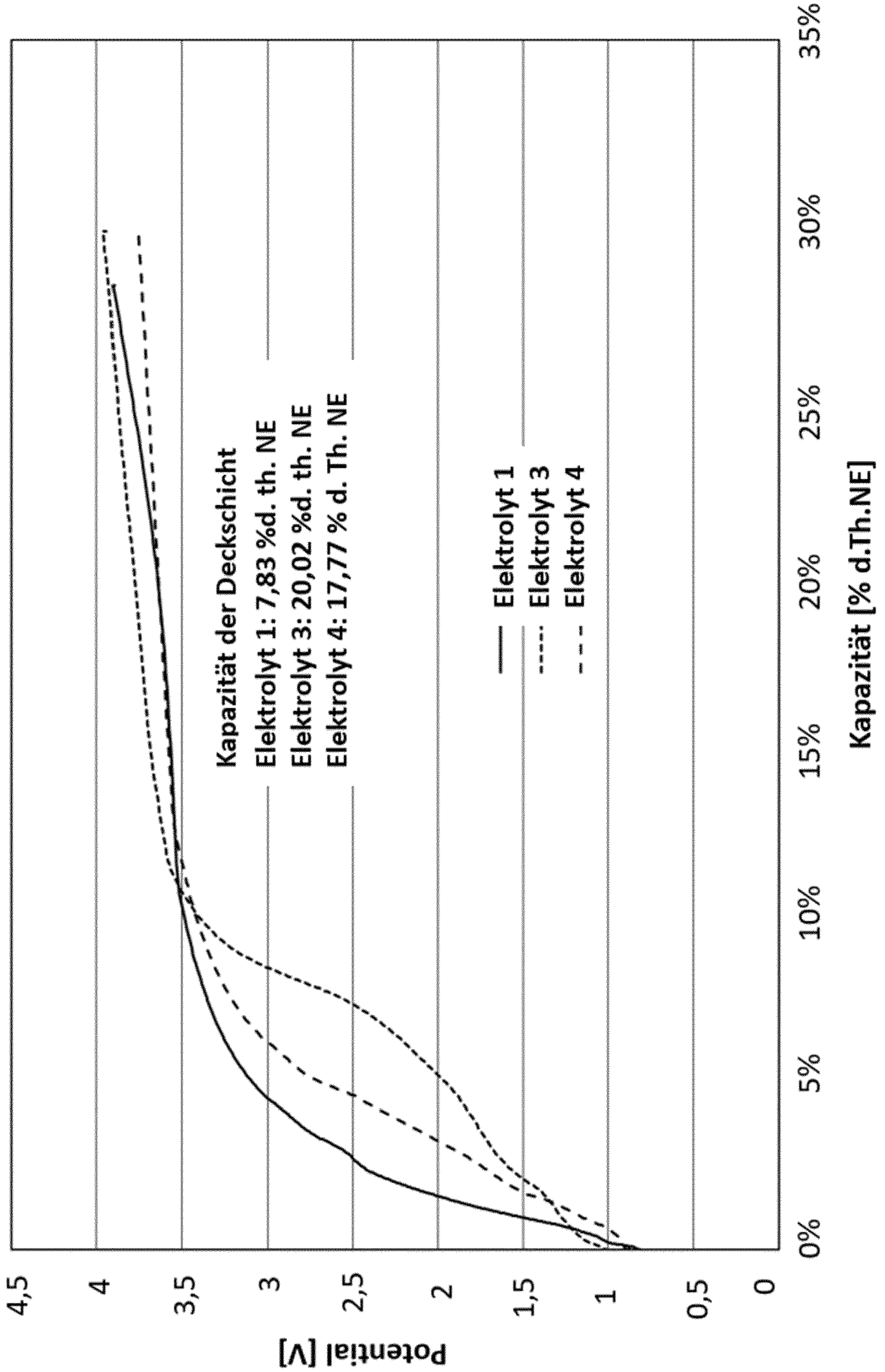
Potential [V]
4,5
4
3,5
3
2,5
2
1,5
1
0,5
0
0%
5%
10%
15%
20%
25%
30%
35%
Kapazität [% d.Th.NE]
Kapazität der Deckschicht
Elektrolyt 1: 7,83 %d. th. NE
Elektrolyt 3: 20,02 %d. th. NE
Elektrolyt 4: 17,77 % d. Th. NE
Elektrolyt 1
Elektrolyt 3
Elektrolyt 4

Fig. 11

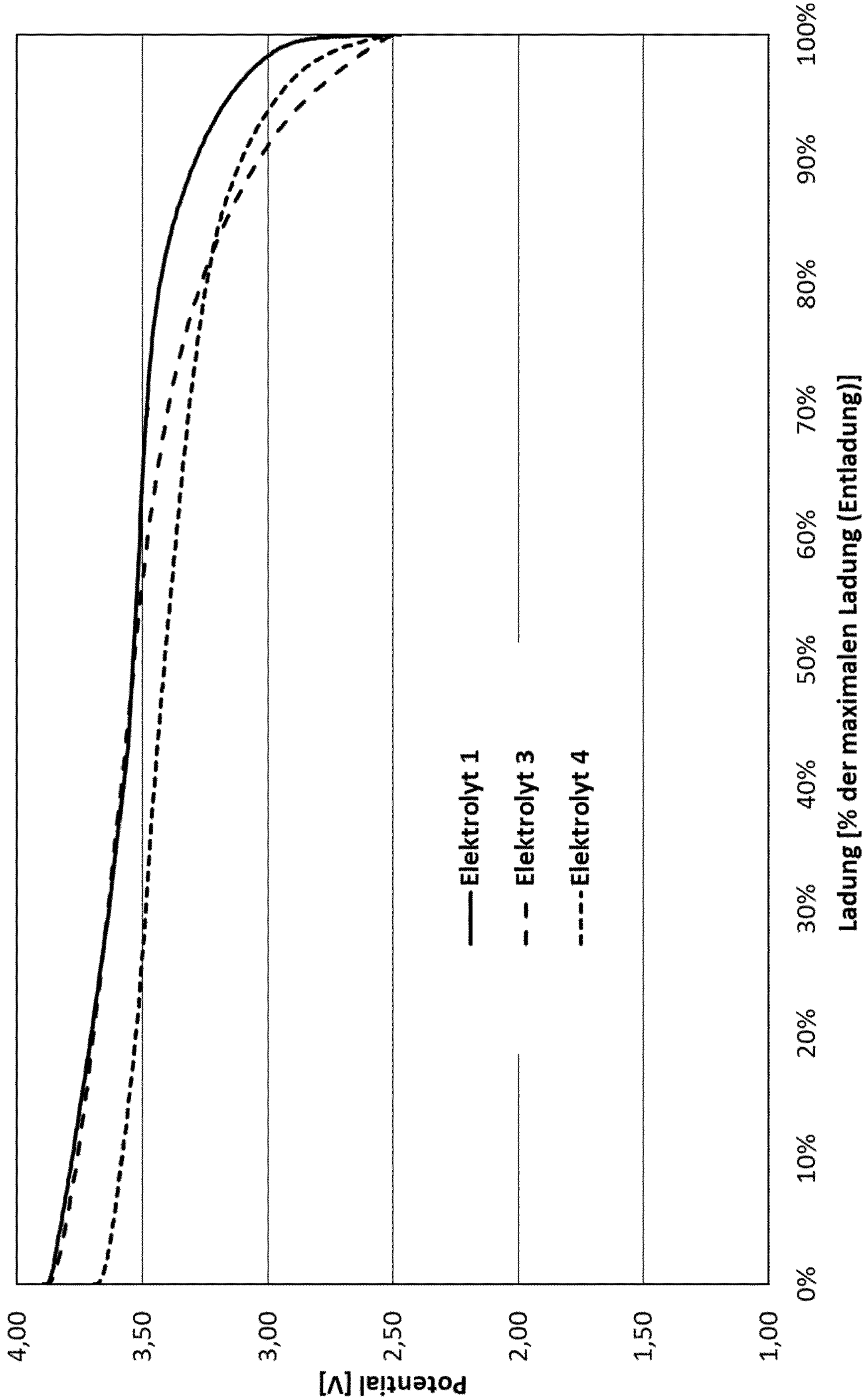
4,00
3,50
3,00
2,50
2,00
1,50
1,00
Potential [V]
0%
10%
20%
30%
40%
50%
60%
70%
80%
90%
100%
Ladung [% der maximalen Ladung (Entladung)]
Elektrolyt 1
Elektrolyt 3
Elektrolyt 4

Fig. 12

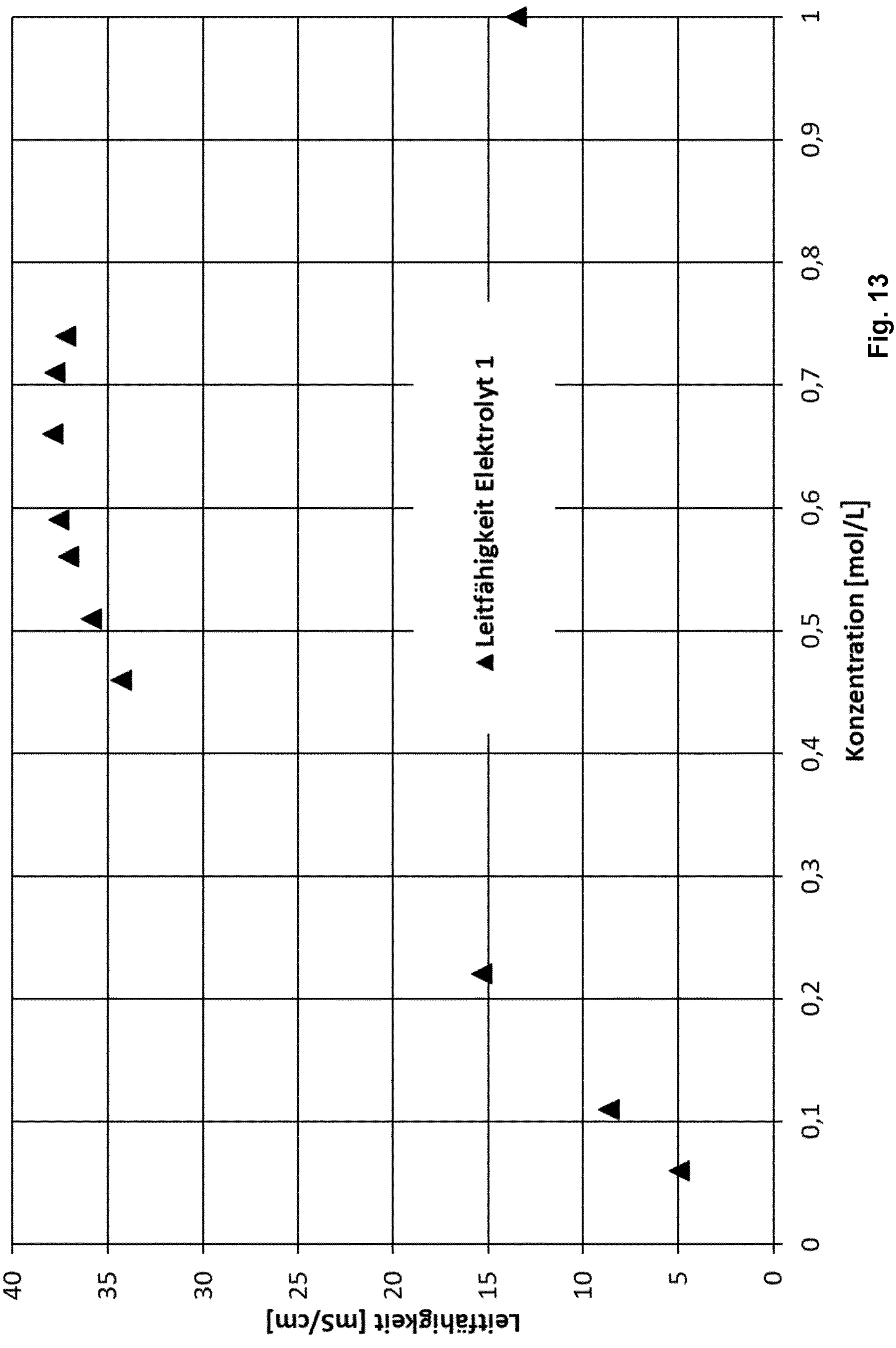

Leitfähigkeit [mS/cm]
40
35
30
25
20
15
10
5
0
Konzentration [mol/L]
0
0,1
0,2
0,3
0,4
0,5
0,6
0,7
0,8
0,9
1
▲ Leitfähigkeit Elektrolyt 1


Fig. 13

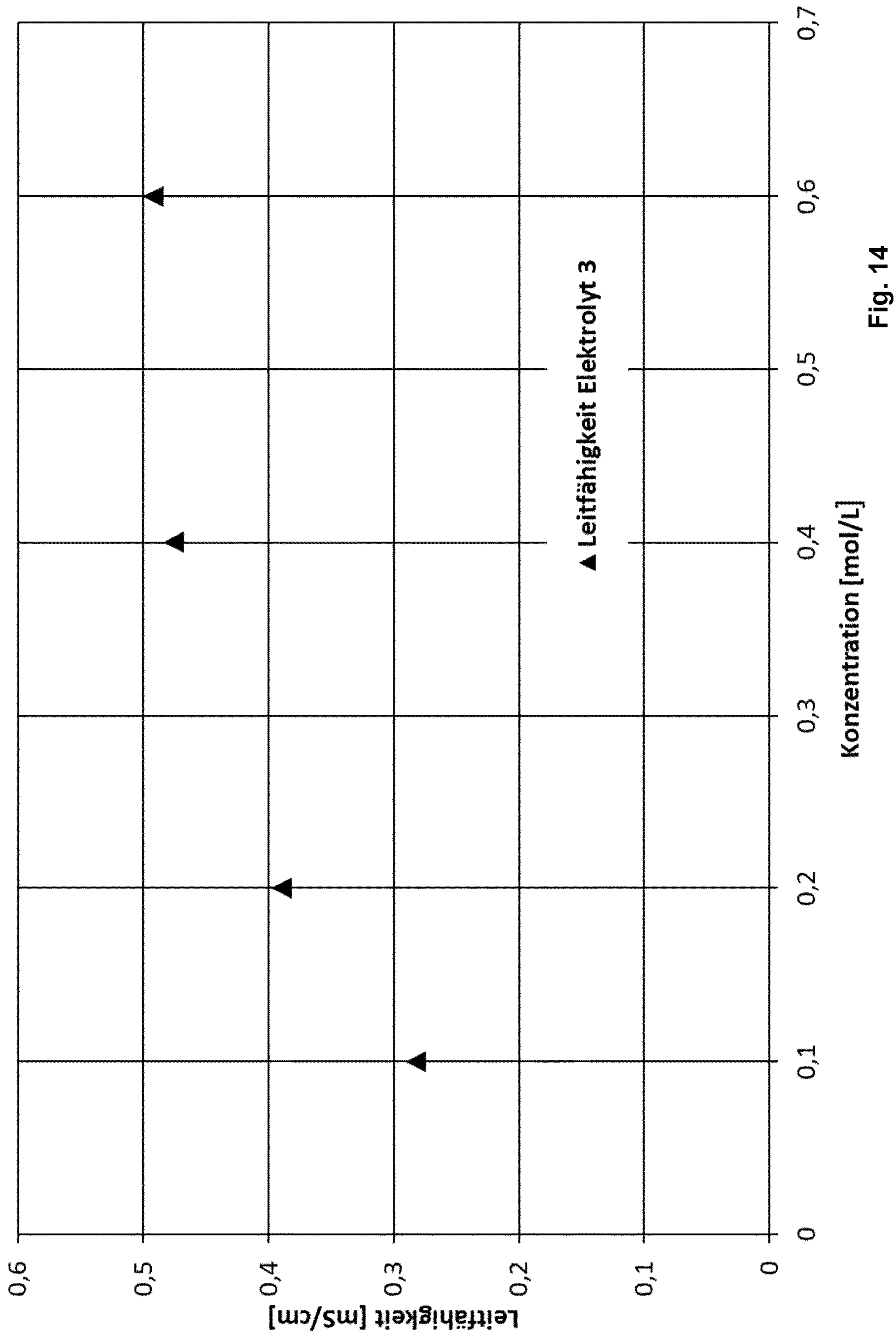

Leitfähigkeit [mS/cm]
0,6
0,5
0,4
0,3
0,2
0,1
0
0
0,1
0,2
0,3
0,4
0,5
0,6
0,7
Konzentration [mol/L]
▲ Leitfähigkeit Elektrolyt 3


Fig. 14

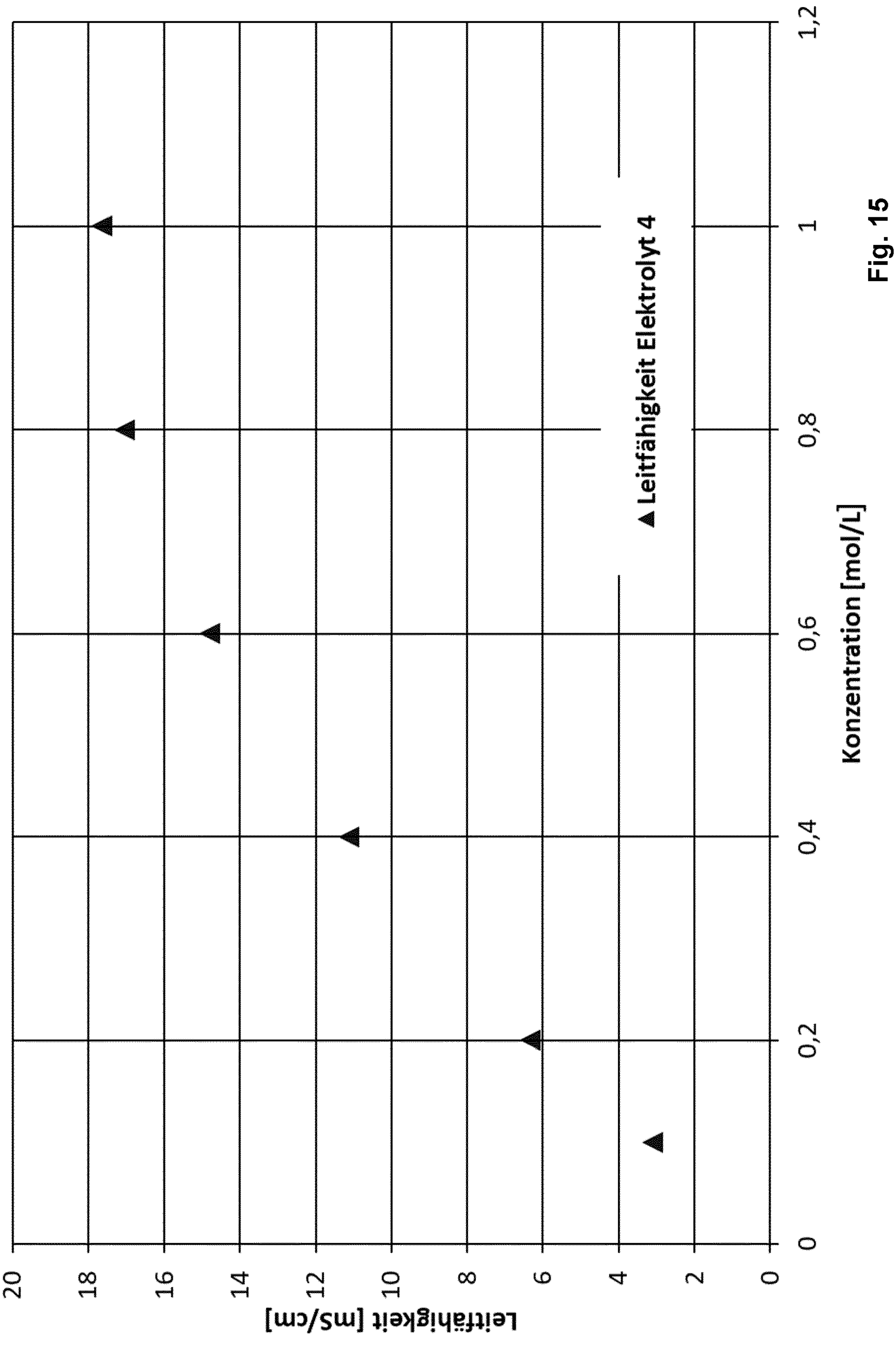
Leitfähigkeit [mS/cm]
20
18
16
14
12
10
8
6
4
2
0
0
0,2
0,4
0,6
0,8
1
1,2
Konzentration [mol/L]
▲ Leitfähigkeit Elektrolyt 4

Fig. 15

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- JP 4306858 B
- JP 2001143750 A
- EP 1201004 B1
- EP 2534719 B1
- EP 2954588 B1


### In der Beschreibung aufgeführte Nicht-Patentliteratur


- **ROLAND JUNG ; MICHAEL METZGER ; FILIPPO MAGLIA ; CHRISTOPH STINNER ; HUBERT A. GASTEIGERA.** *Journal of The Electrochemical Society,* 2017, vol. 164 (7), A1361-A1377
- **DREHER et al.** *JOURNAL OF POWER SOURCES,* 15. April 1993, vol. 44 (1/03), 583-587
- **OH et al.** *JOURNAL OF POWER SOURCES,* 01. Oktober 1997, vol. 68 (2), 338-343
- **I. KROSSING.** *Chem. Eur. J.,* 2001, vol. 7, 490
- **S. M. IVANOVA et al.** *Chem. Eur. J.,* 2001, vol. 7, 503
- **TSUJIOKA et al.** *J. Electrochem. Soc.,* 2004, vol. 151, A1418